(19) Europäisches Patentamt
European Patent Office
Office européen des brevets

(11) EP 1 625 180 B1

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **04741569.0**

(22) Anmeldetag: **13.05.2004**

(51) Int Cl.:
***C08L 83/04*** *(2006.01)* ***C08G 77/54*** *(2006.01)*

(86) Internationale Anmeldenummer:
**PCT/EP2004/050797**

(87) Internationale Veröffentlichungsnummer:
**WO 2004/101684 (25.11.2004 Gazette 2004/48)**

(54) **POLYORGANOSILOXAN-ZUSAMMENSETZUNGEN ZUR BEHANDLUNG VON SUBSTRATEN**
POLYORGANOSILOXANE COMPOSITIONS FOR THE TREATMENT OF SUBSTRATES
COMPOSITIONS DU TYPE POLYORGANOSILOXANE POUR LE TRAITEMENT DE SUBSTRATS

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.05.2003 DE 10321558**

(43) Veröffentlichungstag der Anmeldung:
**15.02.2006 Patentblatt 2006/07**

(73) Patentinhaber: **GE Bayer Silicones GmbH & Co. KG**
**51368 Leverkusen (DE)**

(72) Erfinder:
- **WAGNER, Roland**
  **53757 St. Augustin (DE)**
- **ROOS, Christopher**
  **51065 Köln (DE)**
- **KROPFGANS, Martin**
  **51519 Odenthal (DE)**
- **SCHNERING, Albert**
  **51067 Köln (DE)**

(56) Entgegenhaltungen:
**EP-A- 0 837 103** **EP-A- 0 837 104**
**WO-A-02/10256** **WO-A-02/10257**
**WO-A-02/10259** **US-A- 5 098 979**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 625 180 B1

## Beschreibung

Die vorliegende Erfindung betrifft Polyorganosiloxan-Zusammensetzungen, Verfahren zu ihrer Herstellung, ihre Verwendung zur Behandlung von Substraten, insbesondere faserartigen Substraten, sowie sie enthaltende Erzeugnisse insbesondere Papiererzeugnisse, wie Papiervliese, -pulpen, -gewebe, -träger oder - schichten.

HINTERGRUND DER ERFINDUNG:

Weichheit ist für saugfähige Papiere in vielen Anwendungen ein Vorteil. Zum Beispiel können unbehandelte Papiertücher im Hautkontakt, wie Abschminktücher oder Taschentücher, bei häufiger Benutzung zu mechanisch bedingter Hautrötung, ja sogar zu Hautreizungen führen.

Verbesserte Weichheit kann durch Veränderung des Papiertuches selbst oder durch Behandlung der Fasern oder des Tuches mit chemischen Substanzen erfolgen. Zur Behandlung der Papierfasern oder des Papiertuches werden häufig Polydimethylsiloxane (Silikone) verwendet.

Aufgrund der hydrophoben Natur der Polydimethylsiloxane führt die Ausrüstung von Papierfasern oder Papiertüchern zu wasserabweisenden Eigenschaften des Papiertuches. Dies ist in der Regel unerwünscht, da die Fähigkeit des Tuches zur schnellen Wasseraufnahme gemindert wird.

Daher werden verschiedene Wege beschrieben, eine weichmachende Ausrüstung unter Beibehaltung der Hydrophilie zu erzielen.

Die US 5,538,595 beschreibt die Verwendung einer Zwei-Komponenten-Weichmacher-Zusammensetzung für Papier, die eine Ester-funktionelle quaternäre Ammonium-Verbindung und organofunktionelle Polyorganosiloxane umfasst.

Die US 6,054,020 offenbart aminomodifizierte Polyorganosiloxan-Verbindungen und Mischungen davon, in denen die Aminomodifizierung ausschließlich in den Seitenketten einer Polyorganosiloxan-Hauptkette erfolgt. Mit den aminomodifizierten Polyorganosiloxan-Verbindungen werden Gewebeoberflächen behandelt, um einen hautschonenden Gebrauch bereitzustellen.

Ähnlich offenbart die US 6,432,270 Papiertücher, die aminomodifizierte Polyorganosiloxane mit Aminoseitenketten und gegebenenfalls terminalen Aminogruppen enthalten.

Die US 6,030,675 offenbart weiche Papiertücher, die ammoniummodifizierte Polyorganosiloxane mit Polyetherammoniumseitenketten enthalten.

Bei der Behandlung von Papier ist ein Übertrag bzw. Migration der weichmachenden Chemikalien auf die Haut des Anwenders unerwünscht. Daher ist eine feste Anbindung der weichmachenden aber insbesondere der hydrophilisierenden Komponente wünschenswert. Polyethersiloxane haben zwar einen stark hydrophilisierenden Effekt auf Substratoberflächen gegenüber Papieroberflächen liegen aber keine stark bindenden Gruppen vor, außerdem führt die mehr oder weniger ausgeprägte Wasserlöslichkeit dazu, dass sie wenig geeignet sind, da sie eine geringe Substantivität.

Eine verbesserte Anbindung mit den Hydroxylgruppen-haltigen Oberflächen der Cellulose lässt sich z.B. durch Aminoalkylsiloxane, insbesondere durch Siloxane mit Tetraorgano-substituierten Ammoniumgruppen erzielen, d.h. von pHunabhängig vorhandenen quaternierten Gruppen, die die Bindungen aufgrund der starken Ladungswechselwirkung zwischen der negativen Papierfaseroberfläche und den permanent positiven Ladungen der quaternären Ammoniumtgruppen des Siliconmoleküls bereitstellen,können.

In den WO 02/10256, WO 02/10257 und WO 02/10259 werden Siliconmaterialien beansprucht, die ein Weichmachen von Textilien während des Waschprozesses mit derartigen Waschmittelsystemen ermöglichen. Die US Offenlegungsschrift 2002/0103094 behandelt die Verwendung der genannten Siliconmaterialien in Textilpflege-Formulierungen.

Der vorliegenden Erfindung liegt die Aufgabe zugrunde, Silikonzusammensetzungen bereitzustellen, die insbesondere eine gute Faseranbindung (Substantivität) aufweisen, das Papier fühlbar weicher machen, ohne einen signifikanten hydrophoben Charakter des Papiers hervorzurufen und die eine einfache Anwendung im Produktionsprozess des Papiers ermöglichen, also z.B. flüssig sind.

Weiterhin liegt der vorliegenden Erfindung die Aufgabe zugrunde, Siliconzusammensetzungen bereitzustellen, die eine weitere Verbesserung hinsichtlich der erreichbaren Weichheit der behandelten Fasern, insbesondere bei gleichbleibender oder verbesserter Hydrophilie und Substantivität (Haftung der Siloxansysteme auf der Faser), der Flexibilität bei der Formulierung der Siloxansysteme und der Darreichungsform insbesondere in Richtung auf eine Verringerung der notwendigen Einsatzmengen und der Materialkosten erreichen.

Eine weitere Aufgabe der Erfindung besteht in der Bereitstellung von Zusammensetzungen auf Polysiloxanbasis, die durch einfaches Variieren der Zusammensetzungsverhältnisse der enthaltenden Komponenten flexibel auf die Art der zu behandelnden Substrate und die Behandlungsbedingungen eingestellt werden können. Ferner sollten es die Formulierungen ermöglichen, die zur Erzielung der gewünschten Eigenschaften der zu behandelnden Substrate erforderlichen Mengen und/oder die Verwendung teurer Polysiloxan-Komponenten, wie z.B. sogenannter Polysiloxan-Quats mit organofunktionellen Gruppen in $\alpha,\omega$-Stellung ($R^fMe_2SiO_{0,5}$) zu reduzieren, ohne dass eine Verschlechterung der gewünschten Eigenschaften wie Weichheit und Hydrophilie der zu behandelnden Substrate eintritt.

Eine weitere Aufgabe besteht in der Bereitstellung von Zusammensetzungen, die zur Behandlung von harten Oberflächen, insbesondere zur Antistatikausrüstung geeignet sind.

Es wurde überraschend gefunden, daß eine bestimmte Zusammensetzung von verschiedenen polysiloxanhaltigen Verbindungen die vorstehende Aufgabe lösen kann und preiswerte und gleichwohl äußerst wirksame Mittel zur Behandlung, insbesondere Oberflächenbehandlung, bestimmter Materialien, wie insbesondere Fasermaterialien aber auch harten Oberflächen darstellen.

BESCHREIBUNG DER ERFINDUNG

Die vorliegende Erfindung stellt somit eine Polyorganosiloxan-Zusammensetzung bereit, enthaltend mindestens eine Amino- und/oder Ammonium-Polysiloxan-Verbindung a1), enthaltend mindestens eine Amino- und/oder Ammoniumgruppe Q und mindestens einen organischen Rest V, mit der Maßgabe, dass mindestens ein organischer Rest V ein eine Polydiorganosiloxangruppe enthaltender organischer Rest $V^{Si1}$ ist, worin die Anbindung der Gruppe Q an die Gruppe $V^{Si1}$ durch das Strukturelement (I)

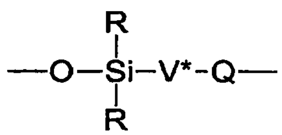

(I)

erfolgt, worin V* ein zweiwertiger organischer Rest ist, der jeweils über ein Kohlenstoffatom an das Siliziumatom des Polydiorganosiloxan-Restes und an das Stickstoffatom der Amino- oder Ammoniumgruppe Q gebunden ist, R ein einwertiger organischer Rest ist,
und mindestens eine Amino- und/oder Ammonium-Polysiloxan-Verbindung a2) enthaltend mindestens eine Amino- oder Ammoniumgruppe Q und mindestens einen organischen Rest V, mit der Maßgabe, dass mindestens ein organischer Rest V ein eine Polydiorganosiloxangruppe enthaltender organischer Rest $V^{Si2}$ ist,
worin die Anbindung der Gruppe Q an die Gruppe $V^{Si2}$ durch das Strukturelement ausgewählt aus den Formeln (II) und (III)

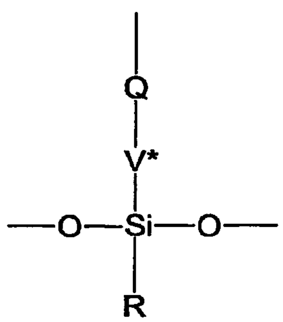

(II)

und

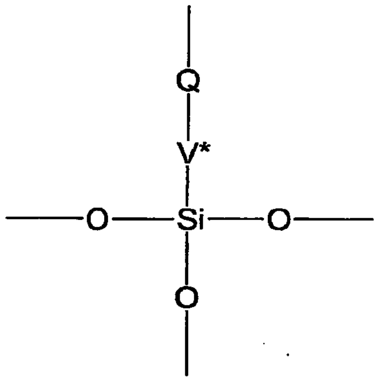

(III)

erfolgt, worin V* jeweils ein zweiwertiger organischer Rest ist, der jeweils über ein Kohlenstoffatom an das Siliziumatom des Organosiloxan-Restes und an das Stickstoffatom der Amino- oder Ammoniumgruppe Q gebunden ist, R ein einwertiger organischer Rest ist,
mit der Maßgabe, dass die Amino- und/oder Ammonium-Polysiloxan-Verbindung a2) kein Strukturelement der Formel (I) aufweist, und
mit der Maßgabe, dass die Gruppe Q nicht an ein Carbonylkohlenstoffatom bindet, und
worin die aus Ammoniumgruppen resultierenden positiven Ladungen durch organische oder anorganische Säureanionen neutralisiert sind, und deren Säureadditionssalze.

In einer bevorzugten Ausführungsform ist die erfindungsgemäße Polyorganosiloxan-Zusammensetzung, dadurch gekennzeichnet, das sie keine stickstofffreie Polysiloxan-Verbindung enthält.

In einer bevorzugten Ausführungsform ist die erfindungsgemäße Polyorganosiloxan-Zusammensetzung, dadurch gekennzeichnet, dass sie besteht aus:

- der Komponente a1), wie oben definiert,
- der Komponente a2), wie oben definiert,
- wahlweise ein oder mehrere silikonfreie Tenside b),
- wahlweise einen oder mehrer Hilfsstoffe c), sowie
- wahlweise eine oder mehrere Trägersubstanzen d).

In einer bevorzugten Ausführungsform ist die erfindungsgemäße Polyorganosiloxan-Zusammensetzung, dadurch gekennzeichnet, dass die Komponenten a1) zu a2) im Gewichts-Verhältnis von 30 : 1 bis 1 : 90 vorliegen. Besonders bevorzugt liegen die Komponenten a1) zu a2) im Gewichts-Verhältnis von 1 : 0,1 bis 1 : 10, bevorzugt im Gewichts-Verhältnis 1 : 0,2 bis 1 : 7 vor. Ein besonders bervorzugter Bereich ist ein Mischungsverhältnis von 1: 1.

Die Amino- und/oder Ammonium-Polysiloxan-Verbindungen a1) setzt sich zweckmäßig aus mindestens einer Amino- und/oder Ammoniumgruppe Q und mindestens einem organischen Rest V zusammen. Dabei enthält mindestens eine Gruppe V eine Polyorganosiloxangruppe; die als $V^{Si}$ bezeichnet wird. Diese die Gruppe $V^{Si}$ weist zur Anbindung an die Gruppe Q das Strukturelement (I) der Formel (I)

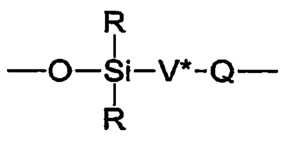

(I)

auf, worin V* und R wie oben definiert sind.

In einer bevorzugten Ausführungsform der Erfindung weist das Strukturelement der Formel (I) die folgende Formel (Ia) auf:

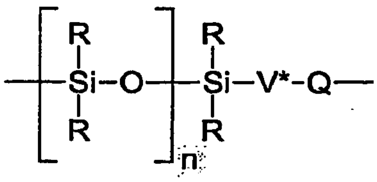

(Ia)

auf, worin V*, R und n ≥ 1. In Ausführungsformen, worin eine verzweigte Polydiorganosiloxaneinheit verwendet wird, wie weiter unten beschrieben, können Substituenten R in der Polydiorganosiloxaneinheit, die nachbarständig zum Strukturelement der Formel (I) ist, durch Siloxaneinheiten ersetzt sein.

In einer bevorzugten Ausführungsform weisen die erfindungsgemäßen Polyorganosiloxan-Zusammensetzungen Amino- und/oder Ammonium-Polysiloxan-Verbindungen a1) die Formel (IV) auf:

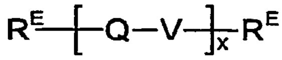

(IV)

worin Q und V wie oben definiert sind, $R^E$ jeweils ein einwertiger organischer Rest oder Wasserstoff ist, x ≥ 1 ist, die Reste $R^E$ gleich oder verschieden voneinander sein können, und wenn x > 1 ist, die Gruppen Q, V jeweils gleich oder verschieden voneinander sein können.

In einer weiteren bevorzugten Ausführungsform der erfindungsgemäßen Polyorganosiloxan-Zusammensetzung wird die Amino- bzw. Ammoniumgruppe Q ausgewählt aus der Gruppe, die besteht aus:

$-NR^1-$,

$-N^+R^1{}_2-$,

einem gesättigten oder ungesättigten, gegebenenfalls mit weiteren Substituenten substituierten diaminofunktionellen Heterocyclus der Formeln:

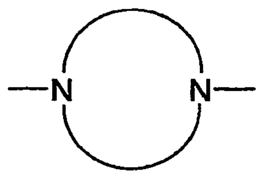

,

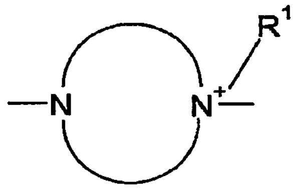

und

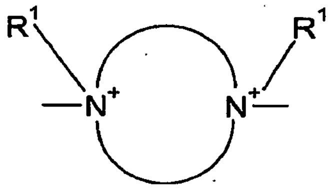

,

sowie einem aromatischen, gegebenenfalls substituierten diaminofunktionellen Heterocyclus der Formel:

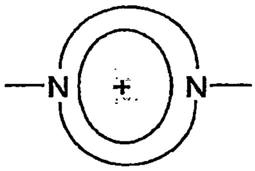

einem dreiwertigen Rest der Formel:

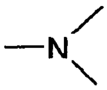

,

einem dreiwertigen Rest der Formel:

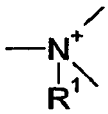

,

oder
einem vierwertigen Rest der Formel,

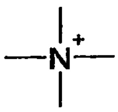

worin $R^1$ jeweils Wasserstoff oder einen einwertigen organischen Rest darstellt,
wobei Q nicht an ein Carbonylkohlenstoffatom bindet.

In einer weiteren bevorzugten Ausführungsform der erfindungsgemäßen Polyorganosiloxan-Zusammensetzung wird die Einheit V ausgewählt aus mindestens einem mehrwertigen, geradkettigen, cyclischen oder verzweigten, gesättigten, ungesättigten oder aromatischen Kohlenwasserstoffrest mit bis zu 1000 Kohlenstoffatomen (wobei die Kohlenstoffatome des gegebenenfalls vorhandenen Polyorganosiloxanrestes nicht mitgezählt werden), der gegebenenfalls eine oder mehrere Gruppen, ausgewählt aus -O-, -C(O)-, -C(S)-,
$-NR^2-$, worin $R^2$ Wasserstoff, einen einwertigen, geradkettigen, cyclischen oder verzweigten, gesättigten, ungesättigten oder aromatischen Kohlenwasserstoffrest mit bis zu 300 Kohlenstoffatomen darstellt, der eine oder mehrere Gruppen

ausgewählt aus -O-, -NH-, -C(O)- und -C(S)- enthalten kann, und der gegebenenfalls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Polyetherresten, Polyetheresterresten, Polyorganosiloxanylresten und

$-Si(OR)_{3-a}(R)_a$, worin a eine ganze Zahl von 0 bis 2 ist und R wie oben definiert ist, wobei wenn mehrere Gruppen $-NR^2-$ vorliegen, diese gleich oder verschieden sein können, und mit der Maßgabe, dass die Gruppe -NH- an ein Carbonyl- und/oder Thiocarbonylkohlenstoffatom bindet,

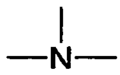

und Polyorganosiloxanresten

enthalten kann, und der gegebenenfalls durch eine oder mehrere Hydroxylgruppen substituiert sein kann,

mit der Maßgabe, dass die Gruppen

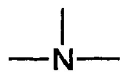

und $-NR^2-$ an mindestens ein Carbonyl- und/oder Thiocarbonylkohlenstoffatom binden, und mit der Maßgabe, das mindestens ein Rest V mindestens einen Polyorganosiloxanrest enthält.

In einer weiteren bevorzugten Ausführungsform der erfindungsgemäßen Polyorganosiloxan-Zusammensetzung weist die Amino- und/oder Ammonium-Polysiloxan-Verbindung a1) mindestens drei Einheiten, ausgewählt aus den Einheiten Q und V auf, worin Q mindestens eine zwei-, drei- und/oder vierwertige Amino- und/oder Ammoniumgruppe ist, die nicht über ein Carbonylkohlenstoffatom an V gebunden ist, und V mindestens ein organischer Rest ist, der über Kohlenstoff mit den Q-Einheiten verbunden ist, mit der Maßgabe, dass mindestens eine der Einheiten V einen Polyorganosiloxanrest enthält.

In einer weiteren bevorzugten Ausführungsform der erfindungsgemäßen Polyorganosiloxan-Zusammensetzung weist die Amino- und/oder Ammonium-Polysiloxan-Verbindung a1) mindestens zwei Einheiten Q auf.

In einer weiteren bevorzugten Ausführungsform der erfindungsgemäßen Polyorganosiloxan-Zusammensetzung weist die Amino- und/oder Ammonium-Polysiloxan-Verbindung a1) mindestens zwei Einheiten Q und mehr als eine Einheit $V^{Si}$ auf.

In einer weiteren bevorzugten Ausführungsform der erfindungsgemäßen Polyorganosiloxan-Zusammensetzung weist die Amino- und/oder Ammonium-Polysiloxan-Verbindung a1) mindestens zwei Einheiten Q und mehr als zwei Einheiten $V^{Si}$ auf.

In einer weiteren bevorzugten Ausführungsform der erfindungsgemäßen Polyorganosiloxan-Zusammensetzung ist der organische Rest V in der Amino- und/oder Ammonium-Polysiloxan-Verbindung a1) mindestens ein Bestandteil, der aus der Gruppe ausgewählt wird, die aus $V^1$, $V^2$ und $V^3$ besteht, worin

$V^2$ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen (wobei die Kohlenstoffatome des unten definierten Polysiloxanrestes $Z^2$ nicht mitgezählt werden), die gegebenenfalls eine oder mehrere Gruppen, ausgewählt aus -O-, -CONH-,

$-CONR^2-$, worin $R^2$ Wasserstoff, einen einwertigen, geradkettigen, cyclischen oder verzweigten, gesättigten, ungesättigten oder aromatischen Kohlenwasserstoffrest mit bis zu 100 Kohlenstoffatomen darstellt, der eine oder mehrere Gruppen ausgewählt aus -O-, -NH-, -C(O)- und -C(S)- enthalten kann, und der gege-benenfalls durch eine oder mehrere Substituenten, ausgewählt aus der Gruppe, die besteht aus einer Hydroxylgruppe, einer gegebenenfalls substituierten, be-vorzugt ein oder mehrere Stickstoffatome enthaltenden heterocyclischen Gruppe, Amino, Alkylamino, Dialkylamino, Ammonium, Polyetherresten und Polyether-esterresten substituiert sein kann, wobei wenn mehrere Gruppen $-CONR^2$ vor-liegen, diese gleich oder verschieden sein können,

-C(O)- und -C(S)- enthalten kann,

der Rest $V^2$ gegebenenfalls durch eine oder mehrere Hydroxylgruppen substituiert sein kann, und

der Rest $V^2$ mindestens eine Gruppe $-Z^2-$ der Formel

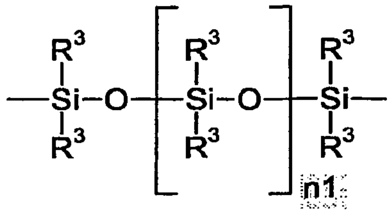

(V)

worin $R^3$ gleich oder verschieden sein kann und aus der Gruppe ausgewählt wird, die aus $C_1$ bis $C_{22}$ Alkyl, Fluor($C_3$-$C_{10}$) alkyl, $C_6$-$C_{10}$ Aryl und n1 = 20 bis 1000 bedeutet,
$V^1$ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen, die gegebenenfalls eine oder mehrere Gruppen, ausgewählt aus -O-, -CONH-,
-$CONR^2$-, worin $R^2$ wie oben definiert ist, wobei die Gruppen $R^2$ in den Gruppen $V^1$ und $V^2$ gleich oder verschieden sein können,
-C(O)-, -C(S)- und -$Z^1$- enthalten kann, worin -$Z^1$- eine Gruppe der Formel

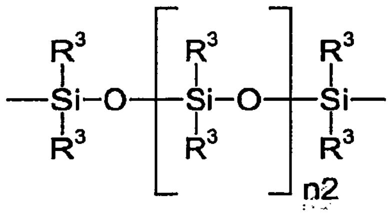

(VI)

ist, worin

$R^3$ wie oben definiert ist, wobei die Gruppen $R^3$ in den Gruppen $V^1$ und $V^2$ gleich oder verschieden sein können, und n2 = 0 bis 19 bedeutet,
und der Rest $V^1$ gegebenenfalls durch eine oder mehrere Hydroxylgruppen substituiert sein kann, und
$V^3$ einen drei- oder höherwertigen, geradkettigen, cyclischen oder verzweigten, gesättigten, ungesättigten oder aromatischen Kohlenwasserstoffrest mit bis zu 1000 Kohlenstoffatomen darstellt, (wobei die Kohlenstoffatome der unten erwähnten Siloxanreste $Z^1$, $Z^2$ und $Z^3$ nicht mit eingerechnet werden), der gegebenenfalls eine oder mehrere Gruppen, ausgewählt aus
-O-, -CONH-, -$CONR^2$-, worin $R^2$ wie oben definiert ist, -C(O)-, -C(S)-, -$Z^1$-, das wie oben definiert ist, -$Z^2$- das wie oben definiert ist, und $Z^3$, worin $Z^3$ eine drei- oder höherwertige Organopolysiloxaneinheit ist, enthalten kann, und der gegebenenfalls durch eine oder mehrere Hydroxylgruppen substituiert sein kann,
wobei in der genannten Polysiloxan-Verbindung jeweils eine oder mehrere Gruppen $V^1$, eine oder mehrere Gruppen $V^2$ und/oder eine oder mehrere Gruppen $V^3$ vorliegen können,
mit der Maßgabe, dass die genannte Polysiloxan-Verbindung mindestens eine Gruppe $V^1$, $V^2$ oder $V^3$ enthält, die mindestens eine Gruppe -$Z^1$-, -$Z^2$- oder $Z^3$ enthält.

Dabei dienen die drei- und vierwertigen Reste Q zweckmäßig entweder der Verzweigung der aus Q und V gebildeten Hauptkette, so dass die Valenzen, die nicht der Bindung in der Hauptkette dienen, weitere aus -[Q-V]-Einheiten gebildete Verzweigungen tragen, oder die drei- und vierwertigen Reste Q sättigen sich mit Resten $V^3$ innerhalb einer linearen Hauptkette ohne Bildung einer Verzweigung, unter Bildung cyclischer Strukturen ab.
Bei der oben definierten Amino- und/oder Ammonium-Polysiloxan-Verbindung a1) handelt es sich bevorzugt um Polysiloxan-Verbindungen, die mindestens eine Einheit der Formel (VII) enthalten:

-[Q-V]- (VII)

worin Q aus der zweiwertigen Resten ausgewählt wird, die besteht aus:- $NR^1$-, -$N^+R^1_2$-
einem gesättigten oder ungesättigten diaminofunktionellen Heterocyclus der Formeln:

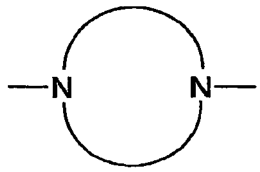

,

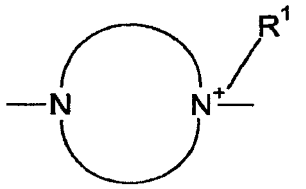

und

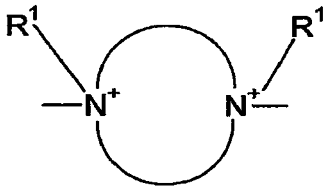

,

sowie
einem aromatischen diaminofunktionellen Heterocyclus der Formel:

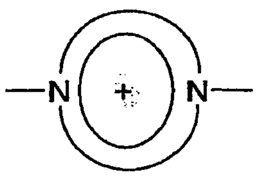

worin $R^1$ Wasserstoff oder einen einwertigen organischen Rest darstellt, und wobei Q nicht an ein Carbonylkohlenstoffatom bindet,
V mindestens ein Bestandteil ist, der aus der Gruppe ausgewählt wird, die aus $V^1$, $V^2$ und $V^3$ besteht, worin
$V^2$ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen (wobei die Kohlenstoffatome, des unten erwähnten Siloxanrestes $Z^2$ nicht mit eingerechnet werden), die gegebenenfalls eine oder mehrere Gruppen, ausgewählt aus -O-, -CONR$^2$-, worin $R^2$ Wasserstoff, einen einwertigen, geradkettigen, cyclischen oder verzweigten, gesättigten, ungesättigten oder aromatischen Kohlenwasserstoffrest mit bis zu 100 Kohlenstoffatomen darstellt, der eine oder mehrere Gruppen ausgewählt aus -O-, -NH-, -C(O)- und -C(S)- enthalten kann, und der gegebenen-falls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Amino, Alkylamino, Di-alkylamino, Ammonium, Polyetherresten und Polyetheresterresten substituiert sein kann, wobei wenn mehrere Gruppen -CONR$^2$ vorliegen, diese gleich oder verschieden sein können,
-C(O)- und -C(S)- enthalten kann,
der Rest $V^2$ gegebenenfalls durch eine oder mehrere Hydroxylgruppen substituiert sein kann, und
der Rest $V^2$ mindestens eine Gruppe -$Z^2$- der Formel

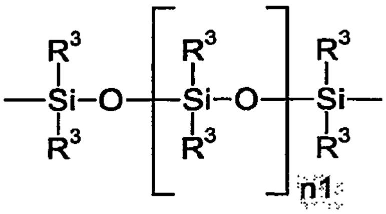

(V)

enthält, worin $R^3$ gleich oder verschieden sein kann und aus der Gruppe ausgewählt wird, die besteht aus $C_1$ bis $C_{22}$ Alkyl, Fluor($C_3$-$C_{10}$)alkyl und $C_6$-$C_{10}$ Aryl, und n1 = 20 bis 1000 bedeutet,
$V^1$ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen, die gegebenenfalls eine oder mehrere Gruppen, ausgewählt aus

-O-,
-CONR$^2$-, worin $R^2$ wie oben definiert ist, wobei die Gruppen $R^2$ in den Gruppen $V^1$ und $V^2$ gleich oder verschieden sein können, -C(O)-, -C(S)- und -$Z^1$- enthalten kann, worin -$Z^1$- eine Gruppe der Formel

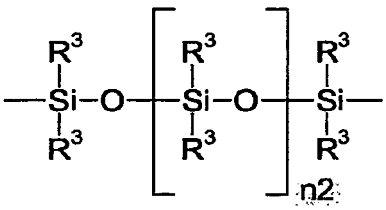

(VI)

ist, worin $R^3$ wie oben definiert ist, wobei die Gruppen $R^3$ in den Gruppen $V^1$ und $V^2$ gleich oder verschieden sein können, und n2 = 0 bis 19 bedeutet, und der Rest $V^1$ gegebenenfalls durch eine oder mehrere Hydroxylgruppen substituiert sein kann, und

Enthält eine der Gruppen $V^1$, $V^2$ bzw. $V^3$ eine der Gruppen -$Z^1$-, -$Z^2$- oder $Z^3$, so handelt es sich um eine vorstehend erwähnt Gruppe $V^{Si}$, deren Anbindung an die Gruppen Q mittels des vorstehend erläuterten Struktur-elements der Formel (I) erfolgt.

Die bevorzugten Polysiloxan-Verbindungen, die mindestens eine Einheit der Formel (VII) enthalten, werden durch monofunktionelle Gruppen -Q-$R^E$ und/oder - V-$R^E$, worin $R^E$, wie oben definiert ist, terminiert, wie beispielsweise in der Verbindung a1) der Formel (IV) gezeigt.

Die bevorzugten Polysiloxan-Verbindungen a1), die mindestens eine Einheit der Formel (VII) enthalten, im Sinne der Erfindung sollen auch den Fall einschliessen, wo nur eine Einheit -[Q-V]- vorliegt, so dass auch Verbindungen der Formeln $R^E$-V-[Q-V]-$R^E$ bzw. $R^E$-[Q-V]-Q-$R^E$ umfasst sind.

Geeignete Polyamino- und/oder Polyammonium-Polysiloxan-Verbindung a1) sind z. B. beschrieben in WO 02/10257, WO 02/10259, DE-OS 100 36 522, DE-OS 100 36 532, WO 02/18528, DE-OS 100 36 533 und der unveröffentlichten DE Anmeldung 102 12 470.1. Weiterhin kann es sich um Verbindungen gemäß US 6,240,929 handeln.

Bei den Polysiloxan-Verbindungen, die mindestens eine Einheit der Formel (VII) enthalten, handelt sich zum Beispiel um lineare Polysiloxan-copolymere der allgemeinen Formel (VII'):

-[Q-V]- (VII')

worin Q wie oben definiert ist,
V mindestens eine Gruppe $V^1$ und mindestens eine Gruppe $V^2$ darstellt,
worin $V^1$ und $V^2$ wie oben definiert sind.

In den allgemeinen Formeln (VII) bzw. (VII') kann das molare Verhältnis der Gruppen $V^1$ und $V^2$ in den Poly-

siloxan-Verbindungen $V^2/V^1$ an sich einen beliebigen Wert annehmen. Erfindungsgemäß ist somit auch der Fall eingeschlossen, bei dem die Polysiloxanverbindung der Formeln (VII) oder (VII') nur $V^2$-Einheiten enthält, die Polysiloxanverbindung also die Formel -[Q-$V^2$]- aufweist. Auch der Fall, bei dem die Polysiloxanverbindung nur $V^1$-Einheiten enthält, ist erfindungsgemäß umfasst. In diesem Fall müssen die $V^1$-Einheiten jedoch $Z^1$-Siloxaneinheiten enthalten.

In einer bevorzugten Ausführungsform der Erfindung enthält die Polysiloxanverbindung der Formeln (VII) oder (VII') jedoch sowohl $V^2$ als auch $V^1$-Einheiten.

In einer weiteren bevorzugten Ausführungsform der Verbindungen a1) der vorliegenden Erfindung beträgt das molare Verhältnis der Gruppen $V^1$ und $V^2$ in den Polysiloxan-Verbindungen der allgemeinen Formeln (VII) bzw. (VII'):

$$V^2/V^1 = 1.$$

Derartige lineare Amin- bzw. Tetraorgano-Ammonium-Verbindungen sind als Komponente a1) z.B. beschrieben worden in der WO 02/10257, WO 02/10259, EP 282720 oder US 5,981,681. Besonders bevorzugt sind die Poly-siloxane der WO 02/10259 und der WO 02/10257 auf deren in den Ansprüchen 1 definierte Polysiloxanpolymere hiermit ausdrücklich Bezug genommen wird, und die zum Offenbarungsgehalt der vorliegenden Anmeldung gehören.

In einer weiteren Ausführungsform der linearen Polysiloxanverbindungen der Formel (VII) bzw. (VII') ist $V^2/V^1$ ungleich 1, bevorzugt ist $V^2/V^1 < 1$, bevorzugter < 0,9, noch bevorzugter erfüllt $V^2/V^1$ die Beziehung

$$0{,}0005 < V^2/V^1 < 0{,}5.$$

Die Gruppe R wird bevorzugt ausgewählt aus den Gruppen $R^2$.

In einer bevorzugten Ausführungsform der Erfindung wird der zweiwertige Rest Q in den Formeln (VII) oder (VII') aus der Gruppe ausgewählt, die besteht aus:

einer quaternierten Imidazoleinheit der Struktur

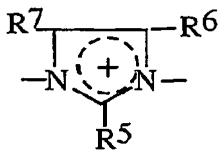

,

einer quaternierten Pyrazoleinheit der Struktur

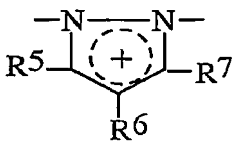

einer zweifach quaternierten Piperazineinheit der Struktur

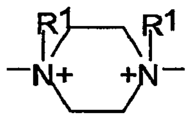

,

einer monoquaternierten Piperazineinheit der Struktur

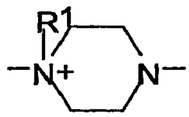

,

einer monoquaternierten Piperazineinheit der Struktur

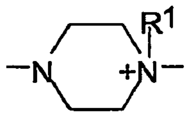

,

einer zweifach quaternierten Einheit der Struktur

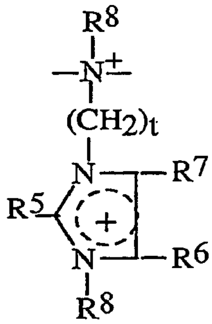

,

einer monoquaternierten Einheit der Struktur

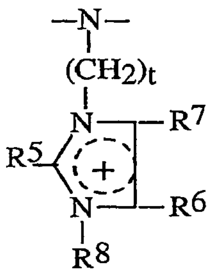

,

einer monoquaternierten Einheit der Struktur

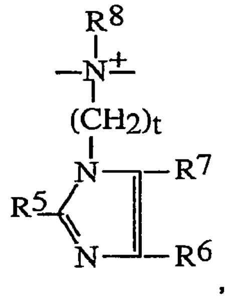

einer zweifach quaternierte Einheit der Struktur

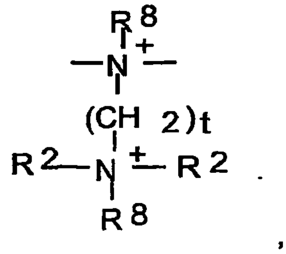

einer monoquaternierten Einheit der Struktur

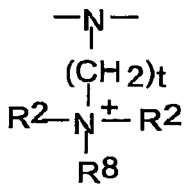

und einer monoquaternierten Einheit der Struktur

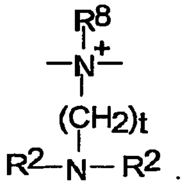

worin
t von 2 bis 10 ist,
$R^2$ wie oben definiert ist, und die Bedeutung von $R^2$ von der Bedeutung der obigen Gruppe $R^2$ gleich oder verschieden sein kann, und wenn mehrere $R^2$ in einem der vorstehend beschriebenen Strukturelemente vorliegen, diese gleich oder verschieden voneinander sein können,zwei Gruppen $R^2$ gemeinsam mit dem positiv geladenen Stickstoffatom einen fünf- bis siebengliedrigen Heterocyclus bilden, der gegebenenfalls zusätzlich ein oder mehrere Stickstoff-, Sauerstoff- und/oder Schwefelatome aufweisen kann,
$R^5$, $R^6$, $R^7$ gleich oder verschieden sein können und aus der Gruppe ausgewählt werden, die besteht aus: H, Halogen, Hydroxylgruppe, Nitrogruppe, Cyanogruppe, Thiolgruppe, Carboxylgruppe, Alkylgruppe, Monohydroxyalkylgruppe, Polyhydroxyalkylgruppe, Thioalkylgruppe, Cyanoalkylgruppe, Alkoxygruppe, Acylgruppe, Acetyloxygruppe, Cycloalkylgruppe, Arylgruppe, Alkylarylgruppe, und Gruppen des Typs -NHR$^W$, in denen R$^W$ H, Alkylgruppe, Monohydroxyalkylgruppe, Polyhydroxyalkylgruppe, Acetylgruppe, Ureidogruppe bedeuten, und jeweils zwei der benachbarten Reste R$^5$, R$^6$ und R$^7$ mit den sie an den Heterocyclus bindenden Kohlenstoffatomen aromatische Fünf- bis Siebenringe bilden können, und

R$^8$ die Bedeutung von R$^2$ aufweist, wobei R$^8$ und R$^2$ gleich oder verschieden sein können.

In einer bevorzugten Ausführungsform der Polysiloxanverbindungen der Formel (VII) bzw. (VII') als Komponente a1) stellt V$^2$ eine Gruppe der Formel

$$-V^*-Z^2-V^*-$$

dar, worin Z$^2$ und V* wie oben definiert ist, und V* bevorzugt einen zweiwertigen geradkettigen, cyclischen oder verzweigten, gesättigten, ungesättigten oder aromatischen Kohlenwasserstoffrest mit bis zu 100, bevorzugt 40 Kohlenstoffatomen darstellt, der gegebenenfalls eine oder mehrere Gruppen, ausgewählt aus -O-, -CONH-, -CONR$^2$-, worin R$^2$ wie oben definiert ist, , -C(O)- und -C(S)- enthalten kann, und der Rest V* gegebenenfalls durch eine oder mehrere Hydroxylgruppen substituiert sein kann. Die letztgenannte bevorzugte Ausführungsform von V* gilt auch als bevorzugte Ausführungsform des Strukturelements (I), wie oben definiert.

In der vorstehend erwähnten Ausführungsform kann das erfindungsgemäße lineare Polysiloxancopolymer somit die folgenden Wiederholungseinheiten
-[V*-Z$^2$-V*-Q]-, bevorzugt zusammen mit -[V$^1$-Q]- aufweisen.

Das molare Verhältnis der Wiederholungseinheiten -[V*-Z$^2$-V*-Q]- zu -[V$^1$-Q]- , also das Verhältnis V$^2$/V$^1$ kann, wie vorstehend erwähnt, 1 betragen, ist in einer Ausführungsform jedoch bevorzugt ungleich 1, bevorzugter < 0,5. Im letzteren Fall enthalten die genannten linearen Polysiloxancopolymere -[Q-V]-zwingend Blöcke, die mehr als eine -[V$^1$-Q]-Einheit, miteinander verknüpft enthalten.

Wie weiter unten im Zusammenhang mit dem Verfahren zur Herstellung der vorstehend beschriebenen linearen Polysiloxancopolymere als Komponente a1) noch ausführlich erläutert wird, können die blockartigen Sequenzen, die mehr als eine -[V$^1$-Q]-Einheit miteinander verknüpft aufweisen, je nach Herstellweise regelmäßig mit den V$^2$-Q-Einheiten oder unregelmäßig mit den V$^2$-Q-Einheiten verbunden werden.

Dies meint folgendes:

Bei der regelmäßigen Verbindung, bei der beispielsweise ein der Gruppe -Q-[V$^1$-Q]$_x$-entsprechendes Präpolymer mit V$^2$ entsprechenden Monomer-Einheiten im molaren Verhältnis 1:1 umgesetzt wird, lassen sich die linearen Polysiloxancopolymere wie folgt darstellen:

$$-\{V^2-Q-[V^1-Q]_x-\}-.$$

x kann dabei 2 bis 2000 sein und ist der Mittelwert der Verteilung. Die durch die Formel -{V$^2$-Q-[V$^1$-Q]$_x$-}- dargestellten linearen Polysiloxancopolymere sind dadurch gekennzeichnet, dass sie im wesentlichen keine miteinander verknüpften - V$^2$-Q-Einheiten aufweisen, oder mit anderen Worten, sind zwei -V$^2$-Q-Einheiten stets durch mindestens eine -V$^1$-Q-Einheit unterbrochen.

Bei der unregelmäßigen Verbindung, bei der beispielsweise Q-Einheiten entsprechende Monomere mit V$^1$ entsprechenden Monomer-Einheiten und V$^2$ entsprechenden Monomer-Einheiten im Verhältnis Q/(V$^1$ + V$^2$), mit beispielsweise V$^2$/V$^1$ < 1, bevorzugt < 0,5, von 1:1 umgesetzt wird, lassen sich die linearen Polysiloxancopolymere wie folgt darstellen:

$$-Q-(V^1,V^2)-,$$

worin V das Verhältnis V$^2$/V$^1$ < 1 bzw. < 0,5 ist. Dabei sind die Gruppen V$^1$ und V$^2$ statistisch über die Copolymerkette verteilt. Im Unterschied zu dem durch die regelmäßige Verbindung hergestellten linearen Polysiloxancopolymere kann dieses Copolymer auch benachbarte -Q-V$^2$-Einheiten aufweisen.

In einer bevorzugten Ausführungsform der erfindungsgemäß verwendeten Polysiloxanverbindung der Formel (VII) bzw. (VII') als Komponente a1) wird die Gruppe V$^1$ ausgewählt aus zweiwertigen, geradkettigen, cyclischen oder verzweigten, gesättigten, ungesättigten oder aromatischen Kohlenwasser-stoffresten mit bis zu 400 Kohlenstoffatomen, die gegebenenfalls eine oder mehrere Gruppen, ausgewählt aus -O-, -CONH-, -CONR$^2$-, worin R$^2$ wie oben definiert ist, , -C(O)-, -C(S)- und -Z$^1$- enthalten kann, worin -Z$^1$- eine Gruppe der Formel (VI)

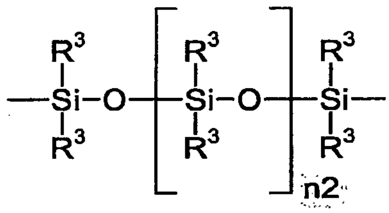

(VI)

ist, worin
$R^3$ $C_1$-$C_{18}$ Alkyl, das gegebenenfalls mit einem oder mehreren Fluoratomen substituiert sein kann, oder Phenyl ist, und
$n_2$ wie oben definiert ist.

In einer weiteren bevorzugten Ausführungsform der Polysiloxan-Verbindungen der Formel (VII) bzw. (VII') als Komponente a1) wird die Gruppe Q ausgewählt aus:

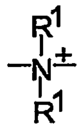

einer quaternierten Imidazoleinheit der Struktur

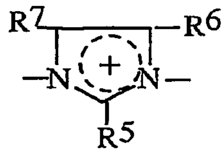

,

einer quaternierten Pyrazoleinheit der Struktur

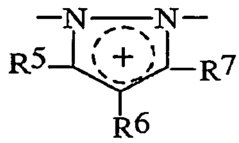

einer zweifach quaternierten Piperazineinheit der Struktur

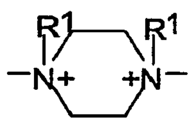

,

einer monoquaternierten Piperazineinheit der Struktur

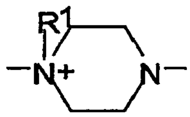

,

einer monoquaternierten Piperazineinheit der Struktur

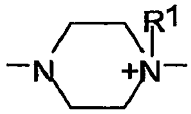

,

einer monoquaternierten Einheit der Struktur

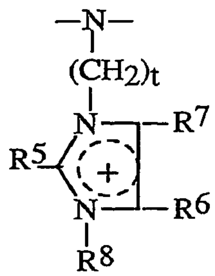

,

worin $R^1$, $R^5$, $R^6$, $R^7$ und $R^8$ wie oben definiert sind.

In einer weiteren bevorzugten Ausführungsform der linearen Polysiloxanverbindungen der Formel (VII') als Komponente a1) der vorliegenden Erfindung erfüllt das molare Verhältnis $V^2/V^1$ die Beziehung

$$0{,}0005 < V^2/V^1 < 0{,}5, (= 2 < V^1/V^2 < 2000)$$

bevorzugter die Beziehung

$$0{,}005 < V^2/V^1 < 0{,}4, (= 2{,}5 < V^1/V^2 < 200)$$

noch bevorzugter die Beziehung

$$0{,}01 < V^2/V^1 < 0{,}3 (= 3{,}3 < V^1/V^2 < 100).$$

Bevorzugt sind in den Formeln (VII) und (VII'):

$R^1$ = $C_1$ bis $C_{18}$ Alkyl, insbesondere Methyl, Ethyl, Trifluorpropyl und Phenyl,
$n_1$ = 20 bis 400, besonders bevorzugt 20 bis 300, speziell 20 bis 200. In einer weiteren bevorzugten Ausführungsform ist $n_1$ zwischen 20 und 50 oder zwischen 80 und 200. Die Zahl $n_1$ ist die mittlere Polymerisationsgrad aus $M_n$ der

Diorganosiloxy-Einheiten in der Gruppe $Z^2$.
$n_2$ = 0 bis 15, besonders bevorzugt 0 bis 10, speziell 0 bis 5, spezieller 0. Die Zahl $n_2$ ist die mittlere Polymerisationsgrad aus $M_n$ der Diorganosiloxy-Einheiten in der Gruppe $Z^1$,
V* = ein zweiwertiger geradkettiger, cyclischer oder verzweigter, gesättigter, ungesättigter $C_3$ bis $C_{16}$ Kohlenwasserstoffrest oder aromatischer $C_8$ bis $C_{20}$ Kohlenwasserstoffrest, der gegebenenfalls eine oder mehrere Gruppen, ausgewählt aus -O-, -CONH-, -CONR$^2$-, , -C(O)-, -C(S)- enthalten kann und durch eine oder mehrere OH-Gruppe substituiert sein kann, worin $R^2$ wie oben definiert ist,
Q =

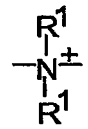

eine quaternierte Imidazoleinheit der Struktur

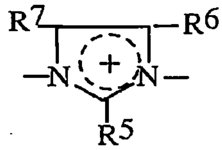

,

eine zweifach quaternierte Piperazineinheit der Struktur

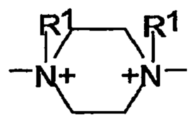

,

eine monoquaternierte Piperazineinheit der Struktur

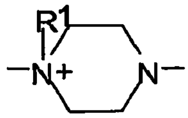

,

eine monoquaternierte Piperazineinheit der Struktur

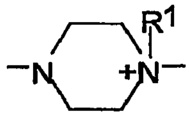

,

eine monoquaternierte Einheit der Struktur

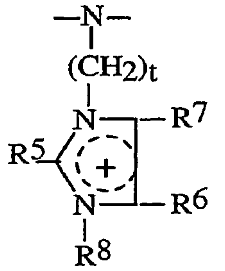

,

worin $R^1$, $R^5$, $R^6$, $R^7$ und $R^8$ wie oben definiert sind.

Besonders bevorzugt steht

V* für einen zweiwertigen geradkettigen, cyclischen oder verzweigten, gesättigten, ungesättigten oder aromatischen Kohlenwasserstoffrest mit bis zu 16 Kohlenstoffatomen, der eine oder mehrere Gruppen, ausgewählt aus -O-, -CONH-, $-CONR^2-$, worin $R^2$ wie oben definiert ist, , -C(O)-, -C(S)- enthalten kann und mit einer oder mehreren Hydroxylgruppen substituiert sein kann. Noch bevorzugter wird -V*- ausgewählt aus Gruppen der Formeln:

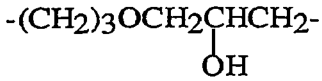 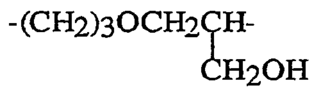

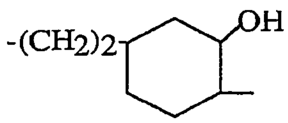 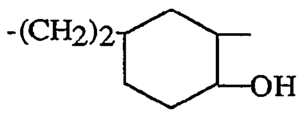

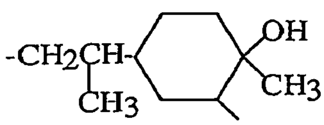 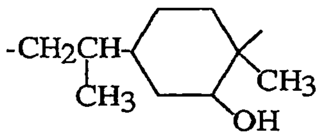

$-(CH_2)_2-$, $-(CH_2)_3-$ , $-(CH_2)_4-$, $-(CH_2)_5-$, $-(CH_2)_6-$, $-CH{=}CHCH_2-$, $-CH{=}CHCH_2CH_2-$, $-CH_2CH_2CH_2OC(O)CH_2-$, $-CH_2CH_2CH_2OC(O)CH_2CH_2-$, $-CH{=}CHCH_2OC(O)CH_2-$, $-CH{=}CHCH_2OC(O)CH_2CH_2-$,

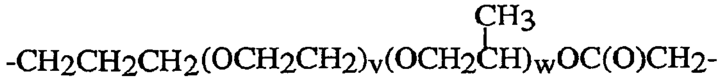

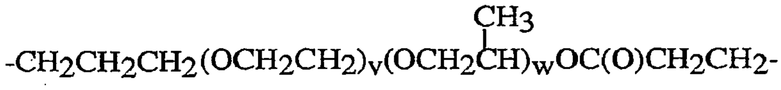

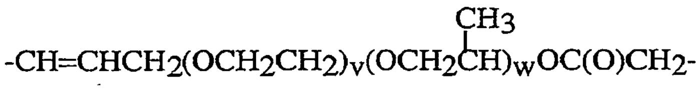

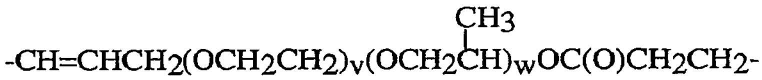

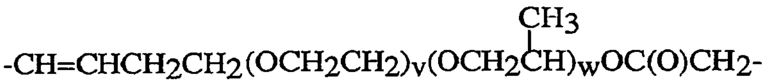

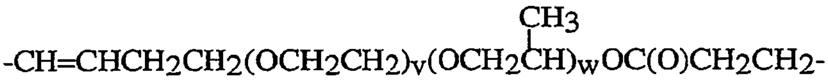

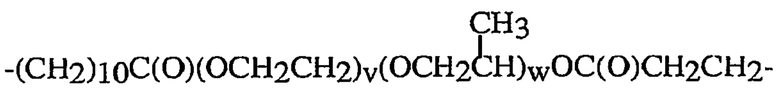

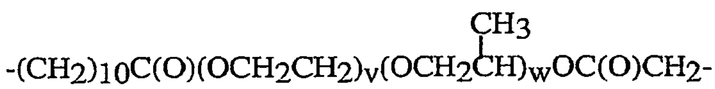

mit v+w ≥ 0,

$R^1$ steht bevorzugt für: H, $-CH_3$, $-CH_2CH_3$, $-(CH_2)_2CH_3$, $-(CH_2)_3CH_3$, $-(CH_2)_5CH_3$, $-CH_2CH_2OH$,

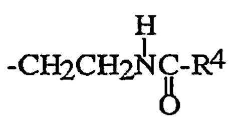 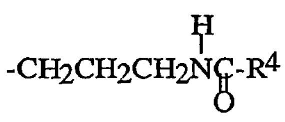

mit

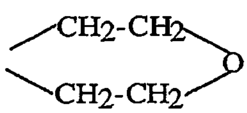 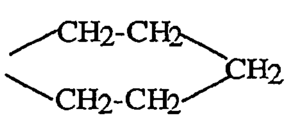

$R^4$ = geradkettiger, cyclischer oder verzweigter $C_1$ bis $C_{18}$ Kohlenwasserstoffrest, der durch eine oder mehrere

Gruppen, ausgewählt aus -O-, -NH-, -C(O)-, und -C(S)- enthalten kann und durch eine oder mehrere OH-Gruppen substituiert sein kann, speziell unsubstituierte $C_5$ bis $C_{17}$ Kohlenwasserstoffreste, die sich von den entsprechenden Fettäuren ableiten oder aber hydroxylierte $C_3$ bis $C_{17}$ Reste, die auf hydroxylierte Carbonsäuren, speziell Saccharidcarbonsäuren zurückgeführt werden können und ganz speziell

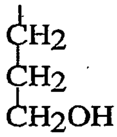
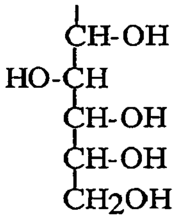
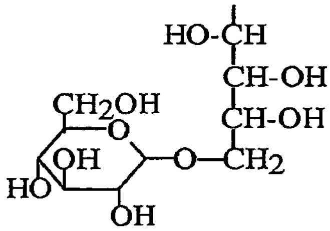

bedeuten.

Weiterhin kann $R^1$ für:

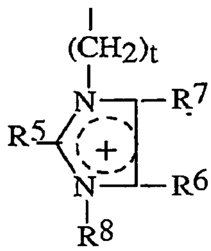

,

worin t, $R^5$ bis $R^8$ wie oben definiert sind,

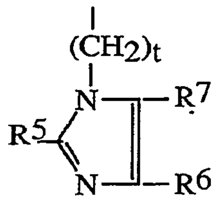

,

worin t, $R^5$ bis $R^7$ wie oben definiert sind,

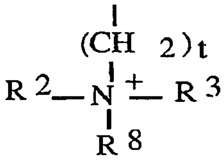

,

worin t, $R^2$, $R^3$ und $R^8$ wie oben definiert sind. stehen.
$V^1$ steht bevorzugt für

- $-R^9-$, worin $R^9$ einen zweiwertigen, gesättigten oder einfach oder mehrfach ungesättigten, geradkettigen oder verzweigten Kohlenwasserstoffrest mit zwei bis 25 Kohlenstoffatomen darstellt,
- $-(CH_2)_uC(O)O-[(CH_2CH_2O)_q-(CH_2CH(CH_3)O)_r]-C(O)(CH_2)_u-$
- $-(CH_2)_uC(O)O-R^9-O-C(O)(CH_2)_u-$, worin $R^9$ wie zuvor definiert ist,
- $-(CH_2)_u-R^{10}-(CH_2)_u-$, worin $R^{10}$ eine aromatische Gruppe ist,
- $-[CH_2CH_2O]_q-[CH_2CH(CH_3)O]_r-CH_2CH_2-$,
- $-CH(CH_3)CH_2O[CH_2CH_2O]_q-[CH_2CH(CH_3)O]_r-CH_2CH(CH_3)-$
- $-CH_2CH(OH)CH_2-$,
- $-CH_2CH(OH)(CH_2)_2CH(OH)CH_2-$,
- $-CH_2CH(OH)CH_2OCH_2CH(OH)CH_2OCH_2CH(OH)CH_2-$ und
- $-CH_2CH(OH)CH_2O-[CH_2CH_2O]_q-[CH_2CH(CH_3)O]_r-CH_2CH(OH)CH_2-$

worin
u von 1 bis 3 ist,
q und r von 0 bis 200, bevorzugt von 0 bis 100, bevorzugter von 0 bis 70 und besonders bevorzugt 0 bis 40 ist, und $q + r > 0$ ist.

Bevorzugte $V^1$-Gruppen sind organische zweiwertige Reste mit mehr als 10 Kohlenstoffatomen, die weiterhin bevorzugt mehr als ein -O- oder -S-Atom pro Einheit $V^1$ aufweisen.

Bevorzugte Varianten von $V^1$ sind Strukturen der Formel: $-CH_2C(O)O-[CH_2CH_2O]_q-[CH_2CH(CH_3)O]_r-C(O)CH_2-$, $-CH_2CH_2C(O)O-[CH_2CH_2O]_q-[CH_2CH(CH_3)O]_r-C(O)CH_2CH_2-$, $-CH_2CH_2CH_2C(O)O-[CH_2CH_2O]_q-[CH_2CH(CH_3)O]_r-C(O)CH_2CH_2CH_2-$,
veresterte Alkylen-, Alkenylen, Alkinyleneinheiten, speziell der Strukturen $-CH_2C(O)O-[CH_2]_o-OC(O)CH_2-$, $-CH_2CH_2C(O)O-[CH_2]_o-OC(O)CH_2CH_2-$, $-CH_2CH_2CH_2C(O)O-[CH_2]_o-OC(O)CH_2CH_2CH_2-$ $-CH_2C(O)O-CH_2C\equiv CCH_2-OC(O)CH_2-$, $-CH_2CH_2C(O)O-CH_2C\equiv CCH_2-OC(O)CH_2CH_2-$, $-CH_2CH_2CH_2C(O)O-CH_2C\equiv CCH_2-OC(O)CH_2CH_2CH_2-$, $-CH_2C(O)O-CH_2CH=CHCH_2-OC(O)CH_2-$, $-CH_2CH_2C(O)O-CH_2CH=CHCH_2-OC(O)CH_2CH_2-$, $-CH_2CH_2CH_2C(O)O-CH_2CH=CHCH_2-OC(O)CH_2CH_2CH_2-$,
Alkylen-, Alkenylen-, Alkinylen- und Aryleinheiten, speziell der Strukturen: $-[CH_2]_o-$
mit o = 2 bis 6, $-CH_2C\equiv CCH_2-$, $-CH_2CH=CHCH_2-$, $-CH(CH_3)CH_2CH_2-$,

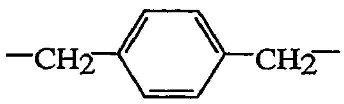

Polyalkylenoxideinheiten, speziell der Strukturen $-[CH_2CH_2O]_q-[CH_2CH(CH_3)O]_r-CH_2CH_2-$, $-CH(CH_3)CH_2O[CH_2CH_2O]_q-[CH_2CH(CH_3)O]_r-CH_2CH(CH_3)-$
mit
mono-, di- oder polyhydroxyfunktionelle Einheiten, speziell der Strukturen $-CH_2CH(OH)CH_2-$, $-CH_2CH(OH)(CH_2)_2CH(OH)CH_2-$, $-CH_2CH(OH)CH_2OCH_2CH(OH)CH_2OCH_2CH(OH)CH_2-$, $-CH_2CH(OH)CH_2O-[CH_2CH_2O]_q-[CH_2CH(CH_3)O]_r-CH_2CH(OH)CH_2-$
mit
q = 0 bis 200,
r = 0 bis 200
Bevorzugt sind q = 1 bis 50, insbesondere 2 bis 50, speziell 1 bis 20, ganz speziell 1 bis 10, sowie 1 oder 2, r = 0 bis 100, insbesondere 0 bis 50, speziell 0 bis 20, ganz speziell 0 bis 10, sowie 0 oder 1 oder 2.

Die linearen Polysiloxane der Formeln (VII) bzw. (VII') können beispielsweise durch ein Verfahren hergestellt werden, worin

a) mindestens eine Aminverbindung, ausgewählt aus einer Diamin-Verbindung und/oder einer primären oder sekundären Monoaminverbindung, mit mindestens zwei difunktionellen, zur Reaktion mit den Aminofunktionen der Amin-Verbindung befähigten organischen Verbindungen umgesetzt werden, wobei das molare Verhältnis der organischen Verbindungen so gewählt wird, dass das gewünschte Verhältnis $V^2/V^1$ erhalten wird,
b) mindestens zwei Mol einer Aminverbindung, ausgewählt aus einer Diamin-Verbindung und/oder einer primären oder sekundären Monoaminverbindung, mit einem Mol einer difunktionellen, zur Reaktion mit den Aminofunktionen

der Aminverbindung befähigten organischen Verbindung unter Bildung einer Diaminverbindung (Monomer) umgesetzt wird, die anschließend mit mindestens einer Aminverbindung, ausgewählt aus einer Diamin-Verbindung und/oder einer primären oder sekundären Monoaminverbindung, und mindestens einer weiteren difunktionellen zur Reaktion mit den Amino-funktionen der Aminverbindungen befähigten organischen Verbindung umgesetzt wird,

c) eine Aminverbindung, ausgewählt aus einer Diamin-Verbindung und/oder einer primären oder sekundären Monoaminverbindung, mit einer difunktionellen, zur Reaktion mit den Aminofunktionen der Aminverbindungen befähigten organischen Verbindung unter Bildung einer Diaminverbindung (aminoterminiertes Oligomer) umgesetzt wird, die anschließend mit min-destens einer difunktionellen zur Reaktion mit den Aminofunktionen der Diamin-Verbindungen befähigten organischen Verbindung umgesetzt wird,

d) eine Aminverbindung, ausgewählt aus einer Diamin-Verbindung und/oder einer primären oder sekundären Monoaminverbindung, mit einer difunk-tionellen, zur Reaktion mit den Aminofunktionen der Aminverbindung befähigten organischen Verbindung unter Bildung einer difunktionellen, zur Reaktion mit Amino-funktionen befähigten Verbindung (difunktionelles Oligomer) umgesetzt wird, die anschließend mit mindestens einer Amin-verbindung, ausgewählt aus einer Diamin-Verbindung und/oder einer primären oder sekundären Monoaminverbindung, und mindestens einer weiteren zur Reaktion mit Aminofunktionen befähigten Verbindung umgesetzt wird,

wobei gegebenenfalls monofunktionelle, bevorzugt tertiäre Monoamine oder geeignete, zur Kettenfortpflanzung nicht befähigte Monoamine und/oder monofunktionelle, zur Reaktion mit Aminofunktionen befähigten Verbindungen als Kettenabbruchsmittel hinzugesetzt werden können, und die Stöchiometrie der Aminofunktionen und der zur Reaktion mit Aminofunktionen befähigten funktionellen Gruppen in der letzten Stufe der Umsetzung stets etwa 1:1 beträgt,und wobei gegebenenfalls vorhandene Aminofunktionen protoniert oder quaterniert werden können.

Variante a), worin mindestens eine Diamin-Verbindung, ausgewählt aus einer Diamin-Verbindung und/oder einer primären oder sekundären Monoaminverbindung, mit mindestens zwei difunktionellen, zur Reaktion mit den Aminofunktionen der Aminverbindung befähigten organischen Verbindungen umgesetzt werden, wobei das molare Verhältnis der organischen Verbindungen so gewählt wird, dass das gewünschte Verhältnis $V^2/V^1$ wie z.B. < 0,5 erfüllt wird, lässt sich somit schematisch beispielsweise wie folgt darstellen:

$$-[N\text{-}N]- + -[V^1]- + -[V^2]- \rightarrow -[Q\text{-}(V^1,V^2)]-$$

oder

$$-[N]- + -[V^1]- + -[V^2]- \rightarrow -[Q\text{-}(V^1,V^2)]-$$

wobei -[N-N]- ein cyclisches, der Definition von Q entsprechendes Diamin oder ein $V^1$-enthaltendes Diamin -[N-$V^1$-N]- oder ein $V^2$-enthaltendes Diamin -[N-$V^2$-N]-, wie insbesondere -[N-V*-$Z^2$-V*-N]- einschließen kann, wobei aus den letzteren jeweils zwei Q-Einheiten und eine $V^1$ bzw. zwei $V^2$-Einheiten hervorgehen, und -[$V^1$]- und-[$V^2$]- den Wiederholungseinheiten $V^1$ und $V^2$ entsprechende Monomere darstellen sollen,und -[N]- ein primäres oder sekundäres zur Kettenfortpflanzung geeignetes Monoamin darstellt,

Aus den -[N-N]- und/oder -[N]-Einheiten wird dabei mindestens eine höheralkylierte Amin- oder eine quaternäre Ammonium-Einheit Q gebildet, wobei bei der Polymerisation gebildete sekundäre oder tertiäre Aminofunktionen gegebenenfalls nach der Polymerisation in einem separaten Schritt protoniert oder quaterniert werden können. Bevorzugt ist die Bildung quarternärer Ammoniumeinheiten.

Bevorzugte Beispiele von -[N-N]- sind wie unten noch ausführlicher beschrieben wird: Piperazin und Imidazol, bevorzugte Diamin-Einheiten -[N-$V^1$-N]- schließen beispielsweise ein: Polymethylendiamine, wie Tetramethyl-Hexamethylendiamin, $\alpha,\omega$-diaminoterminierte Polyether, wie z.B. Jeffamine, etc.

Bevorzugte Diamin-Einheiten -[N-V*-$Z^2$-V*-N]- schließen beispielsweise Umsetzungprodukte von $\alpha,\omega$-Dihydrogenpolydialkylsiloxane mit Allylaminen ein.

Bevorzugte Beispiele von -[N]- sind wie unten noch ausführlicher beschrieben z.B. Dimethylamin.

Die Verwendung von Diaminen -[N-N]- ist an sich bevorzugt.

Bevorzugte -[$V^1$]-Monomere schließen beispielweise Epichlorhydrin, Bis-Chloralkylester, Bisepoxide oder Bisacrylate. Es können bevorzugt auch Mischungen der genannten -[$V^1$]-Monomere, wie z.B. Mischungen aus Epichlorhydrin, Bis-Chloralkylester oder Bisepoxiden umgesetzt werden.

Bevorzugte -[$V^2$]-Monomere sind Monomere der Formel -[V*-$Z^2$-V*]-, worin $Z^2$ wie oben definiert ist, und -[V*] eine funktionalisierte der Wiederholungseinheit V* entsprechende Gruppe darstellt. Bevorzugte -[$V^2$]-Monomere zur Bildung der $V^2$-Wiederholungseinheiten sind insbesondere $\alpha,\omega$-diepoxyterminierte Polydialkylsiloxane.

Variante b) lässt sich sowohl mit Diaminen, -[N-N]-, als auch geeigneten Monoaminen -[N]- durchführen und lässt sich schematisch beispielsweise wie folgt darstellen:

Variante b1)

Schritt 1): 2 -[N-N]- + -[$V^2$]- oder -[$V^1$]- → -[N-N-$V^1$-N-N]- oder -[N-N-$V^2$-N-N]-
Schritt 2.1): -[N-N-$V^2$-N-N]- + -[$V^1$]- + -[N-N]- →,
Schritt 2.2): -[N-N-$V^1$-N-N]- + -[$V^2$]- + -[N-N]- →,

wobei die Stöchiometrie $V^2/V^1$ wie gewünscht eingestellt wird.
Bezüglich der bevorzugt verwendeten Monomer-Einheiten -[N-N]-, -[$V^1$]- und -[$V^2$]- gilt das für Schritt a) Gesagte.

Variante a2)

Schritt 1): 2 -[N]- + -[$V^2$]- oder -[$V^1$]- → -[N-$V^1$-N]- oder -[N-$V^2$-N]-
Schritt 2.1): -[N-$V^2$-N]- + -[$V^1$]- + -[N]- →,
Schritt 2.2): -[N-$V^1$-N]- + -[$V^2$]- + -[N]- →,

wobei diese Variante wie oben erwähnt nur mit primären oder sekundären Monoaminen durchführbar ist und wobei bezüglich der bevorzugt verwendeten Monomer-Einheiten -[N]-, -[$V^1$]- und -[$V^2$]- das für Schritt a) Gesagte gilt.

Variante c) lässt sich schematisch beispielsweise wie folgt darstellen:

Variante c1)

Schritt 1): x+1 -[N-N]- + x -[$V^1$]- → -[N-N-($V^1$-N-N)$_x$]-
Schritt 2): -[N-N-($V^1$-N-N)$_x$]- + -[$V^2$]- →
wobei bezüglich der bevorzugt verwendeten Monomer-Einheiten -[N-N]-, -[$V^1$]- und -[$V^2$]- das für Schritt a) Gesagte gilt.

Variante c2)

Schritt 1): 1 +x -[N]- + x -[$V^1$]- → -[N-($V^1$-N)$_x$]-
Schritt 2): -[N-($V^1$-N)$_x$]- + -[$V^2$]- →

wobei bezüglich der bevorzugt verwendeten Monomer-Einheiten -[N]-, -[$V^1$]- und -[$V^2$]- das für Schritt a) Gesagte gilt.

Variante d) lässt sich schematisch beispielsweise wie folgt darstellen:

Variante d1)

Schritt 1): 1+x -[$V^1$]- + x -[N-N]- → -[$V^1$-(N-N-$V^1$)$_x$]-
Schritt 2): -[$V^1$-(N-N-$V^1$)$_x$]- + -[$V^2$]- + -[N]- oder -[N-N]- →

wobei bezüglich der bevorzugt verwendeten Monomer-Einheiten -[N-N]-, -[$V^1$]- und -[$V^2$]- das für Schritt a) Gesagte gilt.

Variante d2)

Schritt 1): 1 +x -[$V^1$]- + x -[N]- → -[$V^1$-(N-$V^1$)$_x$]-
Schritt 2): -[$V^1$-(N-$V^1$)$_x$]- + -[$V^2$]- + -[N]- oder -[N-N]- →

wobei bezüglich der bevorzugt verwendeten Monomer-Einheiten -[N]-, -[N-N]-, -[$V^1$]- und -[$V^2$]- das für Schritt a) Gesagte gilt.

Für alle oben schematisch dargestellten Varianten gilt, dass auch Mischungen von Monoaminen -[N]- und Diaminen -[N-N]- eingesetzt werden können.
Besonders bevorzugt werden die funktionellen Gruppen der difunktionellen, zur Reaktion mit Aminofunktionen befähigten Verbindungen ausgewählt aus der Gruppe, die besteht aus Epoxygruppen und Halogenalkylgruppen.
Als Ausgangspunkt für die Synthesen der erfindungsgemäßen als Komponente a1) verwendeten Polysiloxan-copolymere der Formeln (VII) und (VII') sind α,ω Si-H funktionalisierte Siloxane der allgemeinen Struktur

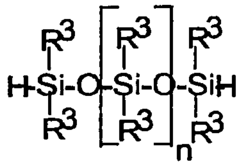

bevorzugt, wobei $R^3$ die oben angegebenen Bedeutung hat und n je nach gewünschter Wiederholungseinheit $V^1$ oder $V^2$, $n_2$ oder $n_1$ ist, die wie oben definiert sind. Sofern nicht kommerziell erhältlich, können diese Siloxane nach bekannten Verfahren, z.B. durch Äquilibrierung hergestellt werden (Silicone, Chemie und Technologie, Vulkan-Verlag, Essen 1989, S. 82-84).

Die Herstellung der Vorstufen der Strukturelemente V* und Q kann z. B. auf zwei Wegen erfolgen.

Einerseits ist es möglich, zunächst tertiäre Aminofunktionen tragende ungesättigte Strukturen, beispielsweise N,N-Dimethylallylamin, durch Hydrosilylierung direkt an das Siloxan in $\alpha,\omega$-Stellung zu binden. Dieser Prozeß ist allgemein bekannt (B. Marciniec, Comprehensive Handbook on Hydrosilylation, Pergamon Press, Oxford 1992, S. 122-124).

Andererseits ist bevorzugt, durch Hydrosilylierung zunächst reaktive $\alpha,\omega$-funktionalisierte Zwischenprodukte zu erzeugen, welche nachfolgend in $\alpha,\omega$-ditertiäre Aminostrukturen oder direkt in die erfindungsgemäßen quartären Ammoniumstrukturen umgewandelt werden können. Geeignete Ausgangsstoffe zur Erzeugung reaktiver Zwischenstufen sind beispielsweise halogenierte Alkene oder Alkine, speziell Allylchlorid, Allylbromid, Chlorpropin und Chlorbutin, ungesättigte Halogencarbonsäureester, speziell Chloressigsäureallylester, Chloressigsäurepropargylester, 3-Chlorpropionsäureallylester und 3-Chlorpropionsäurepropargylester und epoxyfunktionelle Alkene, beispielsweise Vinylcyclohexenoxid und Allylglycidether. Die allgemeine Durchführung von Hydrosilylierungen mit Vertretern der genannten Stoffgruppen ist ebenfalls bekannt (B. Marciniec, Comprehensive Handbook on Hydrosilylation, Pergamon Press, Oxford 1992, S. 116-121, 127-130, 134-137, 151-155).

In einem nachfolgenden Schritt können die reaktiven Zwischenstufen dann mit sekundäre Aminofunktionen tragenden Verbindungen zur Reaktion gebracht werden. Geeignete Vertreter sind N,N-Dialkylamine, beispielsweise Dimethylamin, Diethylamin, Dibutylamin, Diethanolamin und N-Methylglucamin, cyclische sekundäre Amine, beispielsweise Morpholin und Piperidin, sekundäre Aminofunktionen tragende Aminoamide, beispielsweise die Umsetzungsprodukte von Diethylentriamin oder Dipropylentriamin mit Lactonen, wie $\gamma$-Butyrolacton, Gluconsäure-$\delta$-lacton und Glucopyranosylarabonsäurelacton (DE-OS 43 18 536, Beispiele 11a, 12a, 13a), oder sekundär-tertiäre Diamine, wie beispielsweise N-Methylpiperazin. Es ist speziell bevorzugt, entsprechende Imidazol- oder Pyrazolderivate, speziell Imidazol und Pyrazol zur Einführung tertiärer Aminofunktionen zu nutzen.

Als Partner für die in einer Ausführungsform bevorzugt eingesetzten Epoxidderivate eignen sich besonders die genannten sekundär-tertiären Diamine, sowie auch Imidazol und Pyrazol. Auf diese Weise können die Alkylierungen regioselektiv und ohne zusätzlichen Aufwand an die Wasserstoffatome tragenden Stickstoffatome dirigiert werden.

Zur Absicherung einer quantitativen Umwandlung der reaktiven Gruppierungen in tertiäre Aminostrukturen werden die Amine in einem Verhältnis von $1 \leq E$ sekundäre Aminogruppen : reaktive Gruppen $\leq 10$, bevorzugt 1 bis 3, speziell 1 bis 2, ganz speziell 1 eingesetzt. Aminüberschüsse müssen gegebenenfalls entfernt werden.

Die Anbindung der vorstehend beschriebenen $\alpha,\omega$-ditertiären Aminosiloxane an $V^1$ entsprechenden Monomer-Einheiten $-[V^1]-$ oder eine Präpolymereinheit $-[V^1-(Q-V^1)_x]-$ führt zur Ausbildung von weiteren höher alkylierten Aminoeinheiten oder quarternären Ammoniumeinheiten und kann wiederum auf zwei vorteilhaften Wegen erfolgen.

Einerseits ist es bevorzugt, separat ein stark hydrophiles, polyquaternäres, difunktionelles Vorkondensat $-[V^1-(Q-V^1)_x]-$ zu erzeugen, welches zu einem geeigneten Zeitpunkt mit den $\alpha,\omega$-ditertiären Aminosiloxanen vereinigt wird und zum Polyamino- bzw. polyquaternären Siloxancopolymeren reagiert.

Die Herstellung hoch geladener, difunktioneller Präpolymere unterschiedlicher Kettenlänge $-[V^1-(Q-V^1)_x]-$ ist beispielhaft in WO 99/14300 (Beispiele 1 bis 7, Tabelle 11) beschrieben. In Abhängigkeit vom molaren Verhältnis von $V^1$ und dem Q zugrunde liegenden Amin kann entweder ein dem Wesen nach durch Aminogruppen terminiertes oder ein durch andere Reaktivgruppen terminiertes Präpolymer erzeugt werden.

Für den Fall der Anbindung eines durch Aminogruppen terminierten Präpolymer $-[N-(V^1-N)_x]-$ an die Aminfunktion einer $\alpha,\omega$-ditertiären Aminosiloxanstruktur kann beispielsweise ein der Wiederholungseinheit $V^1$ entsprechendes, alkylierendes bzw. quaternierendes, difunktionelles Monomer $-[V^1]-$, ausgewählt beispielsweise aus Bisepoxiden, Epichlorhydin, Bishalogenalkyl-Verbindungen, verwendet werden. Es braucht dabei nicht erwähnt zu werden, das unterschiedliche Gruppen $V^1$ im Präpolymer und im Verbindungsglied zwischen Präpolymer und $\alpha,\omega$-ditertiärer Aminosiloxanstruktur resultieren können.

Für den Fall eines durch Reaktivgruppen terminierten Präpolymers, wie $-[V^1-(Q-V^1)_x]-$ kann eine direkte An-

bindung an die Aminfunktion der α,ω-ditertiären Aminosiloxanstruktur ohne weiteren Linker erfolgen, da bei der Präpolymersynthese bereits ein Überschuß der $V^1$ erzeugenden Komponente eingesetzt wurde.

Alternativ zur separaten Herstellung eines Vorkondensates -[$V^1$-(Q-$V^1$)$_x$]- kann der Aufbau hoch geladener Blöcke parallel zum Einbau in das Copolymere erfolgen. Dies bedeutet, daß das α,ω-ditertiäre Aminosiloxan mit den Startkomponenten zum Aufbau von -[$V^1$-(Q-$V^1$)$_x$]-, d.h. beispielsweise -[$V^1$]- und Mono- oder Diamine der oben erwähnten Bedeutung -[N]- und/oder -[N-N-]- gemeinsam vorgelegt und zur Reaktion gebracht wird.

Schließlich ist es möglich, das α,ω-ditertiäre Aminosiloxan mit langkettiger Siloxaneinheit $Z^2$ oder kurzkettiger Siloxaneinheit $Z^1$ bzw. das α,ω-difunktionelle Siloxan -[N-V*-$Z^2$-V*-N]- oder -[N-$V^1$-N]- in die vorgelegten Komponenten zum Aufbau von -[$V^1$-(Q-$V^1$)$_x$]- über einen Zeitraum schrittweise zu dosieren oder aber umgekehrt diese Komponenten dem α,ω-ditertiären Aminosiloxan bzw. α,ω-difunktionellen Siloxan schrittweise hinzuzufügen.

Eine vorgelagerte Bereitstellung von durch Aminogruppen terminierten Präpolymeren, wie z.B. -[N-($V^1$-N)$_x$]- eröffnet die Möglichkeit, direkt mit geeigneten reaktiven Zwischenstufen, beispielsweise Epoxyderivaten, die Copolymerenbildung auszuführen.

Es ist ebenfalls bevorzugt, die reaktiven Zwischenstufen und die Startkomponenten für den Aufbau von -[$V^1$-(Q-$V^1$)$_x$]- gemeinsam vorzulegen und anschließend zur Reaktion zu bringen.

Schließlich ist möglich, die reaktiven Zwischenstufen in die vorgelegten Komponenten zum Aufbau von -[$V^1$-(Q-$V^1$)$_x$]- über einen Zeitraum schrittweise zu dosieren oder aber umgekehrt diese Komponenten der reaktiven Zwischenstufe schrittweise hinzuzufügen.

Unabhängig von der Wahl eines der vorstehend beschriebenen Reaktionswege und der damit eng verbundenen Frage, ob Aminoeinheiten zunächst das Siloxan oder aber das Präpolymer terminieren, wird die Gesamtstöchiometrie so gewählt, dass die Summe der Aminofunktionen und der mit ihnen reaktionsfähigen Gruppen etwa 1:1 beträgt.

Im Rahmen der Erfindung ist es möglich, von dieser bevorzugten Gesamtstöchiometrie abzuweichen. Es werden dann allerdings Produkte erhalten, die nicht mehr die anvisierte Länge des hoch geladenen, hydrophilen Blocks -[V'-(Q-$V^1$)$_x$]- aufweisen und zusätzlich einen Überschuß einer nicht abreagierten Startkomponenten hinterlassen.

Neben der vorstehend behandelten Gesamtstöchiometrie der Reaktion ist für das Eigenschaftsbild der Produkte die Wahl der die Wiederholungseinheit $V^1$ bildenden Komponente(n) von großer Bedeutung.

Geeignete difunktionelle, den Wiederholungseinheiten $V^1$ zugrunde liegenden Monomere -[$V^1$]- sind z.B. die Halogencarbonsäureester der Polyalkylenoxiddiole. Bevorzugte Ausgangsmaterialien für deren Synthese sind niedermolekulare, oligomere und polymere Alkylenoxide der allgemeinen Zusammensetzung

$$HO[CH_2CH_2O]_q-[CH_2CH(CH_3)O]_rH$$

wobei q und r die oben angegebenen Bedeutungen aufweisen, und es sich um statististische oder blockartige Einheiten handelt. Bevorzugte Vertreter hinsichtlich des Alkylenoxidblockes sind Ethylenglycol, Diethylenglycol, Triethylenglycol, Tetraethylenglycol, die Oligoethylenglycole mit Molgewichten von 200 bis 10000 g/mol, speziell 300 bis 800, sowie 1,2-Propylenglycol, 1,3-Propylenglycol und Dipropylenglycol.

Die Veresterung der Alkylenoxide erfolgt in an sich bekannter Weise (Organikum, Organisch-chemisches Grundpraktikum, 17. Auflage, VEB Deutscher Verlag der Wissenschaften, Berlin 1988, S. 402-408) durch Reaktion mit den $C_2$-bis $C_4$-Halogencarbonsäuren, deren Anhydriden oder Säurechloriden. Bevorzugt werden die Säurechloride der Chloressigsäure und 3-Chlorpropionsäure eingesetzt und die Reaktion in Abwesenheit von Lösungsmitteln durchgeführt.

In analoger Weise können Alkandiole, Alkendiole und Alkindiole in die entsprechenden reaktiven Esterderivate überführt werden. Beispielhafte Alkohole sind 1,4-Butandiol, 1,6-Hexandiol, 1,4-But(2-)enol und 1,4-But(2-)inol.

Die Einführung von Alkylen-, Alkenylen-, Alkinylen- und Aryleinheiten erfolgt vorzugsweise ausgehend von den entsprechenden Halogeniden, speziell Chloriden und Bromiden. Beispielhafte Vertreter sind 1,6-Dichlorhexan, 1,4-Dichlorbut-(2)- en, 1, 4-Dichlorbut(2)-in und 1,4-Bis(chlormethyl)benzol.

Polyalkylenoxideinheiten können ebenfalls über die α,ω-Dihalogenverbindungen eingeführt werden. Diese sind aus den oligomeren und polymeren Alkylenoxiden der allgemeinen Zusammensetzung

$$HO[CH_2CH_2O]_q-[CH_2CH(CH_3)O]_rH$$

wobei q und r die oben angegebenen Bedeutungen aufweisen, beispielsweise durch Chlorierung der Hydroxylgruppen mit $SOCl_2$ zugänglich (Organikum, Organisch-chemisches Grundpraktikum, 17. Auflage, VEB Deutscher Verlag der Wissenschaften, Berlin 1988, S. 189-190).

Mono-, di- oder polyhydroxyfunktionelle Einheiten als Gruppe $V^1$ können ausgehend von Epoxidderivaten eingeführt werden.

Kommerzielle Beispiele sind 1-Chlor-2,3-epoxypropan, der Glycerol-1,3-bis-glycidylether und Diethylenglycoldiglycidylether und Neopentylglycoldiglycidylether.

Soweit nicht kommerziell verfügbar, können die gewünschten Diepoxide beispielsweise durch Reaktion der

entsprechenden Diole mit 1-Chlor-2,3-Epoxypropan unter alkalischen Bedingungen synthetisiert werden.

Es liegt im Rahmen der Erfindung, in die Struktur von $V^1$ Siloxanketten $Z^1$ einzuführen. Hieraus ergibt sich u.a. die Möglichkeit, verschieden lange Siloxanketten für den Aufbau des Gesamtmoleküls zu verwenden. Es ist eine bevorzugte Variante, in $V^1$ Siloxanketten $Z^1$ des Kettenlängenbereichs $n_2$ = 0 bis 19, bevorzugt 0 bis 15, besonders bevorzugt 0 bis 10, speziell 0 bis 5, spezieller 0, einzubauen. Geeignete Startmaterialien zum Einbau sind z.B. die entsprechenden $\alpha,\omega$-Diepoxide oder $\alpha,\omega$-Di(monohalogencarbonsäure)-esterstrukturen.

Bei der Umsetzung von Epoxiden mit primären, sekundären oder tertiären Aminen ist darauf zu achten, daß für Alkylierungen von tertiären Aminogruppen ein mol H+ pro mol Epoxid/ tertiäres Amin zuzusetzen wird.

Die Wahl geeigneter Amine als Ausgangskomponenten für die Bildung von Q in der Wiederholungseinheit -[$V^1$-(Q-$V^1$)$_x$]- bestimmt ebenfalls in hohem Maße die Molekülstruktur. Die Verwendung ditertiärer Amine (entsprechend -[N-N]-), beispielsweise N,N,N',N'-Tetramethylethylendiamin, N,N,N',N'-Tetramethyltetramethylendiamin, N,N,N',N'-Tetramethylhexamethylendiamin, N,N'-Dimethylpiperazin, führt zu Produkten, in denen jedes Stickstoffatom der Wiederholungseinheit quaterniert ist.

Die Verwendung von sekundär-tertiären Diaminen, beispielsweise N-Methylpiperazin, öffnet den Weg zu Wiederholungseinheiten -[$V^1$-(Q-$V^1$)$_x$]-, in denen tertiäre und quartäre Amin- bzw. Ammoniumstrukturen im Verhältnis 1 : 1 vorliegen. Eine teilweise oder vollständige nachträgliche Quaternierung verbliebener tertiärer Aminostrukturen stellt eine bevorzugte Variante zur Einstellung einer gewünschten hohen Dichte der quartären Ammoniumgruppen dar. Die entsprechenden aromatischen Amine Imidazol bzw. Pyrazol führen zu Produkten mit einer delokalisierten Ladung.

Bei Einsatz von primär-tertiären Diaminen, beispielsweise N,N-Dimethylpropylendiamin und 1-(3-Aminopropyl) imidazol, speziell in Kombination mit Diepoxiden, können kammartige Strukturen aufgebaut werden, für die der Quatemierungsgrad während einer abschließenden Alkylierung wählbar ist. Grundsätzlich können die Alkylierungen auch zu Quaternierungsgraden von durchschnittlich weniger als einer quartären Ammoniumgruppe pro Wiederholungseinheit -[$V^1$-(Q-$V^1$)$_x$]- eingestellt werden. Es ist jedoch bevorzugt, mindestens ein Stickstoffatom pro Wiederholungseinheit zu quatemieren.

Ausgehend von disekundären Aminen, beispielsweise Piperazin, N,N'-Bis(2-hydroxyethyl)-hexamethylendiamin, N,N'-Bis(2-hydroxypropyl)hexamethylendiamin, können grundsätzlich auch Wiederholungseinheiten -[$V^1$-(Q-$V^1$)$_x$]- mit einem durchschnittlichen Gehalt von weniger als einer quartären Ammoniumgruppe synthetisiert werden. Die disekundären Amine liefern hierbei zunächst polytertiär aminomodifizierte Siloxancopolymere oder aber Präpolymere, die in einer abschließenden Reaktion teilweise oder vollständig zu -[$V^1$-(Q-$V^1$)$_x$]-quaterniert werden können. Es ist aber auch in dieser Variante bevorzugt, wenigstens ein Stickstoffatom pro Wiederholungseinheit zu quaternieren.

Als geeignete Quatemierungsagenzien kommen die allgemein bekannten Stoffgruppen wie Alkylhalogenide, Halogencarbonsäureester, Epoxidderivaten in Gegenwart von $H^+$ und Dialkylsulfate, speziell Dimethylsulfat, in Betracht

Die Herstellung nicht kommerziell verfügbarer disekundärer Amine erfolgt in einer bevorzugten Ausführungsform ausgehend von den entsprechenden diprimären Aminen, beispielsweise Hexamethylendiamin durch Alkylierung mit Epoxiden, wie z.B. Ethylenoxid, Propylenoxid, Isopropylglycidether unter Ausnutzung der unterschiedlichen Reaktionsgeschwindigkeiten primärer und sekundärer Amine.

Es war bereits dargelegt worden, daß im Rahmen der Erfindung die Möglichkeit besteht, Siloxanketten $Z^1$ in die Struktur von $V^1$ einzuführen. Als geeignete Startmaterialien wurden exemplarisch die reaktiven Zwischenstufen $\alpha$, $\omega$-Diepoxide und $\alpha,\omega$-Di(monohalogencarbonsäure)ester benannt.

Als die aus den Ammoniumgruppen resultierenden positiven Ladungen neutralisierende Anionen $A^-$ kommen bevorzugt die während der Quatemierung gebildeten Ionen, wie Halogenidionen, speziell Chlorid und Bromid, Alkylsulfate, speziell Methosulfat, Carboxylate, speziell Acetat, Propionat, Octanoat, Decanoat, Dodecanoat, Tetradecanoat, Hexadecanoat, Octadecanoat, Oleat, Sufonate, speziell Toluensulfonat in Betracht. Jedoch können durch Ionenaustausch auch andere Anionen eingeführt werden. Zu nennen sind beispielsweise organische Anionen, wie Polyethercarboxylate und Polyethersulfate.

Die Quatemierungsreaktionen werden bevorzugt in Wasser, polaren organischen Lösungsmitteln oder Mischungen beider genannter Komponenten ausgeführt. Geeignet sind z.B. Alkohole, speziell Methanol, Ethanol, i-Propanol und n-Butanol, Glykole, wie Ethylenglykol, Diethylenglykol, Triethylenglykol, die Methyl-, Ethyl- und Butylether der genannten Glykole, 1,2-Propylenglykol und 1,3-Propylenglykol, Ketone, wie Aceton und Methylethylketon, Ester, wie Ethylacetat, Butylacetat und 2-Ethyl-hexylacetat, Ether, wie Tetrahydrofuran und Nitroverbindungen, wie Nitromethan. Die Wahl des Lösungsmittels richtet sich wesentlich nach der Löslichkeit der Reaktionspartner, der angestrebten Reaktionstemperatur und einer gegebenfalls vorhandenen, die Umsetzung störenden Reaktivität.

Die Reaktionen werden im Bereich von 20 °C bis 130 °C, vorzugsweise 40 °C bis 100 °C ausgeführt.

Um die Bildung von gelartigen, nicht vollständig löslichen, linearen Polyorganosiloxanpolymeren zu vermeiden, wird das Molgewicht zweckmäßig nach oben begrenzt.

Eine Begrenzung des Molekulargewichtes wird durch die sich bei der Reaktion zwischen Epoxiden, und im Reaktionssystem gegebenenfalls vorhandenem Wasser bzw. Alkohol entstehende Endstoppung oder alternativ durch die zusätzliche Verwendung von tertiären Aminen, wie Trialkylaminen oder monofunktionellen gegenüber Aminogruppen

reaktive Verbindungen bewirkt.

D.h., die Polyorganosiloxanpolymere können neben den naturgemäß aus der Umsetzung der monomeren Ausgangsmaterialien resultierenden terminalen Gruppen auch aus monofunktionellen Kettenabbruchsmitteln, wie Trialkylaminen etc. und z.B. daraus resultierende Ammonium-, Amino-, Ether- oder Hydroxy-Endgruppen aufweisen. Sämtliche Fälle der Endstoppung sollen von der vorstehend erwähnten Defnition -Q-$R^E$ und/oder -V-$R^E$, worin Q, V und $R^E$ wie oben definiert ist, umfasst sein.

Die erfindungsgemäß als Komponente a1) verwendeten Polysiloxane der allgemeinen Formel (VII) können auch Verzweigungseinheiten $V^3$ enthalten. Dabei handelt es sich um $V^3$ einen drei- oder höherwertigen, geradkettigen, cyclischen oder verzweigten, gesättigten, ungesättigten oder aromatischen Kohlenwasserstoffrest mit bis zu 1000 Kohlenstoffatomen darstellt, der gegebenenfalls eine oder mehrere Gruppen, ausgewählt aus -O-, -CONH-, -CON$R^2$-, worin $R^2$ wie oben definiert ist, -C(O)-, -C(S)-, -$Z^1$-, das wie oben definiert ist, -$Z^2$- das wie oben definiert ist, und $Z^3$, worin $Z^3$ eine drei- oder höherwertige Organopolysiloxaneinheit ist, enthalten kann. Die Verzweigungs-einheit $V^3$ kann silikonfrei sein. Beispiele hiervon schließen ein:

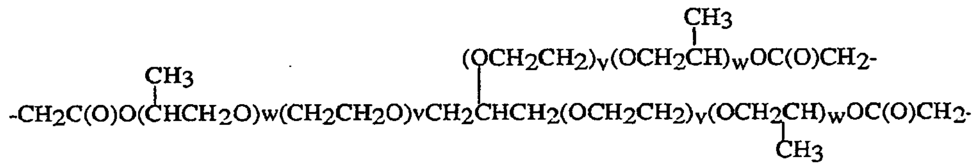

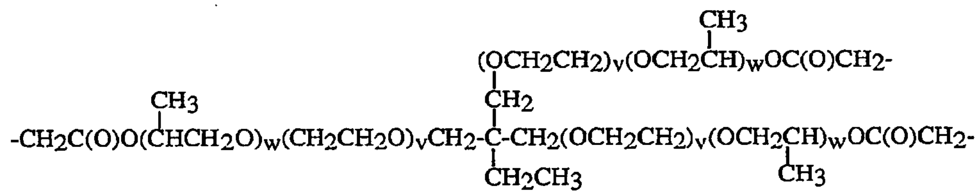

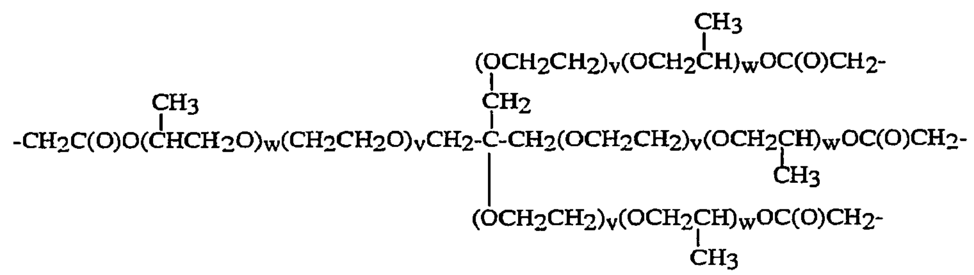

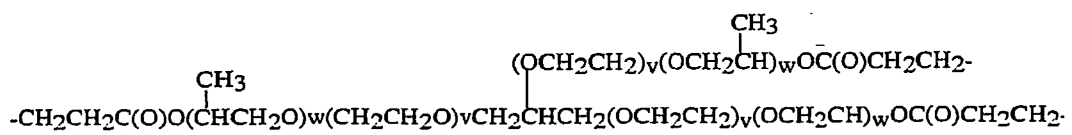

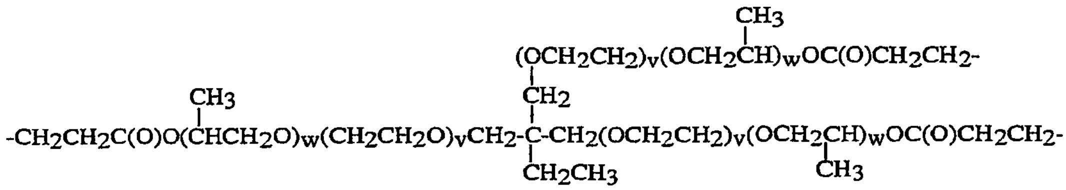

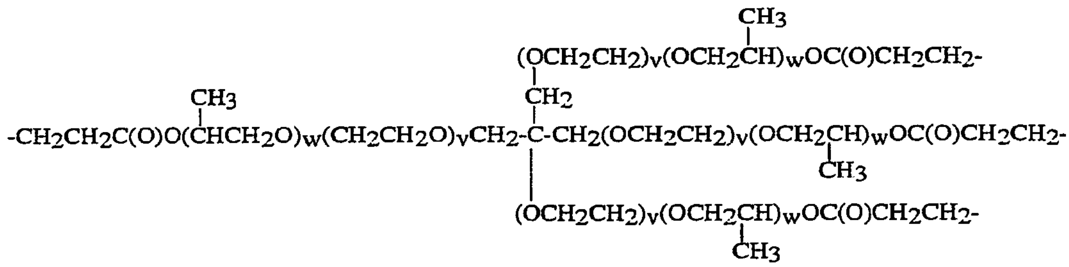

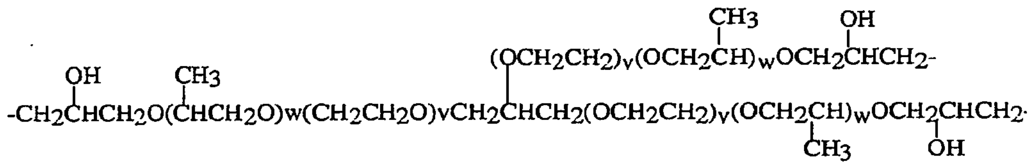

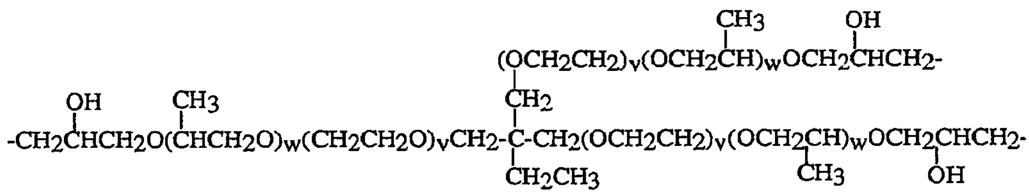

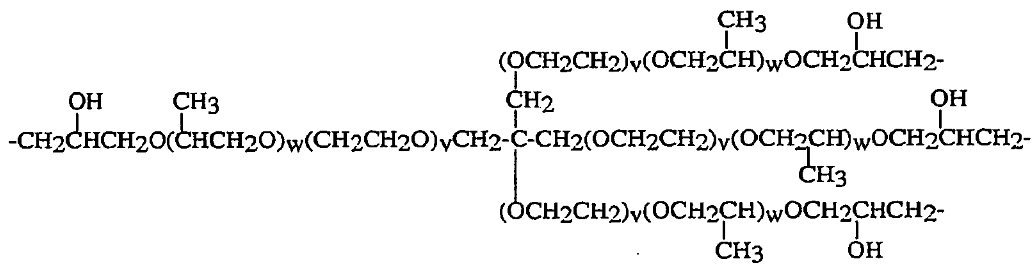

mit v+w ≥ 0.

Die Verzweigungseinheit $V^3$ kann eine drei- oder höherwertige Organopolysiloxaneinheit enthalten, wie zum Beispiel:

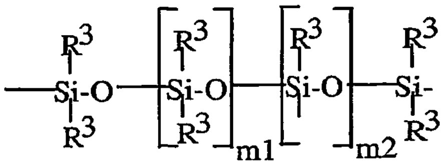

worin $R^3$ wie oben definiert ist, m1 = 0 bis 1000, und m2 ≥ 1,

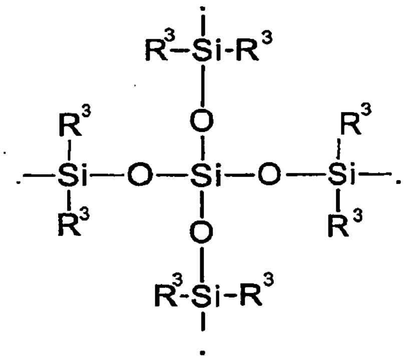

und

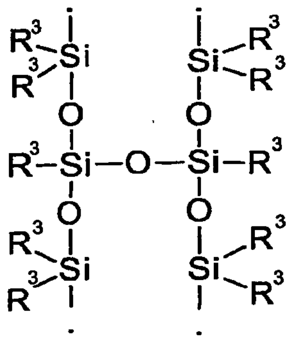

worin $R^3$ jeweils wie oben definiert ist.

Ein Beispiel einer $Z^3$-enthaltenden Verzweigungseinheit $V^3$ ist zum Beispiel:

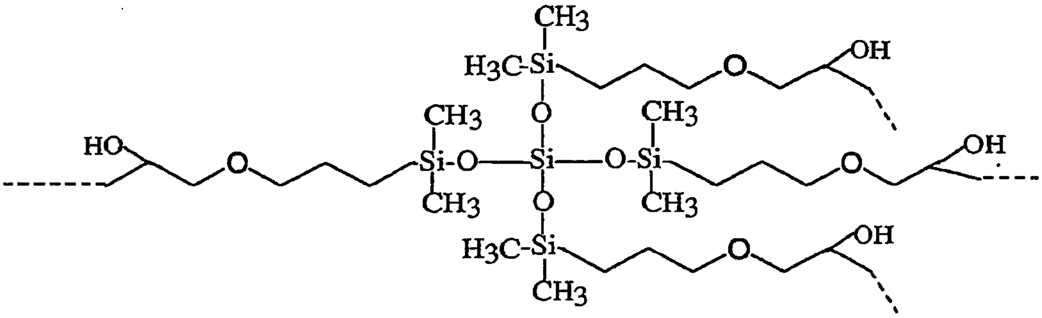

Die verwendeten Polyamino- und/oder Polyammonium-Polysiloxan-Verbindungen a1) können bei 25°C fest oder flüssig sein. Für den Fall, dass sie bei 25°C flüssig sind, liegen die Viskositäten der genannten Polysiloxane a1) bevorzugt zwischen 500 bis 50.000.000 mPa.s bei 25 °C, bevorzugt 1000 bis 2.500.000 mPa.s bei 25 °C und bei einem Schergeschwindigkeitsgefälle von D= 1 $S^{-1}$. Sie können Schmelzpunkte bis 250 °C haben, sind aber wasserlöslich, oder wasserdispergierbar. Ihre Löslichkeit ist bevorzugt mehr als 1 g/l bei 25 °C.

Die vorstehend erwähnten Amino- und/oder Ammonium-Polysiloxan-Verbindungen a1) werden erfindungsgemäß zusammen mit den Amino- und/oder Ammonium-Polysiloxan-Verbindung a2) verwendet. Die Amino- und/oder Ammonium-Polysiloxan-Verbindung a1) können jedoch, und dies liegt im Rahmen der vorliegenden Offenbarung, auch ohne die Amino- und/oder Ammonium-Polysiloxan-Verbindung a2), gegebenenfalls allein oder in Zusammensetzungen mit weiteren Bestandteilen zur Behandlung, insbesondere Oberflächenbehandlung, von Substraten, wie insbesondere Fasersubstraten oder faserartigen Substraten, wie z.B. Papier, Cellulose, Wolle, Haare etc. verwendet werden. Im Rahmen der Erfindung erfolgt jedoch die kombinierte Verwendung der Komponenten a1) und a2).

Die Amino- und/oder Ammonium-Polysiloxan-Verbindung a1) ist bevorzugt eine Copolymer-Verbindung, die in der Polymerhauptkette Amino- und/oder Ammonium-Wiederholungseinheiten und Polysiloxan-Wiederholungseinheiten aufweist. Die Amino-Einheiten enthalten zweckmäßig sekundäre und/oder tertiäre Stickstoffatome (2 oder 3 organische Reste am neutralen Stickstoffatom). Die Ammonium-Einheiten enthalten sekundäre, tertiäre und/oder quartäre positiv geladene Stickstoffatome (2, 3, oder 4 organische Reste am Stickstoff). Als Amino- und/oder Ammonium-Wiederholungseinheiten können auch wie vorstehend erläutert über zwei Stickstoffatome in die Polymerkette eingebundene heterocyclische Reste dienen. In der Amino- und/oder Ammonium-Polysiloxan-Verbindung a1) liegen typischerweise kein freien Trialkylsilyl-endgestoppten Organosiloxanketten vor.

Bei der Komponente a2) handelt es sich bedingt durch die Anbindung der Polydiorganosiloxangruppen-enthaltenden Gruppen $V^{Si2}$ an die Gruppen Q mittels der Strukturelemente der Formelen (II) und (III) im allgemeinen um Polysiloxan-Verbindungen, die in den Seitengruppen der Polyorgano-siloxanhauptkette Amino- und/oder Ammoniumgruppen enthalten. D.h., dass sich die Amino- und/oder Ammoniumgruppen nicht in der Hauptkette aus Polyorganosiloxan-Wiederholungseinheiten befinden.

Der Unterschied zur Komponente a1) kann hinsichtlich der bevorzugten linearen Ausführungsform der Komponente a1) wie folgt veranschaulicht werden:

Lineare Polyamino- und/oder Polyammonium-Polysiloxan-Verbindung a1):

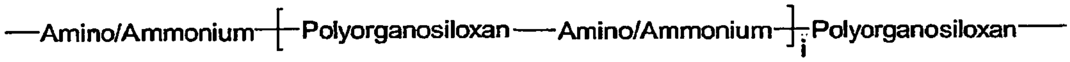


Amino- und/oder Ammonium-Polysiloxan-Verbindung a2):

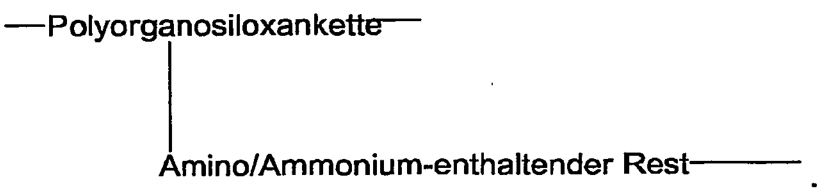


Auch die Polyamino- und/oder Polyammonium-Polysiloxan-Verbindung a1) können prinzipiell Verzweigungen durch die Anwesenheit der Gruppen $V^3$ aufweisen, sie weisen jedoch zwingend das Strukturelement der Formel (I) auf, dass die Komponente a2) nicht aufweist.

Die Komponenten a1) und a2) dienen in der erfindungsgemäßen Zusammensetzung insbesondere aufgrund der Anwesenheit quaternärer, d.h. tetraorgano-substituierter Ammoniumgruppen als Substantivität-gebende Komponente.

Die in der erfindungsgemäßen Zusammensetzung enthaltende Amino- und/oder Ammonium-Polysiloxan-Verbindung a2) enthält mindestens eine Amino- oder Ammoniumgruppe Q und mindestens einen organischen Rest V, mit der Maßgabe, dass mindestens ein organischer Rest V ein eine Polydiorganosiloxangruppe enthaltender organischer Rest $V^{Si2}$ ist, worin die Anbindung der Gruppe Q an die Gruppe $V^{Si2}$ durch das Strukturelement ausgewählt aus den Formeln (II) und (III)

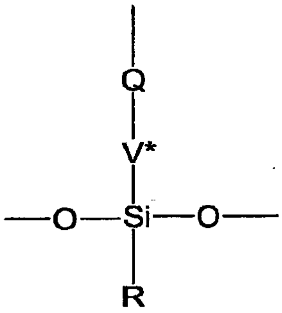

(II)

und

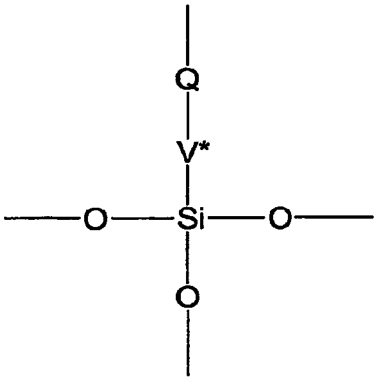

(III)

erfolgt, worin V* jeweils ein zweiwertiger organischer Rest ist, der jeweils über ein Kohlenstoffatom an das Siliziumatom des Organosiloxan-Restes und an das Stickstoffatom der Amino- oder Ammoniumgruppe Q gebunden ist, R ein einwertiger organischer Rest ist,
mit der Maßgabe, dass die Amino- und/oder Ammonium-Polysiloxan-Verbindung a2) kein Strukturelement der Formel (I) aufweist, und mit der Maßgabe, dass die Gruppe Q nicht an ein Carbonylkohlenstoffatom bindet.

Bevorzugt erfolgt die Anbindung der Gruppe Q an die Gruppe $V^{Si2}$ durch das Strukturelement ausgewählt aus den Formeln (IIa) und (IIIa)

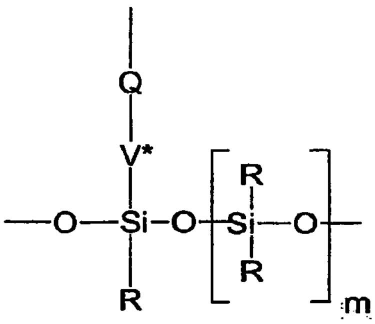

(IIa)

und

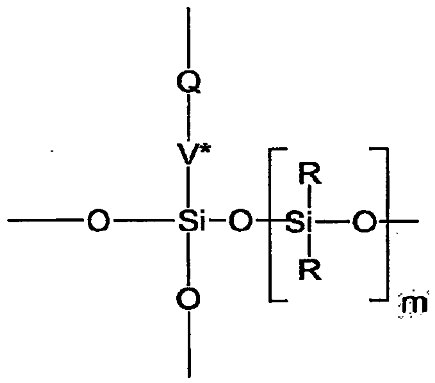

(IIIa)

worin V* jeweils ein zweiwertiger organischer Rest ist, der jeweils über ein Kohlenstoffatom an das Siliziumatom des Organosiloxan-Restes und an das Stickstoffatom der Amino- oder Ammoniumgruppe Q gebunden ist, R ein einwertiger organischer Rest ist, und m jeweils den mittleren Polymerisationsgrad darstellt und jeweils von 0 bis 2000 ist.

Hinsichtlich der bevorzugten Bedeutungen von Q, R, V* kann auf die vorstehenden Erläuterungen zur Komponente a1) verwiesen werden.

Als Komponente a2) können ein oder mehrere eine Amino- und/oder Ammonium-Polysiloxan-Verbindungen a2) verwendet werden. Diese enthalten wir vorstehend dargelegt, Amino- oder Ammoniumgruppen, die mittels der Strukturelemente der Formeln (II) und (III) bzw. bevorzugt (IIa) und (IIIa) als Seitengruppen der Polydiorganosiloxanketten vorliegen. Bevorzugt handelt es sich bei den Amino- und/oder Ammonium-Polysiloxan-Verbindungen a2) um in den Seitengruppen primäre und/oder sekundäre und/oder tertiäre Aminogruppen tragenden Polysiloxane, worin die Aminogruppen gegebenenfalls protoniert bzw. quarterniert sind, und die gegebenenfalls zusätzliche hydrophile Gruppen, wie z.B. Polyethergruppen,enthalten können. Die genannten Amino- bzw. Ammoniumgruppen sind über Kohlenstoff an das Silizium des Siloxangerüst gebunden. Die genannten Amino- und/oder Ammonium-Polysiloxan-Verbindungen a2) sind bevorzugt Polyalkylsiloxane mit Aminoalkyl- oder Aminoarylsiloxaneinheiten. Die Aminoalkyleinheiten können sowohl an die difunktionellen, trifunktionellen oder den monofunktionellen Endgruppen gebunden sein sowie Bestandteil anderer sauerstoffhaltiger Seitengruppen, insbesondere von Polyetherseitengruppen sein.

Bei den gegebenenfalls vorhandenen zusätzlichen hydrophilierenden Gruppen handelt es sich bevorzugt um solche, die sich von Polyalkylenoxiden und Sacchariden abgeleiten.

Bei den genannten Aminopolysiloxanen handelt es sich um lineare oder verzweigte Polysiloxane, die aus Siloxy-Einheiten aufgebaut sind, die aus der Gruppe ausgewählt werden, die besteht aus:

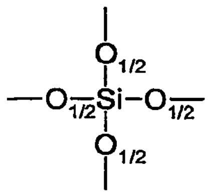

(Q)

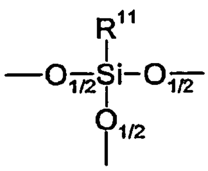

(T)

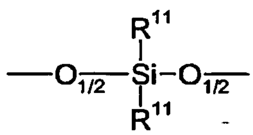

(D)

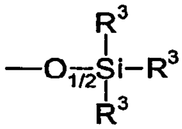

(M)

worin $R^{11}$ organische Reste darstellt, und $R^3$ wie oben definiert ist, die jeweils gleich oder verschieden voneinander sein können, mit der Maßgabe, dass mindestens einer der Reste $R^{11}$ mindestens ein Stickstoffatom enthält.

Bevorzugt werden die Substituenten $R^{11}$ aus der Gruppe ausgewählt, die besteht aus:

- geradkettigen, cyclischen oder verzweigten, gesättigten, ungesättigten oder aromatischen Kohlenwasserstoffrest mit bis zu 200 Kohlenstoffatomen, der gegebenenfalls eine oder mehrere Gruppen, ausgewählt aus -O-, $-NR^2-$, worin $R^2$ wie oben definiert ist,

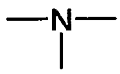

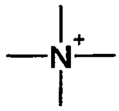

-C(O)- und -C(S)- enthalten kann,
und der Rest gegebenenfalls durch eine oder mehrere Substituenten ausgewählt aus Hydroxy, Alkylsulfat, Dialkylphosphonat, Dialkylphosphat, und

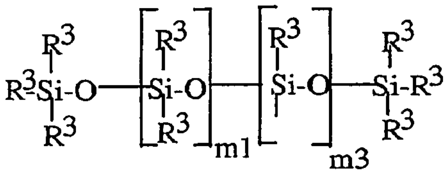 ,

worin $R^1$ und m1wie oben definiert sind
und m3 ≥ 1, substituiert sein kann,

- Hydroxyl,
- einem Polyetherrest mit bis zu 20000 Kohlenstoffatomen, der gegebenenfalls eine oder mehrere Amino-, Mono- oder Dialkylamino-, Arylamino-, Alkylsulfat-, Dialkylphosphonat-, Dialkylphosphat-Gruppen, tragen kann,
- einem Saccharid-haltigem organischen Rest,
- oder zwei Substituenten $R^{11}$ aus verschiedenen Siloxyeinheiten bilden gemeinsam einen geradkettigen, verzweigten oder cyclischen Alkandiylrest mit 2 bis 12 Kohlenstoffatomen zwischen zwei Siliziumatomen,mit der Maßgabe, dass mindestens ein Substituent $R^{11}$ je Molekül Stickstoff enthält, d.h einen stickstoffhaltigen Rest $R^{11}$ darstellt. Dabei muß es sich um mindestens ein quaternisierbares Stickstoffatom im Unterschied zu beispielsweise einem amidischen Stickstoffatom handeln. Bevorzugt steht $R^{11}$ für Alkyl, insbesondere Methyl.

Bevorzugte Reste $R^{11}$, die Stickstoff aufweisen, sind zum Beispiel:

$-CH_2CH_2CH_2NH_2$ $-CH_2CH_2CH_2NHCH_2CH_2NH_2$ 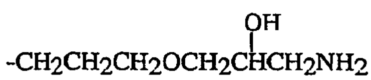

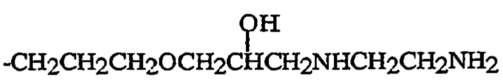 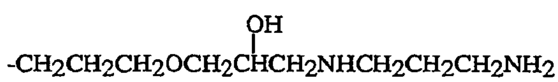

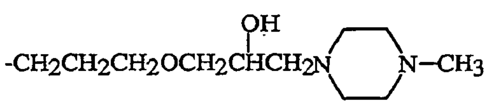 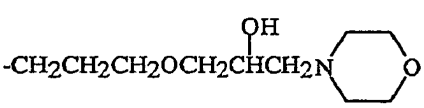

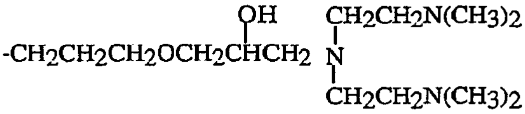

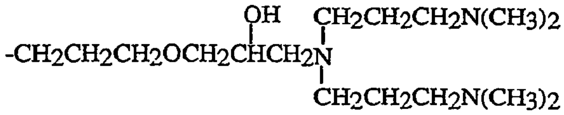

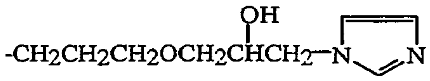

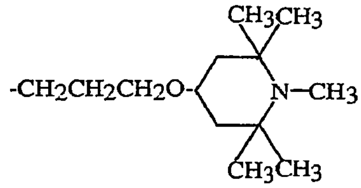

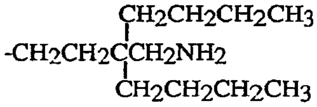

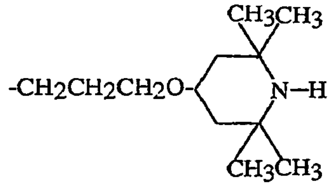

Weitere bevorzugte Amino- bzw. Ammoniumhaltige Reste $R^{11}$ sind z.B.:

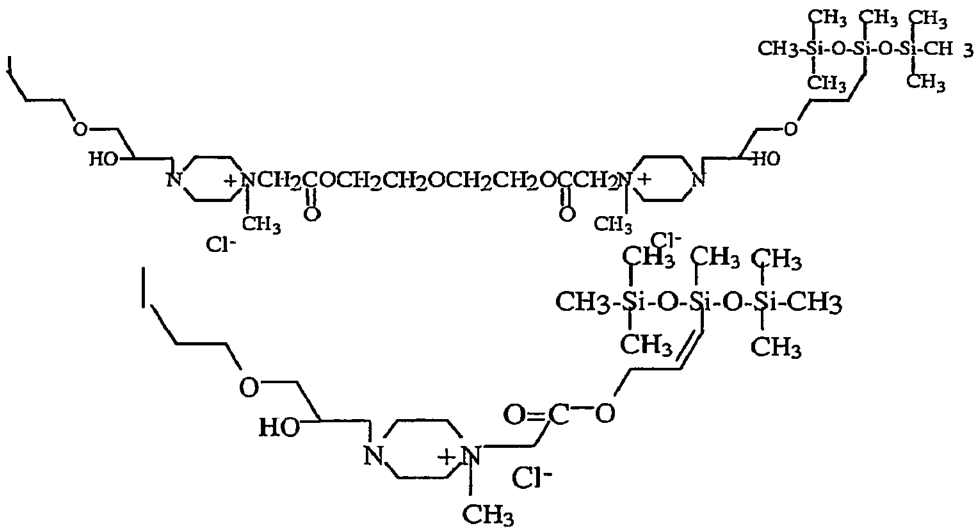

Entsprechende Aminopolysiloxane mit derartigen Resten $R^{11}$ sind offenbart in der WO 02/10256, deren Offenbarungsgehalt zur vorliegenden Anmeldung gehört.

Bevorzugt ist der stickstoffhaltige Rest $R^{11}$ Aminopropyl oder Aminoethylaminopropyl. Weitere bevorzugte stickstoffhaltige Rest $R^{11}$ werden aus der Umsetzung von Glycidyloxypropylsiloxanen mit Mono- oder Dialkylaminen gebildet. Bevorzugte Verbindungen als Komponente a2) sind daher z.B. Aminopolysiloxane, die aus der Umsetzung von Epoxyalkylsiloxanen mit Ammoniak, primären oder sekundären Aminen hervorgehen, wie die genannten aus der Umsetzung von Glycidyloxypropylsiloxanen mit Mono- oder Dialkylaminen erhaltenen. Bevorzugte Alkoxyreste für $R^{11}$ sind Methoxy, Ethoxy, Propoxy, Isopropoxy, Butoxy, Hexyloxy und Cyclohexyloxy.

Bevorzugte Polyetherreste mit bis zu 20000 Kohlenstoffatomen, die gegebenenfalls eine oder mehrere Amino-, Mono- oder Dialkylamino- oder Arylamino-Gruppen tragen können, für $R^{11}$ schließen beispielsweise ein:

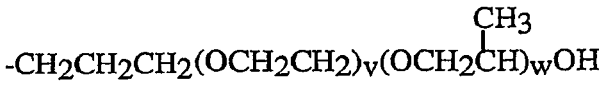

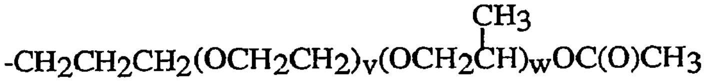

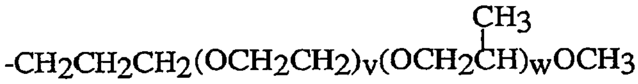

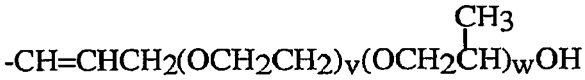

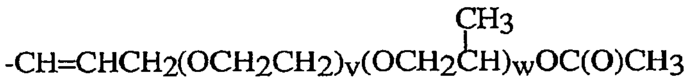

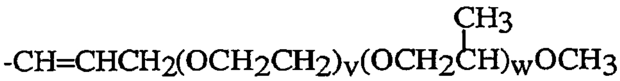

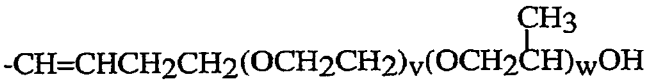

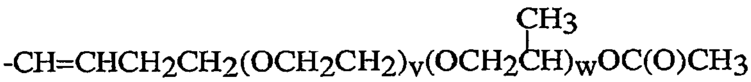

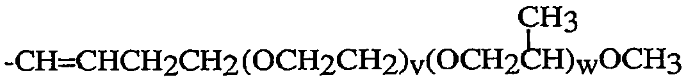

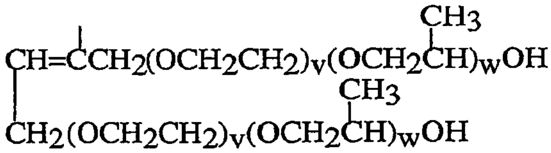

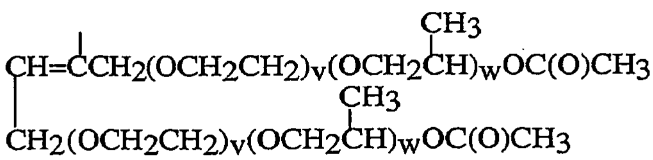

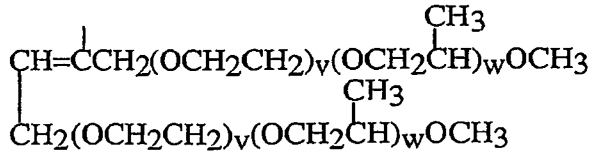

mit v+w ≥ 1.

Saccharidhaltige organische Reste für $R^{11}$ sind zum Beispiel:

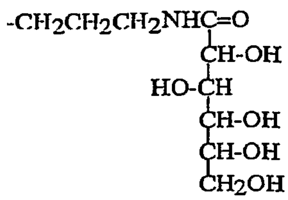

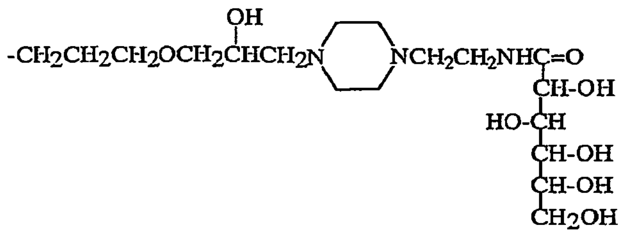

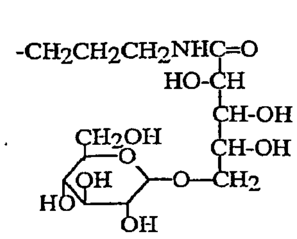

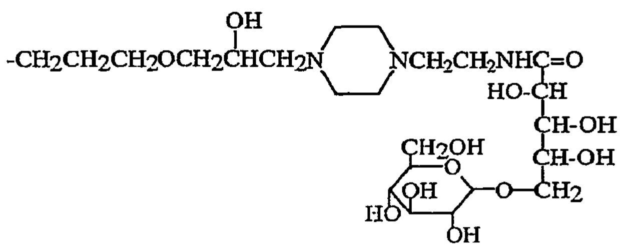

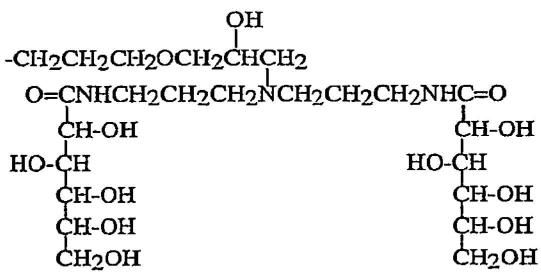

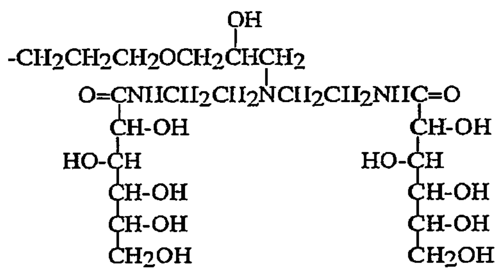

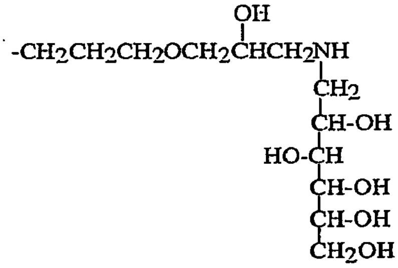

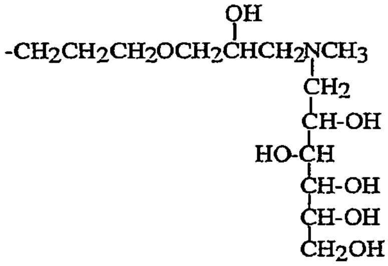

Die Herstellung solcher Saccharid-haltiger Polysiloxane findet sich z.B. in DE 4 318 536, DE 4 318 537.

Der mittlere Polymerisationsgrad des Polysiloxanteils der erfindungsgemäß verwendeten Aminopolysiloxane a2), der sich aus Mn ergibt, liegt zweckmäßig bei 1 bis 3000, bevorzugt bei 200 bis 1000.

Das Verhältnis der stickstofffreien Polyorganosiloxan-Einheiten zu den stickstoffhaltigen Polyorganosiloxan-Einheiten in den erfindungsgemäß verwendeten Aminopolysiloxane a2) beträgt zweckmäßig von 1 : 1 bis 500 : 1.

Das Verhältnis der polyether- oder saccharid-haltigen Polyorganosiloxan-Einheiten zu den übrigen Polyorganosiloxan-Einheiten kann von 0 bis 1 betragen.

Der typische Stickstoffgehalt der erfindungsgemäß verwendeten Aminopolysiloxane a2) liegt zum Beispiel zwischen 0,005 Gew.-% bis 18 Gew.-%, bevorzugt 0,02 Gew.-% bis 5 Gew.-%, besonders bevorzugt 0,02 Gew.-% bis 1,5 Gew.-%. Durch Begrenzung des Stickstoffgehaltes und/oder durch Erhöhung der Siloxankettenlänge wird die Hydrophilie vorzugsweise geringer eingestellt als die der Komponente a1). Diese Maßnahme ist auch kostenbegrenzend für a2).

Die verwendeten Aminopolysiloxane a2) können bei 25 °C fest oder flüssig sein. Für den Fall, dass sie bei 25 °C flüssig sind, liegen die Viskositäten der erfindungsgemäß verwendeten Aminopolysiloxane a2) bevorzugt zwischen 500 bis 500.000 mPa.s bei 25 °C, bevorzugt 1000 bis 25000 mPa.s bei 25 °C und bei einem Schergeschwindigkeitsgefälle von D= 1 $s^{-1}$.

Sie können Schmelzpunkte bis 250 °C haben, sind aber wasserlöslich, oder wasserdispergierbar. Ihre Löslichkeit ist bevorzugt mehr als 1 g/L bei 25 °C.

Die vorstehend beschriebenen erfindungsgemäß verwendeten Aminopolysiloxane a2) sind zum Beispiel als Wacker Finish® WR 1100 und General Electric® SF 1923 erhältlich.

Amino- und/oder Ammonium-Polysiloxan-Verbindungen, die erfindungsgemäß als Komponente a2) verwendet werden können, sind beispielsweise auch beschrieben in den Patenten US 5098979, US 6030675, US 6054020, US 6136215, US 6432270, US 6511580 u.a.

Die Aminogruppen in den Amino- und/oder Ammonium-Polysiloxan-Verbindungen a1) und a2) können protoniert vorliegen, d.h. die Amino- und/oder Ammonium-Polysiloxan-Verbindungen a1) und a2) liegen als Säureadditionssalze vor. Die aus den Ammoniumgruppen resultierenden positiven Ladungen in den Amino- und/oder Ammonium-Polysiloxan-Verbindungen a1) und a2) sind durch organische oder anorganische Säureanionen neutralisiert. Als die aus den Ammoniumgruppen resultierenden positiven Ladungen neutralisierende Anionen können beispielsweise vorhanden sein: Halogenidionen, speziell Chlorid und Bromid, Alkylsulfate, speziell Methosulfat, Carboxylate, speziell Acetat, Propionat, Octanoat, Decanoat, Dodecanoat, Tetradecanoat, Hexadecanoat, Octadecanoat, Oleat, Sulfonate, speziell Toluensulfonat. Als nicht neutralisierendes Anion für die quaternierten Verbindungen kommt auch das $OH^-$-Anion in Betracht. Durch Ionenaustausch können auch andere Anionen eingeführt werden. Zu nennen sind beispielsweise organische Anionen, wie Polyethercarboxylate und Polyethersulfate.

Bei der wahlweise eingesetzten Komponente b), den silikonfreien Tensiden b) handelt es sich um ein oder mehrere silikonfreie, bevorzugt kationische oder nichtinonische Tenside. Bei den bevorzugten kationischen Tensiden handelt es sich um mindestens einen Bestandteil, der aus nicht-polymerisierten, organischen, quaternären Ammonium-Verbindungen ausgewählt wird. Bevorzugt handelt es sich um kohlenwasserstoffgruppenhaltige quaternäre Ammoniumsalzen oder Aminsalze, wobei die Kohlenwasserstoffgruppen bevorzugt 8 bis 28 Kohlenstoffatome enthalten können.

Beispiele der Komponente c) sind Verbindungen der folgenden Formel:

$$R^{12}R^{13}R^{14}R^{15}N^+X^-,$$

worin $R^{12}$, $R^{13}$, $R^{14}$ und $R^{15}$ unabhängig voneinander ausgewählt werden aus der Gruppe, die besteht aus: $C_1$-$C_{28}$ Alkyl, Alkenyl, Hydroxyalkyl, Benzyl, Alkylbenzyl, Alkenylbenzyl, Benzylalkyl und Benzylalkenyl, und X ein Anion ist. Die Kohlenwasserstoffgruppen $R^{12}$, $R^{13}$, $R^{14}$ und $R^{15}$ können unabhängig voneinander polyalkoxyliert, bevorzugt polyethoxyliert oder polypropoxyliert sein, bevorzugter mit Gruppen der allgemeinen Formel $(C_2H_4O)_yH$ worin y =1 bis 15, bevorzugt 2 bis 5. Nicht mehr als eine der Gruppen $R^{12}$, $R^{13}$, $R^{14}$ und $R^{15}$ sollte Benzyl sein. Die Gruppen $R^{12}$, $R^{13}$, $R^{14}$ und $R^{15}$ können unabhängig voneinander eine oder mehrere, bevorzugt zwei Ester- (-[-O-C(O)-]; [-C(O)-O-]) und/oder Amido-gruppen (-[CO-N($R^{12}$)-]; [-N($R^{12}$)-CO-]) worin $R^{12}$ wie oben definiert ist, enthalten. Das Anion X kann ausgewählt werden aus Halogeniden, Methosulfate, Acetat und Phosphat, bevorzugt aus Halogeniden und Methosulfat. Weitere Beispiele der Komponente b) sind tetraorganosubstituierte quaternäre Ammoniumverbindungen mit einem oder zwei langkettigen C8 bis C28 Kohlenwasserstoffresten und zwei oder drei kurzkettigen C1 bis C6 Kohlenwasserstoffresten. Bevorzugt stehen für die langkettigen Reste C12 bis C20 Ketten und für die kurzkettigen Reste Methyl, Ethyl, Propyl, Butyl, Hexyl, Phenyl und Hydroxyethyl, 2-Hydroxypropyl. Bevorzugte Gegenionen sind $Cl^-$, $Br^-$, $CH_3OSO_3^-$, $C_2H_5OSO_3^-$, $NO_3^-$, $HCOO^-$ und $CH_3COO^-$. Beispielhaft seien genannt:

Dodecyl-ethyl-dimethyl-ammonium bromid
Didodecyl-dimethyl-ammonium bromid.

In den kationischen Tensiden, die nur eine langkettige Kohlenwasserstoffgruppe $R^{12}$ enthalten, ist die Kettenlänge der langkettigen Kohlenwasserstoffgruppe bevorzugt 12 bis 15 Kohlenstoffatome, und die kurzkettigen Reste $R^{13}$, $R^{14}$ und $R^{15}$ sind bevorzugt Methyl und Hydroxyethyl.

In den kationischen Tensiden, die zwei, drei oder gar vier langkettige Kohlenwasserstoffgruppen enthalten, ist die Kettenlänge der langkettigen Kohlenwasserstoffgruppen bevorzugt von 12 bis 28 Kohlenstoffatome.

Bevorzugte Ester-enthaltende Tenside weisen die Formel auf:

$$\{(R^{16})_2N[(CH_2)_zER^{17}]_2\}^+X^-$$

worin $R^{16}$ unabhängig aus $C_{1-4}$ Alkyl, Hydroxyalkyl oder $C_{2-4}$ Alkenyl ausgewählt wird; und worin $R^{17}$ unabhängig aus $C_{8-28}$ Alkyl- oder Alkenylgruppen ausgewählt wird; E eine Estergruppe d.h., -OC(O)- oder -C(O)O-, z eine ganze Zahl von 0 bis 8 ist, und X- wie oben definiert ist. Sie enthalten zwei oder drei kurzkettige C1 bis C6 Kohlenwasserstoffreste. Die ein oder zwei langen Alkylreste pro Molekül leiten sich von Fettsäuren der Längen C8 bis C26, bevorzugt C10 bis C20, speziell C12 bis C18, ab. Bei den Fettsäuren bzw. den Schnitten der genannten Kettenlängenbereiche kann es sich um gesättigte Fettsäuren, ungesättigte Fettsäuren, hydroxysubstituierte Fettsäuren oder deren Mischungen handeln. Beispiele für die genannten Säuren sind Laurinsäure, Myristinsäure, Palmitinsäure, Stearinsäure, Ölsäure und Rhicinolsäure. Weitere Beispiele sind Talgfettsäure- und Cocosfettsäureschnitte. Deren Anbindung an den quaternierten Stickstoff erfolgt bevorzugt über Oxyethyl, 2-Oxypropyl- oder 1,2-Dioxypropyl- oder Oligooxyethylenspacer. Bevorzugt stehen für die kurzkettigen Reste Methyl, Ethyl, Propyl, Butyl, Hexyl, Phenyl und Hydroxyethyl, 2-Hydroxypropyl. Bevorzugte Gegenionen sind $Cl^-$, $Br^-$, $CH_3OSO_3^-$, $C_2H_5OSO_3^-$, $NO_3^-$, $HCOO^-$ und $CH_3COO^-$.

Beispielhaft seien genannt
(Talgfettsäureoxyethyl)-trimethyl-ammonium methosulfat
(Cocosfettsäurepentaethoxy)-trimethyl-ammonium methosulfat
Di(talgfettsäureoxyethyl)-dimethyl-ammonium chlorid
Di(talgfettsäureoxyethyl)-hydroxyethyl-methyl-ammonium methosulfat
Di(talgfettsäure-2-oxypropylrdimethyl-ammonium methosulfat
1,2-Ditalgfettsäureoxy-3-trimethyl-propan-ammonium chlorid

Ein weiterer Typ bevorzugter esterhaltiger kationischer Tenside kann durch die folgende Formel dargestellt werden:

$\{(R^{16})_3N(CH_2)_zCH\ [O(O)CHR^{17}]\ [CH_2O(O)CR^{17}]\}^+X^-$, worin $R^{16}$, $R^{17}$, X, und z wie oben definiert sind.

Eine weitere Gruppe der kationischen Tenside c) sind solche der Formel $R^{18}A(CH_2)_{2-4}NR^{19}R^{20}$ worin $R^{18}$ $C_6$-$C_{12}$ Alkyl ist;

A ist eine zweiwertige Gruppe, die aus -NH-, -CONH-, -COO- oder -O- ausgewählt wird, oder A kann abwesend sein; $R^{19}$ and $R^{20}$ werden unabhängig ausgewählt aus der Gruppe, die besteht aus H, $C_1$-$C_{14}$ Alkyl oder ($CH_2$-$CH_2$-O ($R^{21}$)) worin $R^{21}$ H oder Methyl ist.

Besonders bevorzugte Tenside dieses Typs sind Decylamin, Dodecylamin, $C_8$-$C_{12}$ Bis(hydroxyethyl)amin, $C_8$-$C_{12}$ Bis(hydroxypropyl)amin, $C_8$-$C_{12}$ Amidopropyldimethylamin bzw. deren Salze.

Weitere Tenside schließen ein: Fettsäureamide der Formel $R^{22}C(O)N(R^{23})_2$ worin $R^{22}$ eine Alkylgruppe mit 8 bis 28 Kohlenstoffatomen ist und $R^{23}$ jeweils ein kurzkettiger Rest, bevorzugt ausgewählt aus Wasserstoff, $C_1$-$C_6$ Alkyl und Hydroxyalkyl ist. Auch $C_8$-$C_{28}$ N-Alkylpolyhydroxyfettsäureamide können verwendet werden. Typische Beispiele schließen ein: $C_{12}$-$C_{18}$ N-Methylglucamide (siehe WO 92/06154). Andere Zuckerderivate schließen z.B. $C_8$-$C_{28}$ N-(3-Methoxypropyl)glucamid ein. Diese weisen ebenfalls zwei oder drei kurzkettige C1 bis C6 Kohlenwasserstoffreste auf. Die ein oder zwei langen Alkylreste pro Molekül leiten sich von Fettsäuren der Längen C8 bis C26, bevorzugt C10 bis C20, speziell C12 bis C18, ab. Bei den Fettsäuren bzw. den Schnitten der genannten Kettenlängenbereiche kann es sich ebenfalls um gesättigte Fettsäuren, ungesättigte Fettsäuren, hydroxysubstituierte Fettsäuren oder deren Mischungen handeln. Beispiele für die genannten Säuren sind Laurinsäure, Myristinsäure, Palmitinsäure, Stearinsäure, Ölsäure und Rhicinolsäure. Weitere Beispiele sind Talgfettsäure- und Cocosfettsäureschnitte. Deren Anbindung an den quaternierten Stickstoff erfolgt bevorzugt über Amidoethyl und 3-Amidopropylspacer. Bevorzugt stehen für die kurzkettigen Reste Methyl, Ethyl, Propyl, Butyl, Hexyl, Phenyl und Hydroxyethyl, 2-Hydroxypropyl. Alternativ kann es sich auch um cyclische Reste, wie Imidazoliniumreste handeln, in die gegebenenfalls zusätzlich Fettalkylsubstituenten eingebaut sind. Bevorzugte Gegenionen sind $Cl^-$, $Br^-$, $CH_3OSO_3^-$, $C_2H_5OSO_3^-$, $NO_3^-$, $HCOO^-$ und $CH_3COO^-$. Beispielhaft seien genannt:

(Undecylensäureamidopropyl)-trimethyl-ammonium methosulfat
(Rhicinolsäureamidopropyl)-trimethyl-ammonium methosulfat
1-Methyl-1-talgfettsäureamidoethyl-2-talgfettalkyl-imidazolinium methosulfat
1-Methyl-1-oleylamidoethyl-2-oleyl-imidazolinium methosulfat
1,1-Ethylen-bis(1-methyl-2-talgfettalkyl-imidazolinium) methosulfat.

Neben den quaternären Ammoniumverbindungen können auch Aminsalze Verwendung finden. Hierbei handelt es sich um Salze primärer, sekundärer oder tertiärer Amine mit anorganischen oder organischen Säuren.

Der Stickstoff ist in diesen Aminsalzen durch ein oder zwei langkettige C8 bis C28 Kohlenwasserstoffreste, ein bis drei Wasserstoffatome und wahlweise ein oder zwei kurzkettige C1 bis C6 Kohlenwasserstoffreste substituiert. Die ein oder zwei langen Alkylreste pro Molekül leiten sich beispielsweise von Fettaminen oder Fettsäuren der Längen C8 bis C26, bevorzugt C10 bis C20, speziell C12 bis C18, ab. Bevorzugte Gegenionen sind $Cl^-$, $Br^-$, $CH_3OSO_3^-$, $C_2H_5OSO_3^-$, $NO_3^-$, $HCOO^-$ und $CH_3COO^-$.

Die eingesetzten Fettamine können zur Steigerung der Hydrophilie ethoxyliert sein. Ein Beispiel stellt das ethoxylierte Stearylaminderivat $CH_3(CH_2)_{17}N^+H[(CH_2CH_2O)_5H]_2\ Cl^-$ dar.

Bei den Fettsäuren bzw. den Schnitten der genannten Kettenlängenbereiche kann es sich um die bereits beschriebenen gesättigten Fettsäuren, ungesättigten Fettsäuren, hydroxysubstituierten Fettsäuren oder deren Mischungen handeln. Beispiele für die genannten Säuren sind Laurinsäure, Myristinsäure, Palmitinsäure, Stearinsäure, Ölsäure und Rhicinolsäure. Weitere Beispiele sind Talgfettsäure- und Cocosfettsäureschnitte. Deren Anbindung an den Aminsalzstickstoff erfolgt bei Estern bevorzugt über Oxyethyl, 2-Oxypropyl, 1,2-Dioxypropyl- und bei Amiden bevorzugt über Amidoethyl und 3-Amidopropylspacer. Bevorzugt stehen für die kurzkettigen Reste Methyl, Ethyl, Propyl, Butyl, Hexyl, Phenyl und Hydroxyethyl, 2-Hydroxypropyl. Bevorzugte Gegenionen sind $Cl^-$, $Br^-$, $CH_3OSO_3^-$, $C_2H_5OSO_3^-$; $NO_3^-$, $HCOO^-$ und $CH_3COO^-$.
Beispielhaft seien genannt
Stearinsäuretriethanolaminderivat:
$CH_3(CH_2)_{16}C(O)OCH_2CH_2N^+(CH_2CHOH)_2\ Cl^-$
Stearinsäureamidderivat $CH_3(CH_2)_{16}CONHCH_2CH_2N^+H_2CH_2CH_2N^+H_3\ 2Cl^-$
Stearinsäureamidderivat $CH_3(CH_2)_{16}CONHCH_2CH_2N^+H_2CH_2CH_2OH\ Cl^-$
Palmitinsäureamidderivat $CH_3(CH_2)_{14}CONHCH_2CH_2CH_2N^+H(CH_3)_2\ Cl^-$.

Die Menge der wahlweise verwendeten Komponente b) bezogen auf die Gesamtmenge der Formulierung beträgt von 0 bis 30 Gew.-%, bevorzugt 0 bis 10 Gew.-%. Falls die Komponente b) in der Formulierung vorliegt, beträgt die Menge bevorzugt zwischen 0,01 Gew.-% und 15 Gew.-%, bevorzugter 1 bis 10 Gew.-%.

Die Komponente b) in den erfindungsgemäßen Formulierungen besitzt insbesondere die Funktion, die Emulgierbarkeit der Komponente a2) zu verbessern und gegebenenfalls die Substantivität zu erhöhen.

In einer bevorzugten Ausführungsform der Erfindung ist die Polyorganosiloxan-Zusammensetzung, dadurch gekennzeichnet, dass das silikonfreie Tensid als Komponente b), mindestens ein Bestandteil ist, der aus nicht-polymerisierten, organischen, quaternären Ammonium-Verbindungen ausgewählt wird.

In einer anderen bevorzugten Ausführungsform der Erfindung ist die Polyorganosiloxan-Zusammensetzung dadurch gekennzeichnet, dass das silikonfreie Tensid als Komponente b) aus nichtionischen Emulgatoren ausgewählt wird. Beispiele nichtionischer Tenside schließen ein: alkoxylierte Alkohole, Ethylenoxid (EO)-Propylenoxid (PO)-Blockpolymere, Polyhydroxyfettsäureamide, Alkylpolysaccharide und dergleichen. Solche normalerweise flüssigen Tenside schließen bevorzugt diejenigen mit einem HLB im Bereich von 3 bis 20 ein. bevorzugt sind die nichtionischen Tenside Alkohol-alkoxylat-Tenside. Bevorzugt sind auch alkoxylierte Fettalkohole, die etwa 2 bis 20 Ethylenoxideinheiten pro Molekül, bevorzugter etwa 3 bis 15 Ethylenoxideinheiten pro Molekül, enthalten. Beispiele flüssiger Fettalkoholalkoxylate, welche in der nichtwäßrigen, flüssigen Phase der Zusammensetzungen nützlich sind oder als solche verwendbar sind, schließen diejenigen ein, welche aus Alkoholen mit 12 bis 15 Kohlenstoffatomen hergestellt sind und welche etwa 7 Mole Ethylenoxid enthalten. Solche Materialien werden unter den Handelsnamen Neodol 25-7 und Neodol 23-6.5 von der Shell Chemical Company auf den Markt gebracht. Alkoholethoxylate dieses Typs wurden ebenfalls von der Shell Chemical Company unter dem Handelsnamen Dobanol auf den Markt gebracht. Andere Beispiele geeigneter ethoxylierter Alkohole schließen Tergitol 15-S-7 und Tergitol 15S-9 ein, welche beide lineare, sekundäre Alkoholethoxylate sind, die von der Union Carbide Corporation auf den Markt gebracht wurden. Andere Typen von Alkoholethoxylaten, welche in den vorliegenden Zusammensetzungen verwendbar sind, umfassen höhermolekulargewichtige, nichtioni-sche Spezies, wie Neodol 45-11 (Shell Chemical Company). Weitere Alkoholethoxylaten sind Polyoxyethylen(4)laurylether, Polyoxyethylen(5)laurylether, Polyoxyethylen(23)laurylether, Polyoxyethylen(2)cetylether, Polyoxyethylen(10)cetylether, Polyoxyethylen(20)cetylether, Polyoxyethylen(2)stearylether, Polyoxyethylen-(10)stearylether, Polyoxyethylen(20) stearylether, Polyoxyethylen(21)stearylether, Polyoxyethylen(100)stearyl ether, Polyoxyethylen(2)oleylether, und Polyoxyethylen(10)oleylether. Diese sind unter Handelsnamen, wie ALFONIC®, ARLACEL, BRIJ, GENAPOL®, LUTENSOL, NEODOL®, RENEX, SOFTANOL, SURFONIC®, TERGITOL®, TRYCOL, und VOLPO bekannt.

Ein anderer Typ nichtionischer Tenside sind die Ethylenoxid (EO)-Propylenoxid (PO)-Blockpolymeren. Materialien dieses Typs sind gut bekannte nichtionische Tenside, welche unter dem Handelsnamen Pluronic auf den Markt gebracht wurden. Nichtionische EO-PO-Blockpolymere dieses Typs sind bei Davidsohn und Milwidsky, Synthetic Detergents, 7. Auflage, Langman Scientific and Technical (1987), auf den Seiten 34-36 und den Seiten 189-191, und in den US-Patenten 2,674,619 und 2,677,700 ausführlicher beschrieben. Ein anderer möglicher Typ umfaßt Polyhydroxyfettsäureamid-Tenside.

Bevorzugt sind Alkoholethoxylate der RENEX-Reihe®.

Bei der in der erfindungsgemäßen Formulierung verwendeten Komponente d) handelt es sich um eine oder mehrere Trägersubstanzen. Diese werden bevorzugt aus festen Trägersubstanzen e) und/oder flüssigen Trägersubstanzen f) ausgewählt. Dies bedeutet im Rahmen der vorliegenden Erfindung, dass die flüssigen Träger bei 40 °C flüssig sind, die festen Träger bei 40 °C fest sind.

In einer bevorzugten Ausführungsform der Erfindung ist die Polyorganosiloxan-Zusammensetzung dadurch gekennzeichnet, die flüssige Trägersubstanz f) mindestens ein Bestandteil ist, der aus der Gruppe ausgewählt wird, die aus Wasser und wassermischbaren organischen Lösungsmitteln besteht.

In einer weiteren bevorzugten Ausführungsform der Erfindung enthält die Polyorganosiloxan-Zusammensetzung Wasser.

Bevorzugte flüssige Träger f) schließen wässrige und nicht-wässrige ein, und können einschließen: Wasser allein oder organische Lösungsmittel, bevorzugt wasserlösliche organische Lösungsmittel allein und/oder Mischungen davon auch mit Wasser. Bevorzugte organische Lösungsmittel schließen ein: Monoalkohole, Diole, Polyole, wie Glycerin, Glykol, Polyether, wie Polyalkylenglykole, wie Polyethylenglykole und Mischungen davon, auch mit Wasser. Besonders bevorzugt sind Mischungen von Lösungsmitteln, insbesondere Mischungen von niederen aliphatischen Alkoholen, wie Ethanol, Propanol, Butanol, Isopropanol, und/oder Diole, wie 1,2-Propandiol oder 1,3-Propandiol; oder Mischungen davon mit Glycerin. Geeignete Alkohole schließen insbesondere $C_1$-$C_4$ Alkohole ein. Bevorzugt ist 1,2-Propandiol und Wasser.

Der flüssige Träger f) ist zweckmäßig in der erfindungsgemäßen Formulierung, bezogen auf die Gesamtmenge der Formulierung in einer Menge von 0 bis 99,95 Gew.-%, bevorzugt 0 bis 95 Gew.-%, bevorzugter 0 bis 65 Gew.-%, noch bevorzugter 0 bis 55 Gew.-% enthalten. Ist der flüssige Träger f) in der erfindungsgemäßen Formulierung enthalten, so beträgt seine bevorzugte Menge mehr als 5, bevorzugter mehr als 10, am meisten bevorzugt mehr als 30 bis 70, bevorzugter bis 60 Gew.-%.

Der als Komponente e) verwendete feste Träger wird bevorzugt ausgewählt aus Verbindungen, die bei 40°C fest sind. Beispiele der festen Träger schließen ein, wasserlösliche und nicht-wasserlösliche feste Träger, wie zum Beispiel: anorganische oder organische Salze, Polyhydroxyverbindungen, Saccharide, Amide, wie Harnstoff, und höhermolekulare Polyethylenoxide. Bei den festen Trägern e) handelt es sich bevorzugt um Verbindungen, die keine wesentliche grenzflächenaktive Wirkung im Sinne von Tensiden haben. Beispiele für anorganische Salze sind Natriumchlorid, Kaliumchlorid, Natriumcarbonat, Natriumsulfat, Kreide, Magnesiumcarbonat, Kaolin, Bariumsulfat, Zinkoxid. Ein Beispiel für ein organisches Salz ist Natriumacetat. Beispiele für erfindungsgemäß einsetzbare Polyhydroxyverbindungen und Saccharide sind Cellulose, Stärke, Celluloseester, Pentaerythrit, Sorbitol, Glucamin, N-Methylglucamin. Erfindungsgemäß einsetzbare Amidderivate sind beispielsweise Harnstoff und stark hydrophile, saccharidmodifizierte Amidderivate wie Ethylendiaminbisgluconamid, 1,3-Propylendiamin-bisgluconamid, 1,2-Propylendiamin-bisgluconamid Diethyletriamin-bisgluconamid, Dipropylentriam-bisgluconamid, N-Methyl-dipropylentriamin-bisgluconamid, N,N-Dimethyl-ethylendiamin-gluconamid N,N-Dimethyl-propylendiamin-gluconamid. Die letztgenannten saccharidmodifizierten Amidderivate sind durch regioselektive Reaktion der primären Aminogruppen der entsprechenden Amine mit Saccharidcarbonsäurelactonen, wie Gluconsäurelacton oder Glucopyranosylarabinonsäurelacton, zugänglich (DE 4 318 536, DE 4 318 537).

Der feste Träger e) ist zweckmäßig in der erfindungsgemäßen Formulierung, bezogen auf die Gesamtmenge der Formulierung, in einer Menge von 0 bis 99,95 Gew.-%, bevorzugt von 0 bis 95 Gew.-%, bevorzugter 0 bis 65 Gew.-%, noch bevorzugter 0 bis 55 Gew.-% enthalten. Ist der feste Träger e) in der erfindungsgemäßen Formulierung enthalten, so beträgt seine bevorzugte Menge mehr als 5, bevorzugter mehr als 10, bevorzugter bis 60 Gew.-%.

Der feste Träger e) und der flüssige Träger f) können in beliebigen Verhältnissen zueinander vorliegen. Die Wahl des Verhältnisses hängt davon ab, ob flüssige, pastöse oder feste Zusammensetzungen der Formulierung gewünscht werden.

Die erfindungsgemäße Zusammensetzung kann nach Maßgabe der Anwendungsgebiete neben den vorstehend beschriebenen Komponenten a1), a2), b), d) weitere andere Inhaltsstoffe bzw. Hilfsmittel c) enthalten.

Bei wässrigen Anwendungen wie in Waschmitteln, in Pulpen, bei der Textilausrüstung können z.B. sogenannte Builder, Stellmittel, Rheologiemodifizierer, wie z.B. Zeolithe, Silikate, oberflächenreichen Kieselsäuren, Polyphosphate, Alkalimetall-zitrate, 2,2-oxydisuccinate, -carboxymethyloxysuccinate, -nitrilotriacetate, und Natriumcarbonat, Enzyme, Entschäumer, wie Silikonverbindungen, und Stabilisatoren anwesend sein. Die Stabilisatoren dienen beispielsweise der Stabilisierung der Komponenten a) und b) in dem sie deren Koagulation und Sedimentation verhindern. Die Stabilisatoren sind z.B. 'Gums' und andere Polysaccharide, wie zum Beispiel Carrageen Gum, andere Verdickungsmittel oder Rheologieadditive. Bevorzugt ist der Stabilisator eine kristalline hydroxyl-haltige Verbindung, wie Trihydroxystearin, ein hydriertes Öl oder ein Derivat davon.

Weitere Hilfsmittel, die in den erfindungsgemäßen Zusammensetzungen enthalten sein können, sind typische in der Papierherstellung verwendete Hilfsmittel, wie z.B. Nassfestigkeitsharze, Additive zur Unterdrückung der Fusselbildung, Trockenfestigkeitsadditive, Füllstoffe und Klebstoffe, Bindemittel Glättungsmittel etc.

Weitere Hilfsmittel, die insbesondere in Waschmitteln enthalten sein können, sind Kupplungsmittel, wie Hexylamin, Octylamin, Nonylamin, ihre C1-C3 sekundären oder tertiären Analoge und Alkandiole.

Weitere Hilfsmittel, die insbesondere in Waschmitteln enthalten sein können, sind auf den Substraten haftende Duftstoffe, Chelatisierungsmittel, andere oberflächenaktive Stoffe.

Weitere Hilfsmittel sind z.B. Biozide, wie z.B. Ultrafresh®DM25, DM50, UF40, Amical flowable® oder Katon®-Derivate.

Die Erfindung betrifft weiterhin ein Verfahren zur Herstellung der erfindungsgemäßen Polyorganosiloxan-Zusammensetzungen, dass das Mischen der Komponenten a1) und a2) sowie gegebenenfalls der weiteren Komponenten umfasst.

Die Herstellung der erfindungsgemäßen Zusammensetzung kann beispielsweise die Herstellung einer homogenen Grundmischung a1) + a2) und das Einbringen der optionalen Komponenten b) bis d) mit Hilfe von allen bekannten Typen von Mischaggregaten, wie Rührern, Mischdüsen oder jede Form von Knetern oder Mühlen beinhalten.

In einer vorteilhaften Ausführungsform der Erfindung werden zunächst die Komponenten a1) und a2) homogen zu einer Vormischung, gegebenenfalls unter Zusatz von Teilen der Trägersubstanz d) vermischt Homogen bedeutet im Kontext der Erfindung weitgehend gelöst oder aber transparent feinteilig dispergiert. In diese homogene Vormischung kann beispielsweise die optionale Komponente b) nachfolgend eingebracht werden. Dieses Einbringen kann je nach Struktur der Vormischungskomponenten a1) und a2) bzw. der Komponente b) wiederum zu einer homogenen Mischung oder aber einer sichtbar gröber dispersen Verteilung von b) in der Vormischung a1) + a2) führen. In diese Mischung können ja nach Anwendungszweck c) und/oder d) eingebracht werden.

Mit diesen verschiedenen Mischungsstrategien kann Einfluß auf die mikroskopische Verteilung der Komponenten im Gesamtsystem und somit die Produkteigenschaften genommen werden.

Die erfindungsgemäßen Polyorganosiloxan-Zusammensetzungen sind bevorzugt dadurch gekennzeichnet, dass sie bei 40°C flüssig sind, wobei dies die Anwesenheit eines Trägerstoffes nicht voraussetzt.

Eine bevorzugte Polyorganosiloxan-Zusammensetzung besteht aus:

0,05 bis 90 Gew.% der Komponenten a1) und a2),
0 bis 30 Gew. % eines oder mehrerer silikonfreier Tenside b),
Hilfsstoffe c) wie
0 bis 0,5 Gew. % eines oder mehrerer Biozide,
0 bis 10 Gew. % eines oder mehrerer Rheologiemodifizierer
0 bis 5 Gew. % eines oder mehrerer weiterer Hilfsstoffe und
0 bis 99,95 Gew. % eines oder mehrerer Träger d).

Die erfindungsgemäßen Zusammensetzungen werden bevorzugt zur Oberflächenbehandlung von Substraten, insbesondere Fasersubstraten oder faserartigen Substraten verwendet. Besonders bevorzugt werden sie zur Ausrüstung oder Behandlung von natürlichen oder synthetischen Fasern, Haaren, Textilien, Papiervliesen, -pulpen, -geweben, -schichten wie trockenen oder feuchten Toilettenpapieren, Gesichtspapieren, Reinigungstücher, Wischpapieren und Taschentüchem verwendet.

In einer bevorzugten Ausführungsform dient die erfindungsgemäße Zusammensetzung der Beschichtung von Tissue-Papieren, welche auf übliche Weise filzgepreßtes Tissue-Papier, hochbauschiges musterverdichtetes Tissue-Papier und hochbauschiges, unkompaktiertes Tissue-Papier einschließt, jedoch nicht darauf beschränkt ist. Das Tissue-Papier kann von einem homogenen oder mehrschichtigen Aufbau sein; und daraus hergestellte Tissuepapierprodukte können von einem einlagigen oder mehrlagigen Aufbau sein. Das Tissue-Papier hat vorzugsweise ein Flächengewicht zwischen etwa 10 $g/m^2$ und etwa 65 $g/m^2$ sowie eine Dichte von etwa 0,6 $g/cm^3$ oder weniger (Vgl. Spalte 13, Zeilen 61-67 des US-Patentes 5,059.282 (Ampulski et al.) wo beschrieben ist, wie die Dichte von Tissue-Papier gemessen wird. (Wenn nicht anders angegeben, beziehen sich alle Mengen und Gewichte hinsichtlich des Papiers auf eine Trokkenbasis). Ein auf übliche Weise gepreßtes Tissue-Papier und Verfahren zur Herstellung eines solchen Papiers sind in der Fachwelt allgemein bekannt. Ein solches Papier wird in der Regel durch Ablegen eines Papiereintrags auf einem porösen Formungssieb, welches in der Fachwelt oft als ein Fourdrinier-Sieb bezeichnet wird, hergestellt. Sobald der Eintrag auf dem Formungssieb abgelegt ist, wird er als eine Bahn bezeichnet. Die Bahn wird entwässert, indem die Bahn gepreßt und bei erhöhter Temperatur getrocknet wird. Die speziellen Verfahren und die typische Einrichtung zur Herstellung von Bahnen gemäß dem soeben beschriebenen Verfahren sind den Fachleuten auf diesem Gebiet allgemein bekannt. Bei einem typischen Verfahren wird ein Zellstoffeintrag mit niedriger Konsistenz aus einem unter Druck stehenden Stoffauflaufkasten zur Verfügung gestellt. Der Stoffauflaufkasten hat eine Öffnung zur Abgabe eines dünnen Auftrags von Zellstoffeintrag auf das Fourdrinier-Sieb zur Bildung einer nassen Bahn. Die Bahn wird dann in der Regel auf eine Faserkonsistenz zwischen etwa 7 % und etwa 25 % (auf Basis des Ge-wichts der gesamten Bahn) durch Vakuum-Entwässerung entwässert und weiter durch Druckvorgänge getrocknet, bei welchen die Bahn einem Druck ausgesetzt wird, der von einander gegenüberliegenden mechanischen Bauteilen, zum Beispiel zylindrischen Walzen,

entwickelt wird. Die entwässerte Bahn wird dann weiter gepreßt und getrocknet in einer Dampftrommelvorrichtung, die in der Fachwelt als ein Yankee-Trockner bekannt ist. Weitere Einzelheiten sind dem Fachmann auf dem Gebiet der Papierherstellung geläufig.

Die zur Verwendung in der vorliegenden Erfindung vorgesehenen Papierfasern werden normalerweise aus Holzzellstoff stammende Fasern einschließen. Andere Zellstoff-Fasern auf Zellulosebasis, wie etwa Baumwoll-Linters, Bagasse, etc., können ebenso verwendet werden. Synthetische Fasern, wie etwa Rayon-, Polyethylen- und Polypropylenfasern, können in Kombination mit natürlichen Fasern auf Zellulosebasis ebenso verwendet werden. Eine beispielhafte Polyethylenfaser, die verwendet werden kann, ist Pulpex$^R$, erhältlich von Hercules, Inc. (Wilmington, Delaware). Verwendbare Holz-Zellstoffe schließen ein: chemische Zellstoffe, wie etwa Kraft-, Sulfit- und Sulfat-Zellstoffe, sowie mechanische Zellstoffe, die zum Beispiel Holzschliff, thermomechanischen Zellstoff und chemisch modifizierten thermomechanischen Zellstoff umfassen. Chemische Zellstoffe sind jedoch bevorzugt, da sie den daraus hergestellten Tissue-Blättem eine ausgezeichnete fühlbare Weichheit verleihen. Es können Zellstoffe sowohl von Laubbäumen (auch als "Hartholz" bezeichnet) als auch von Nadelbäumen (auch als "Weichholz" bezeichnet) verwendet werden. In der vorliegenden Erfin-dung auch verwendbar sind Fasern, die aus rezykliertem Papier stammen, die einige oder alle der zuvor genannten Kategorien ebenso wie andere nicht-faserige Materialien, wie etwa Füllstoffe und Klebstoffe, die zur Erleichterung der ursprünglichen Papierherstellung verwendet wurden, enthalten können. Zusätzlich zu Pa-pierfasem kann der Papiereintrag, der zur Herstellung der Tissuepapierstrukturen verwendet wird, auch andere Bestandteile oder Materialien hierzu zugesetzt ent-halten, wie sie in der Fachwelt bekannt sind. Die Arten wünschenswerter Additive werden von dem speziellen Endverwendungszweck des in Betracht gezogenen Tissue-Blattes abhängen. Zum Beispiel ist eine hohe Naßfestigkeit bei Produkten, wie etwa Toilettenpapier, Papiertüchem, Kosmetik-Tissue und anderen ähnlichen Produkten, ein wünschenswertes Merkmal. Daher ist es oft wünschenswert, dem Papiereintrag chemische Substanzen zuzusetzen, die in der Fachwelt als "Naßfestigkeits"-Harze bekannt sind, die im Stand der Technik bekannt sind. Zusätzlich zu Naßfestigkeitsadditiven kann es auch wünschenswert sein, zu den Papierfasern bestimmte Trokkenfestigkeitsadditive und Additive zur Kontrolle der Fusselbildung, die in der Fachwelt bekannt sind, zuzusetzen.

Die erfindungsgemäßen Polyorganosiloxan-Zusammensetzungen werden weiterhin bevorzugt als Weichmacher oder Antistatikum für natürliche oder synthetische Fasern oder Papiere, wie Haare, Baumwolle, Synthetikgewebe eingesetzt.

Die erfindungsgemäßen Polyorganosiloxan-Zusammensetzungen werden auf Faser-Substrate bzw. faserartige Substrate bevorzugt in einer Menge von 0,01 Gew.-% bis 10 Gew.-%, bevorzugter 0,2 bis 2 Gew.-% der nichtflüchtigen Bestandteile der erfindungsgemäßen Zusammensetzung bezogen auf das Gewicht des unbehandelten Substrates auf getragen. Die Bestimmung der Auftragsmenge erfolgt, in dem das Gewicht des trocknenen unbehandelten Substrates ermittelt wird. Anschließend wird die erfindungsgemäße Zusammensetzung aufgetragen, und das feuchte behandelte Substrat bei 80° C für 5 Minuten in einem Umluftofen getrocknet. Die Trockenzeit wurde mittels der nur mit Wasser behandelten Papiere überprüft und als ausreichend befunden. Das getrocknete, behandelte Substrat (Erzeugnis) wird gewogen. Die 'nicht-flüchtigen Bestandteile' der Zusammensetzung sind demgemäß die während 5 min bei 80 °C nicht verdampfbaren Anteile der erfindungsgemäßen Formulierung. Den wesentlichen Anteil von bevorzugt mehr als 90 Gew.% der nicht-flüchtigen Bestandteile bilden die Komponenten a) und b).

Die Auftragsmenge der nicht-flüchtigen Bestandteile errechnet sich wie folgt:

Die Differenz zwischen dem Gewicht des unbehandelten, trockenen Substrates und dem Gewicht des getrockneten, behandelten Substrates ist die absolute Auftragsmenge. Die prozentuale Auftragsmenge ist die absolute Auftragsmenge dividiert durch das Gewicht des unbehandelten Papiers multipliziert mit 100.

Die erfindungsgemäße Polyorganosiloxan-Zusammensetzungen kann weiterhin als Reinigungsmittel, Netzmittel, Korrosionsschutzmittel, Grundierung, Haftvermittler, Antibeschlagmittel oder Antistatikum für harte Oberflächen, sowie in Waschmitteln oder als Bügelhilfe verwendet werden.

Die vorliegende Erfindung betrifft weiterhin Erzeugnisse, die mindestens eine erfindungsgemäße Polyorganosiloxan-Zusammensetzung enthalten.

Bevorzugt handelt es sich dabei um mit der erfindungsgemäßen Polyorganosiloxan-Zusammensetzung behandelte Papiererzeugnisse. In diesen Erzeugnissen liegen wie vorstehend bereits erläutert bevorzugt 0,03 Gew.-% bis 30 Gew.-%, bevorzugt 0,3 Gew.-% bis 10 Gew.-%, der nicht-flüchtigen Bestandteile der Zusammensetzung gemäß der Erfindung vor.

Der Anteil der siliconhaltigen Komponenten a1) und a2) auf der Faser ergibt sich einerseits rechnerisch aus dem angewandten Gewichtsverhältnis der Formulierung a) bis d) unter Berücksichtigung der Verdampfbarkeit, andererseits durch Extraktion mit organischen Lösemitteln bevorzugter aber durch Röntgenfluoreszenz-Bestimmung des Siliciumgehaltes und Berechnung des Anteiles von a1) bzw. a2) über entsprechende Vorgabe des Siliciumanteiles in den zugrundeliegenden Strukturen für a1) bzw. a2). Die Röntgenfluoreszenz-Bestimmung kann wie in US 2002-0127412 A1 Abschnitt [0057] vorgenommen werden, in dem man eine Scheibe des Substrates mit definierter Geometrie nach vorhergehender Eichung durchstrahlt.

Die erfindungsgemäßen Zusammensetzungen können dem Papierbrei zugesetzt werden, auf das feuchte

Papier oder auf die fertigen Papierbahnen aufgebracht werden. So können die erfindungsgemäßen Zusammensetzungen auf die Substrate, wie insbesondere Papier, in an sich bekannter Weise, wie durch Aufsprühen, Tauchen, Eintrag in die Papierpulpen, durch Kalandrieren oder Transferdruck, wie z.B. beschrieben in US 5,538,595 aufgetragen werden.

Es wurde überraschenderweise gefunden, dass in der Papierausrüstung und Textilausrüstung die Hydrophobie des ausgerüsteten Substrates erheblich vermindert wird und gleichzeitig ein überlegener Weichgriff vermittelt wird. Weiterhin wurde überraschend gefunden, dass durch die erfindungsgemäßen Zusammensetzungen eine überlegene Weichheit in Verbindung mit erhöhter Hydrophilie in der Faserausrüstung auch in Anwesenheit größerer Anteile von a2) erreicht wird. Hierbei besteht überraschende ein weiter Bereich des anwend-baren Mischungsverhältnisses zwischen der Komponente a1) und a2) von bis zu 90 Gew.-% Anteil von a2), bevorzugt bis 70 Gew.%, in dem eine erhöhte Hydrophilie bei konstanter bzw. erhöhter Weichheit erhalten bleibt (Hydro-philie bzw. Hydrophobie bedeutet im Sinne der Erfindung die Bewertung nach der Methode der Tropfen-Einsink-Zeit, und Weichheit meint den sogenannten Griff, bewertet durch ein Testkollektiv.(wie im Beispielteil beschrieben)). Überraschenderweise gibt es eng umgrenzte Mischungsverhältnisse, in denen besonders bevorzugte Eigenschaftsverhältnisse angetroffen werden. Ein besonders bervorzugter Bereich ist deshalb ein Mischungsverhältnis von 50 Gew.% a1) und 50 Gew.% a2).

Eine Optimierung der gewünschten Eigenschaften der erfindungsgemäßen Zusammensetzungen für ein gegebenes Substrate, hinsichtlich Weichheit (Griff), Hydrophilie und Substantivität kann insbesondere durch Optimierung von Art und molaren Anteile von hydrophilen, quarternären Gruppen und Organopolysiloxanblöcken der Komponente a1) und/oder a2) sowie durch Optimierung des Mischungsverhältnisses bei gegebener Struktur der Komponenten a1) und a2) erfolgen. Bevorzugt ist es, den Anteil der Komponente a1) aus Kostengründen so niedrig wie möglich einzustellen.

Beispiele:

Erfindungsgemäße, wässrige und lösemittelhaltige Zusammensetzungen sind in den folgenden Beispielen beschrieben.

Die Bewertung der erfindungsgemäßen Zusammensetzungen erfolgte mittels folgender Testverfahren.

Papier und Textilbewertung:

Die erfindungsgemäßen Silicone-Zusammensetzungen wurden in Form von Emulsionen unter Verwendung von unbehandelten, siliconefreien Gesichtstüchem der Firma Metsä Tissue Corp. Finnland bewertetet. Die Papiere hatten eine Abmessung von 29 cm x 20,5 cm und einem mittleren Papiergewicht von 31,96 g/m$^2$. Zum Auftrag der Emulsion (Ausrüstung) hinterlegte man das Papier mit einem weiteren Blatt dieses Papiertyps und spannte beide glatt auf ein grobmaschiges Metallnetz.

Die Formulierungen gemäß Beispiel 8 bis 20 wurden mit deionisiertem Wasser auf 2 Gew.-% Gehalt siliconehaltigem Wirkstoff (berechnet auf Basis der Menge der Summe aus den Komponenten a1), a2) oder a1)+a2) bzw. allgemein Summe X1) bis X3) der Tab. 2 einschließlich der Vergleichsbeispiele) verdünnt und mittels einer Sprühpistole gleichmäßig aufgetragen. Die Ausrüstung erfolgte mittels Aufsprühen der zu prüfenden Emulsion / Lösung der erfindungsgemäßen Zusam-mensetzung), aus 35 cm Entfernung mit Hilfe einer Düse und Luft bei konstanter Düseneinstellung bis 1 Gew.% einer errechneten Menge der siliconhaltigen Substanzen aus den Beispielen 1 bis 7 und deren Mischungen (d.h. der Summe von X1 bis X3 der Tab. 2) als Auftrag vorlagen. Diese Mengen wurden aus dem Anteil der nichtflüchtigen Bestandteile a) bis d) errechnet. Dazu wurde die Menge der nichtflüchtigen Bestandteile, wie vorher definiert, auf das Papier aufgebracht und wie nachfolgend bestimmt. Die Konzentration der aufgesprühten Emulsion und die Düsen-einstellung wurde über Messreihen so optimiert, dass bei einer Sprühdauer von etwa 15 Sekunden der mengenmäßig gewünschte Auftrag der erfindungsgemäßen nichtflüchtigen Bestandteile mit hoher Reproduzierbarkeit erfolgte, ohne das Papier bzw. Textilgewebe komplett zu durchnässen.

Die folgende Abbildung 1 zeigt den Zusammenhang zwischen Sprühdauer und Auftragsmenge der verwendeten Anordnung. Tabelle 1 zeigt die entsprechen-den zugrundgelegten Messwerte. Abbildung 1 Auftrag nichtflüchtiger Bestandteile in Abhängikeit von Zeit und Abstand des Sprühvorganges

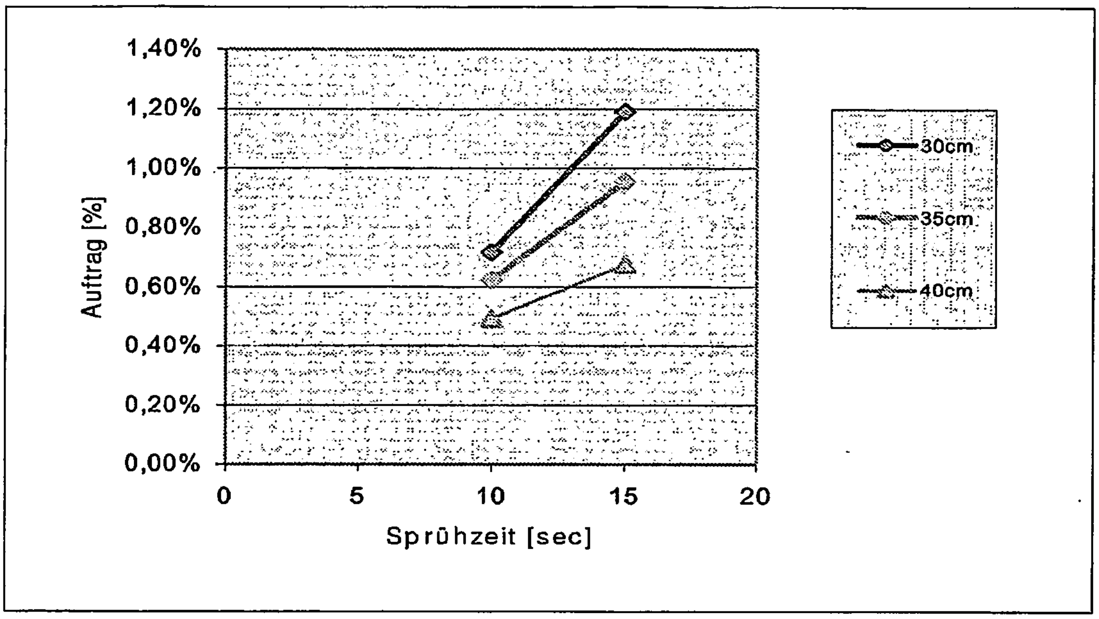


Tabelle 1

| Düsenabstand | 30cm | 35cm | 40cm |
|---|---|---|---|
| | | | |
| Sprühdauer/sek. | Auftragsmence | | |
| 10 | 0,72% | 0,62% | 0,49% |
| 15 | 1,19% | 0,96% | 0,68% |
| Sprühdauer für 1 %-Auftrag | 13,67 | 15,00 | 21,75 |

Zur Ausrüstung wurden die Papiere jeweils 5 Minuten bei 80°C in einem Umluftofen mit Absaugung getrocknet und unmittelbar nach Entnahme aus dem Ofen gewogen (Die Masse wurde aus 4 Einzelwägungen gemittelt). Die Differenz zwischen dem Gewicht des unbehandelten Papiers und dem Gewicht des getrockneten, behandelten Papiers ergibt zunächst die absolute Auftragsmenge der nichtflüchtigen Bestandteile. Die prozentuale Auftragsmenge ist die absolute Auftragsmenge dividiert durch das Gewicht des unbehandelten Papiers multipliziert mit 100.

Die Sprühzeit wurde so gewählt, dass 1 Gew.-% als Summe der Siliconverbindungen X1 bis X3 errechnet aus den nicht-flüchtigen Bestandteile, wie oben erläutert, aufgetragen vorliegt.

Es wurden pro Prüfung jeweils 6 einlagige Papiertücher mit jeweils einer Zusammensetzung ausgerüstet. Davon gingen 5 Tücher zur Bewertung des Griffes bzw. der Weichheit und eines zur Bewertung der Hydrophilie/Hydrophobie. Für den Fühl- bzw. Grifftest eingesetzt wurden die Papierproben ein Mal gefaltet, so dass man ein doppellagiges Papier erhielt.

<u>Textilgewebe</u>

Zur Prüfung von Textilgewebe wurden die erfindungsgemäßen Silicone-Zusammensetzungen in Form von Emulsionen unter Verwendung von unbehandelten, siliconefreien, abgekochten Baumwoll-Single-Jersey-Tüchern (farbfertig (130g/qm) der Firma Göla Werke bewertetet. 30 g Gewebe wurden in einer Flotte mit 0,4 Gew.-% siliconehaltiger Komponenten (bezogen auf die Menge der Komponenten a1) und a2) in der Formulierung) mittels des Foulard Verfahrens ausgerüstet (Lexikon für Textilveredelung, Prof. Dr. rer. nat. Hans-Karl Rouette, Laumann-Verlag Dülmen 1995, Band 1, S. 699-701). Zur Ausrüstung wurde die Verbindung a1) des Herstellungsbeispiels 2 und a2) des Herstellungsbeispiels 5 sowie eine 1:1-Mischung von Emulsionen beider Materialien verwendet. Weichheitsbewertung und Hydrophiliebetrachtung erfolgten analog zu den Papierversuchen.

Hydrophobie bzw. Hydrophilie:

Je ein Papier, wie vorstehend im Abschnitt "Papier und Textilbewertung" beschrieben, wurde einlagig mittels Magneten straff über eine Metallwanne aufgespannt. Ein Wassertropfen wurde aus 1 cm Höhe per Pipette auf das Papier gegeben und der Zeitraum (in Sekunden) vom Auftreffen bis zum Aufsaugen des Tropfens bestimmt. Je länger die Tropfen-Einsinkzeit desto höher die Hydrophobie und je niedriger die Hydrophilie. Der Test wurde pro Blatt Prüfpapier 5 mal an verschiedenen Stellen wiederholt. Der Mittelwert der 5 Einzelbestimmungen wird in Tab. 2 genannt. (Testbeschreibung: Arbeitsgruppe "Textile Vorbehandlung" des Verbandes TEGEWA e.V. : Der TEGEWA-Tropftest- eine Methode zur schnellen Bestimmung der Saugfähigkeit an textilen Flächengebilden; Melliand Textilberichte 68 (1987), 581-583).

Weichheit bzw. Griff:

Hierzu verglich man innerhalb einer Prüfgruppe jeweils eine der, wie vorstehend beschrieben erhaltenen, Papierproben mit jeweils 5 anderen, die mit weiteren Silicone-Zusammensetzungen anderer Beispiele ausgerüstet waren. Auf diese Weise konnten 5 Prüfgruppen-/serien mit je 6 unterschiedlichen Proben jeweils von einer Testperson durch Befühlen mit Fingern und Handfläche hinsichtlich des Griffes bewertet werden. Die Einstufung der einzelnen Papiere erfolgte auf einer Skala von 0 bis 10. Eine Bewertung "0" entspricht dem unbehandeltem Papier, je höher die Zahl, desto besser der Griff bzw. die Weichheit. Die Testgruppe bzw. das Testpanel bestand aus 5 Personen.

Herstellungsbeispiel 1 (Herstellung einer Komponente a1) QP1):

a) 238g (2,24mol) Diethylenglykol werden unter Stickstoff bei Raumtemperatur vorgelegt. Unter intensiver Rührung werden innerhalb einer Stunde 558g (4,93 mol) Chloressigsäurechlorid zugetropft. Während des Zutropfens steigt die Temperatur auf 82 °C an und eine intensive HCl-Entwicklung setzt ein. Nach Beendigung des Zutropfens wird der Ansatz für 30 Minuten auf 130 °C erhitzt. Abschließend werden alle bis 130 °C/20hPa siedenden Bestandteile abdestilliert. Es werden 566g eines hellgelben Öls der Zusammensetzung

$$ClCH_2C(O)OCH_2CH_2OCH_2CH_2OC(O)CH_2Cl$$

erhalten.
Die gaschromatographisch bestimmte Reinheit des Esters beträgt 99,2 %.

$^{13}$C-NMR:

| Substruktur | shift (ppm) |
|---|---|
| $Cl\underline{C}H_2$- | 40,7 |
| $ClCH_2$-$\underline{C}$(O)- | 167,1 |
| $ClCH_2$-C(O)-O$\underline{C}H_2$- | 65,2 |
| $ClCH_2$-C(O)-$OCH_2\underline{C}H_2$- | 68,6 |

b) 104,4 g deionisiertes Wasser, 51,4 g 2-Propanol, 104,4 g (522 mmol) Laurinsäure und 50 g (580 mmol N) N,N,N',N'-Tetramethylhexandiamin werden gemischt und unter Rührung auf 50°C erhitzt. Der klaren Lösung wird eine Mischung aus 721 g (522 mmol Epoxygruppen) eines Epoxysiloxans der Struktur

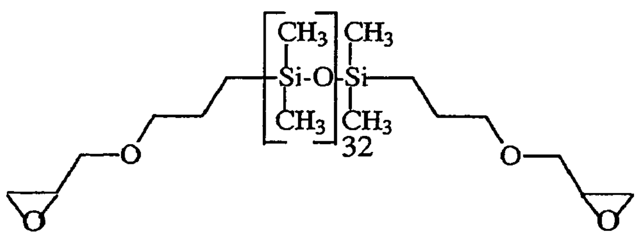

und 7,5 g (58 mmol Cl) des diethylenglycolbasierten Esters gemäß a) zugesetzt. Der Ansatz wird für 6 Stunden auf

Rückflußtemperatur erhitzt. Nach Abkühlung werden 1003 g einer klaren bemsteinfarbenen Lösung erhalten. Das darin befindliche Polymer enthält die folgenden Strukturelemente:

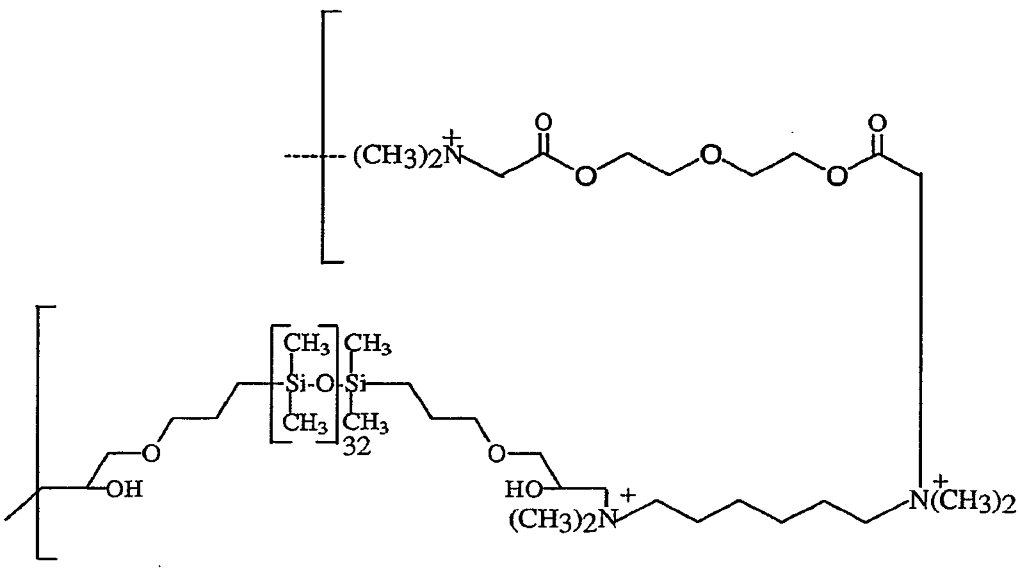

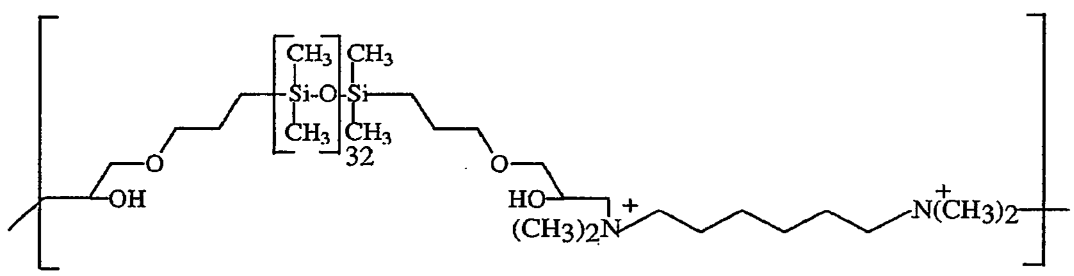

$CH_3(CH_2)_{10}COO^-$ CL-

Herstellungsbeispiel 2 (Herstellung der Komponente a1) QP2):

In einem 1 Liter Dreihalskolben werden 24 g Wasser, 30 ml 2-Propanol, 4,18 g (48 mmol tertiäre Aminogruppen) N,N,N',N'-Tetramethyl-1,6-hexandiamin und 3.8 g (12 mmol primäre Aminogruppen) eines unter dem Handelsnamen Jeffamin® ED 600 erhältlichen Alkylenoxidderivates der Struktur

$$H_2NCH(CH_3)CH_2[OCH_2CH(CH_3)]_a(OCH_2CH_2)_9[OCH_2CH(CH_3)]_bNH_2$$

mit a+b = 3.6

bei Raumtemperatur vorgelegt. Innerhalb von 5 Minuten werden 6,0 g (30 mmol) Dodecansäure in Form einer 50%igen Lösung in 2-Propanol und 1,8 g (30 mmol) Essigsäure zugesetzt. Nach Erwärmung des Ansatzes auf 50 °C werden innerhalb von 30 Minuten 194,1g (60 mmol Epoxygruppen) eines Epoxysiloxans der durchschnittlichen Zusammensetzung

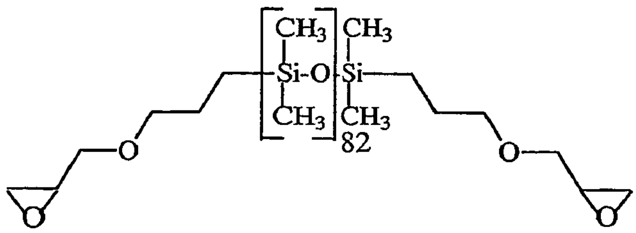

zugetropft. Die gelbe, trübe Mischung wird für 8 Stunden auf Rückflußtemperatur erhitzt. Nach Entfernung aller bis 100 °C/2 mm Hg in Vakuum flüchtigen Bestandteile werden 204 g eines beigen, trüben Materials, welches über folgende Strukturelemente verfügt, erhalten.

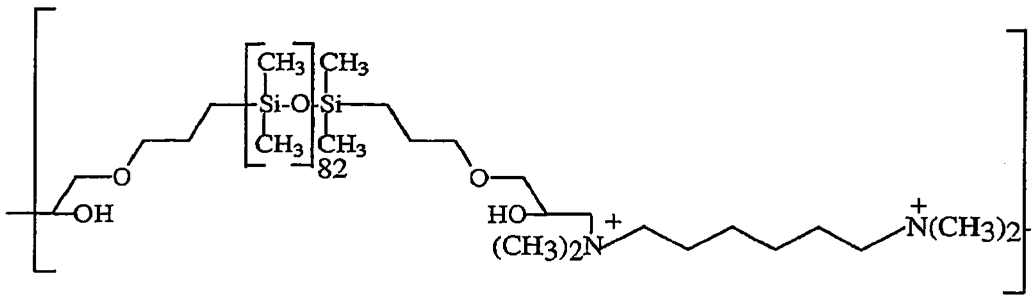

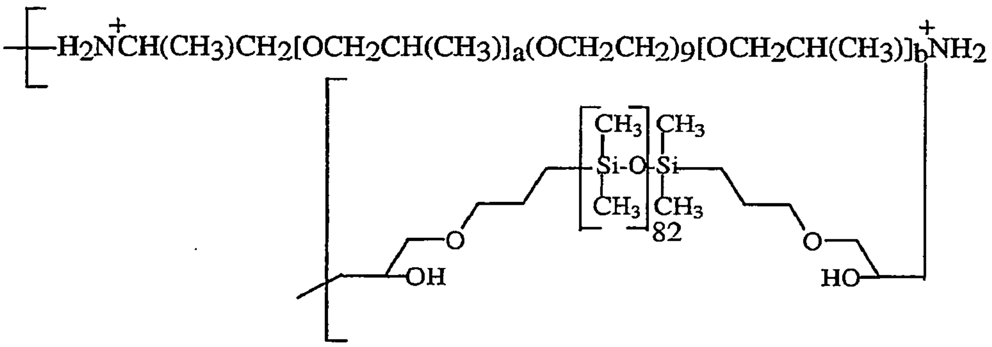

$a + b = 3.6 \quad 2\,CH_3COO^- \quad 2\,CH_3(CH_2)_{10}COO^-$

Herstellungsbeispiel 3 (Herstellung der Komponente a1) QP 3):

12,.5 g deionisiertes Wasser, 87 g 2-Propanol, 1,.02 g (17 mmol) Essigsäure, 3,4 g (17 mmol) Laurinsäure, 2,34 g (27,2 mmol N) N,N,N',N'-Tetramethylhexaridiamin, 1,67 g (5,28 mmol N) eines Amins der Zusammensetzung

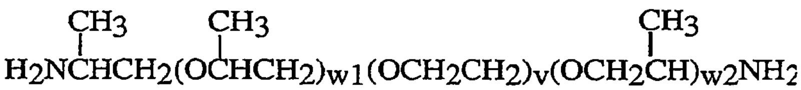

mit $w1 + w2 = 2.5$ und $v = 8.5$

und 0,63 g (1,53 mmol N) einer 40%igen Lösung eines Amins der Zusammensetzung

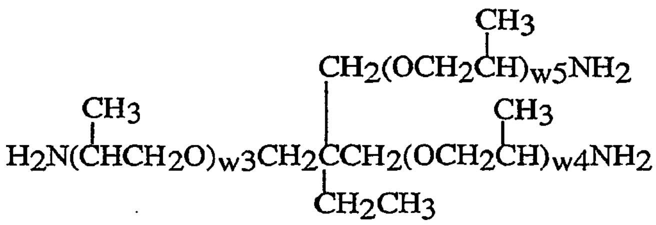

mit w3 +w4 + w5 = 5 - 6

werden gemischt und auf 50°C erhitzt. In die klare Lösung werden 90,8 g (34 mmol Epoxygruppen) eines Epoxysiloxans der durchschnittlichen Zusammensetzung

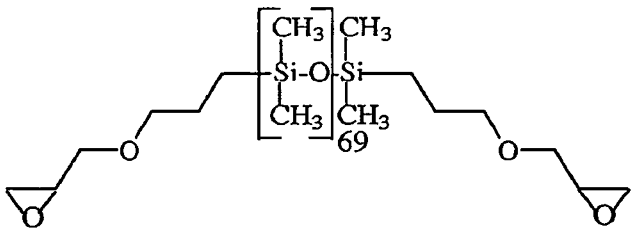

eingetropft und die Reaktionsmischung für 10 Stunden auf 82°C erhitzt. Nach Abkühlung werden 197 g einer trüben, grauen Flüssigkeit erhalten. Das darin befindliche Polymer enthält folgende Strukturelemente

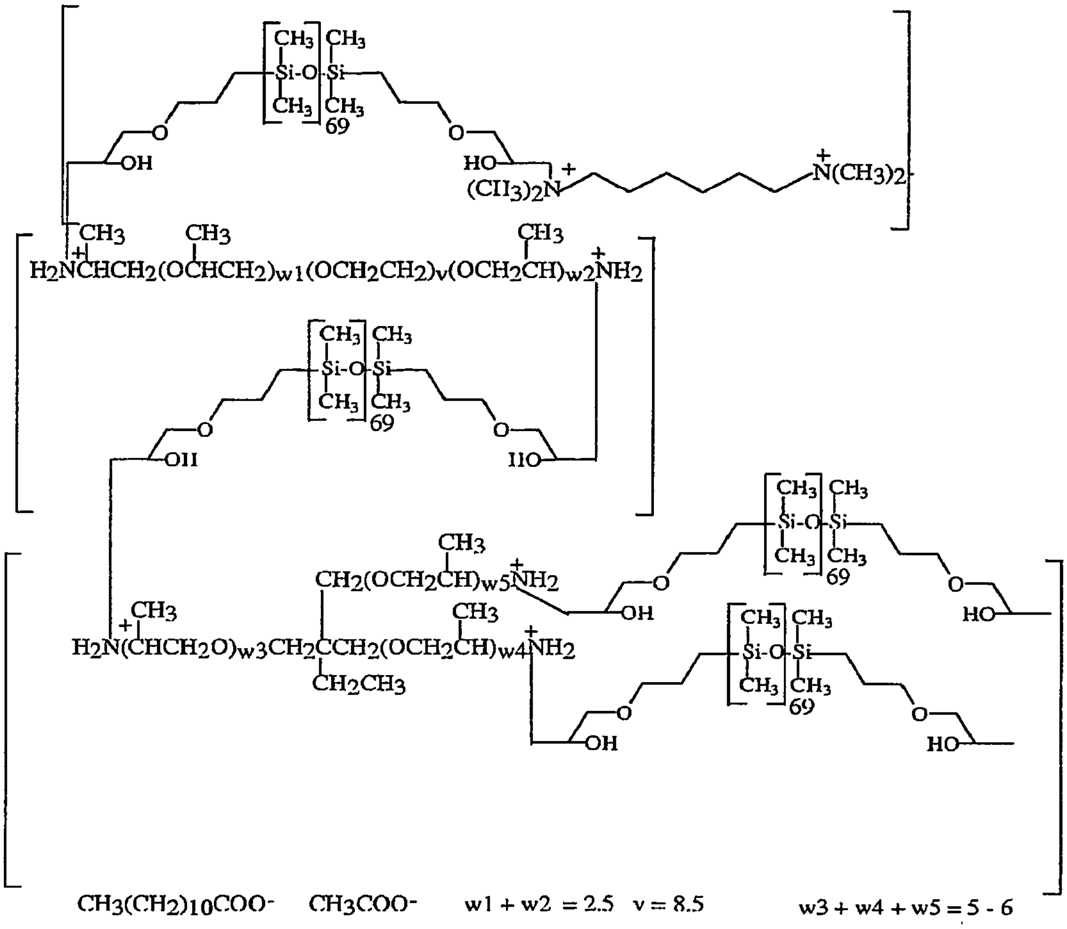

$CH_3(CH_2)_{10}COO^-$ $CH_3COO^-$ $w1 + w2 = 2.5$ $v = 8.5$ $w3 + w4 + w5 = 5 - 6$

Herstellungsbeispiel 4 (Herstellung der Komponente a2) AP1):

Ein aminoethylaminopropylfunktionelle Polyorganosiloxan, des Typs $MD^{AEAP}{}_9$-$D_{557}M$ , - die Einheit $D^{AEAP}$ bedeutet $CH_3(AEAP)SiO$ mit AEAP = 2-Aminoethylaminopropyl -, stellt man analog wie in US 3576779 her, in dem man eine Mischung aus SiOH terminiertem Polydimethylsiloxan, M2D10 und dem Aminoethylaminopropyl-methyldimethoxysilan in Gegenwart von Tetrabutylammoniumhydroxid bei 80 °C äquilibriert, das entstehende Methanol verdampft und nach thermischer Deaktivierung des Katalysators verdampfbare Cyclosiloxane mit Kp. bis 250 °C auf unter 0,5 Gew.% entfernt. Das entstandene Produkt setzt sich wie folgt zusammen:

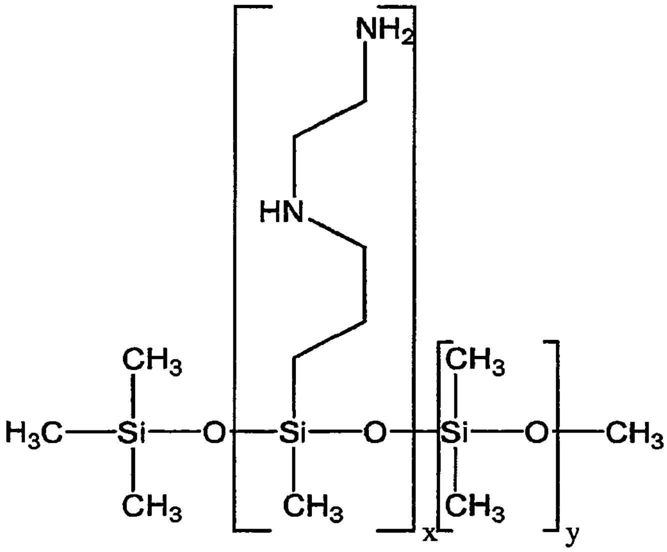

AP 1: x = ~9,2; y = ~557

Herstellungsbeispiel 5 (Herstellung der Komponente a2) AP 2):

Das hier verwendete aminoethylaminopropylfunktionelle Polyorganosiloxan des Typs $MD^{AEAP}{}_{1,5}$ -$D_{100}$ M für die Vergleichsversuche zur Bewertung der erfindungsgemäßen hydrophilisierenden Griffverbesserer bzw. Weichmacher auf textilem Gewebe wurde in Analogie zu Beispiel 4 hergestellt (x = 1,5; y = 100).

Herstellungsbeispiel 6 (Herstellung der Vergleichs-Siloxankomponente AP 3):

Das hier eingesetzte polyetherfunktionelle Polyorganosiloxan $MD^{PO15EO20}{}_{3}D_{20}M$ für die Vergleichsversuche zur Bewertung der erfindungsgemäßen hydrophilisierenden Griffverbesserer bzw. Weichmacher für Papier wurde in Analogie zu Beispiel 7 in US 3980688 hergestellt. Die Einheit $D^{PO15EO20}$ bedeutet $CH_3(PO_{15}EO_{20})SiO$ mit $PO_{15}EO_{20}$, einem statistisch verteiltem Polyetherrest HO-$(C_3H_7O)_{15}$ $(C_2H_5O)_{20}$ -$C_3H_6$-, der über die Propyleneinheit an Si gebunden ist. Die Zahlen geben den mittleren Polymerisationsgrad aus dem Zahlenmittel $M_n$ an.

Herstellungsbeispiel 7 (Herstellung einer Komponente a2) AP 4):

Das hier eingesetzte aminoethylaminopropyl- und polyetherfunktionelle Polyorganosiloxan $MD^{AEAP}{}_{4}D^{PO16EO20OBu}{}_{4}D_{200}M$ wurde durch alkalische Äquilibrierung (20 ppm Tetrabutylammoniumhydroxid) ausgehend von einem Polyethersiloxan des Typs $MD^{PO16EO20OBu}{}_{4}D_{100}M$ mit Aminoethylaminopropylmethyldiethoxysilan und zusätzlichem Polydimethylsiloxandiol in Gegenwart von Tetrabutylammoniumhydroxid bei 80 °C äquilibrierend hergestellt, das entstandene Methanol verdampft, und nach thermischer Deaktivierung des Katalysators wurden verdampfbare Cyclosiloxane mit Kp. bis 250 °C auf unter 0,5 Gew.% entfernt.

Die Einheit $D^{PO16EO20OBu}$ bedeutet $CH_3(PO_{16}EO_{20}OBu)SiO$ mit $PO_{16}EO_{20}OBu$ einem statistisch verteiltem Polyetherrest $C_4H_9$-O-$(C_3H_7O)_{16}$ $(C_2H_5O)_{20}$-$C_3H_6$- , der über die Propyleneinheit an Si gebunden ist Die Zahlen geben den mittleren Polymerisationsgrad aus dem Zahlenmittel $M_n$ an.

Formulierungsbeispiele 8 - 23

Unter Verwendung der Verbindungen der Herstellungsbeispiele 1 bis 7 werden mit einem Ankerrührer bei 25°C Emulsionen einer Zusammensetzung: 40 Gew.-% der Verbindungen oder deren Mischungen als Komponente a) bzw. Vergleichskomponente, 23,7 Gew.% Renex 36 als Komponente b), 4,1 Gew.% Renex 30 ebenfalls als Komponente b) durch Vermischen hergestellt. Zu dieser Mischung wird über 5 min eine Lösung bestehend aus 0,9 Gew.% Essigsäure, 0,695 Gew.% Natriumacetat in 30,61 Gew.% Wasser zugegeben. Es entstehen klare, farblose bis leicht gelbliche Formulierungen.
Bei den hier verwendeten Tensiden der Komponente b) wählte man nichtionische Tenside des Typs Renex 30, internationale Kurzform POE (12)-tridecylalkohol, und Renex 36 der Fa. ICI des Typs POE (6)-tridecylalkohol aus.

Die genauen Zusammensetzungen der Formulierungen sind in der folgenden Tabelle 2 gezeigt. Tabelle 2 zeigt auch die Ergebnisse der Papier - und Textil-Bewertungen der Papiertücher, die, wie oben beschrieben, mit 1 Gew.% Zusammensetzungen (bezogen auf die nicht-flüchtigen Bestandteile, wie oben definiert) ausgerüstet und konditioniert wurden.

Tab. 2 Bewertung von Griff und Hydrophobie der Prüfpapiere und -Textilen

| | | | Komponenten | | | Formulierungsverhältnis | | | Griff )* | Hydrophobie)2 [sec] |
|---|---|---|---|---|---|---|---|---|---|---|
| Beispiele | | Aussehen | **Herstellungs-beispiele** | | | **Relative Mengen** | | | | |
| | **Papier** | | **X1** | **X2** | **X3** | **X1** | **X2** | **X3** | | |
| **8** | Vergleich | klar farblos bis gelblich | **1** | **-** | **-** | **100** | **-** | **-** | **5** | **0,6** |
| **9** | **erfind.gem** | klar farblos bis gelblich | **1** | **4** | **-** | **75** | **25** | **-** | **4,4** | **2,0** |
| **10** | **erfind.gem** | klar farblos bis gelblich | **1** | **4** | **-** | **50** | **50** | **-** | **8,3** | **5,8** |
| **11** | **erfind.gem** | klar farblos bis gelblich | **1** | **4** | **-** | **30** | **70** | **-** | **4,7** | **3,2** |
| **12** | **erfind.gem** | klar farblos bis gelblich | **1** | **4** | **-** | **10** | **90** | **-** | **9,8** | **21,8** |
| **13** | Vergleich | klar farblos bis gelblich | **-** | **4** | **-** | **0** | **100** | **-** | **4,1** | **10,4** |
| **14** | **erfind.gem** | klar farblos bis gelblich | **2** | **4** | **-** | **50** | **50** | **-** | **10** | **2,7** |
| **15** | Vergleich | klar farblos bis gelblich | **2** | **-** | **-** | **100** | **0** | **-** | **3,6** | **4,3** |
| **16** | Vergleich | klar farblos bis gelblich | **3** | **-** | **-** | **100** | **0** | **-** | **2,8** | **3,3** |
| **17** | **erfind.gem** | klar farblos bis gelblich | **3** | **4** | **-** | **50** | **50** | **-** | **3,6** | **4,8** |
| **18** | Vergleich | klar farblos bis gelblich | **-** | **4** | **6** | **-** | **50** | **50** | **2,5** | **2,5** |
| **19** | Vergleich | klar farblos bis gelblich | **-** | **7** | **-** | **-** | **100** | **-** | **3,5** | **3,6** |
| | **Textil** | | | | | | | | | |
| **21** | **Erfind.gem** | klar farblos bis gelblich | **2** | **5** | **-** | **50** | **50** | | **9,2** | **3,0** |
| **22** | Vergleich | klar farblos bis gelblich | **2** | **-** | **-** | **100** | **-** | **-** | **9,2** | **5,0** |
| **23** | Vergleich | klar farblos bis gelblich | **-** | **5** | **-** | **-** | **100** | **-** | **9,2** | **>30** |

)* Griff: Testkollektiv wie oben beschrieben.
Hydrophobie: Tropfen-Einsink-Zeit gemäß TEGEWA-Tropftest- eine Methode zur schnellen Bestimmung der Saugfähigkeit an textilen Flächengebilden; Melliand Textilberichte 68(1987), 581-583.

Die Versuche zeigen, dass in den Beispielen 9-11 die erfindungsgemäßen Zusammensetzungen bei gegebenem gutem Griff bzw. hoher Weichheit noch eine ähnlich gute Hydrophilie (geringe Tropfen-Einsinkzeit) aufweisen, die auf ähnlichem Niveau wie bei Beispiel 8 mit 100% der teureren Komponente a1) bzw. X1 der Tabelle 2 liegt. Weitere Erhöhung des Anteiles der Komponente a2) bzw. X2 gemäß Beispiel 11 bis 12 in Tab. 2 führt zu sprunghaftem Anstieg der Hydrophobie bzw. der Tropfen-Einsinkzeit, die sogar über derjenigen mit 100% der Verbindung a2) liegen kann. Die Beispiele 14 und 17 zeigen, dass die erfindungsgemäßen Zusammensetzungen auch mit Komponenten a1) der Zusammensetzung der Herstellungsbeispiele 2 und 4 wirksam sind, wenn sie mit Beispiel 4 als Komponente a2) 1:1 vermischt werden.

Der Austausch der Komponente a1) durch Verbindungen nach dem Stand der Technik wie in Vergleichsbeispiel 18 führt zwar zu ausreichender Hydrophilie, Weichheit bzw. Griff sind jedoch schlechter als die in Beispiel 9 -12. Ebenso erreicht die Substantivität der in Beispiel 18 verwendeten Polysiloxane aus den Herstellungsbeispielen 6 und 4 nicht das Niveau von quaternären Siloxanen wie Beispiel 8 -11. Wie Vergleichsbeispiel 19 zeigt, bei dem eine Verbindung a2) gemäß Herstellungsbeispiel 7 zur Bewertung kommt, die zusätzlich zu einem Aminoalkylrest einen hydrophilen Polyetherrest im Molekül aufweist, eine schlechtere Bewertung. Auch diese Verbindung führt nicht zu einer hohen Weichheit (> 4,4), d.h. die Griffbewertung ist schlechter als die der erfindungsgemäßen Beispiele, insbesondere 9-11 und 14. Ebenso ist die Substantivität dieser Verbindung geringer als z.B. die der quaternären Verbindungen der Beispiele 8 bis 11.

## Patentansprüche

1. Polyorganosiloxan-Zusammensetzung, enthaltend mindestens eine Amino- und/oder Ammonium-Polysiloxan-Verbindung a1), enthaltend mindestens eine Amino- und/oder Ammoniumgruppe Q und mindestens einen organischen Rest V, mit der Maßgabe, dass mindestens ein organischer Rest V ein eine Polydiorganosiloxangruppe enthaltender organischer Rest $V^{Si1}$ ist, worin die Anbindung der Gruppe Q an die Gruppe $V^{Si1}$ durch das Strukturelement (I)

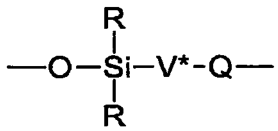

(I)

erfolgt, worin V* ein zweiwertiger organischer Rest ist, der jeweils über ein Kohlenstoffatom an das Siliziumatom des Polydiorganosiloxan-Restes und an das Stickstoffatom der Amino- oder Ammoniumgruppe Q gebunden ist, R ein einwertiger organischer Rest ist,
und mindestens eine Amino- und/oder Ammonium-Polysiloxan-Verbindung a2) enthaltend mindestens eine Amino- oder Ammoniumgruppe Q und mindestens einen organischen Rest V, mit der Maßgabe, dass mindestens ein organischer Rest V ein eine Polydiorganosiloxangruppe enthaltender organischer Rest $V^{Si2}$ ist, worin die Anbindung der Gruppe Q an die Gruppe $V^{Si2}$ durch das Strukturelement ausgewählt aus den Formeln (II) und (III)

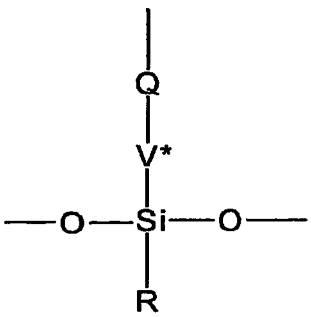

(II)

und

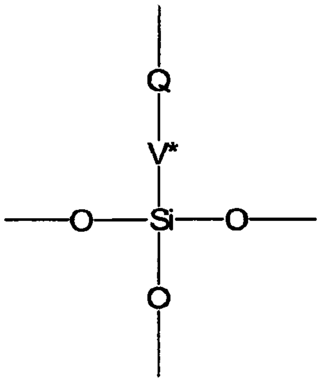

(III)

erfolgt, worin V* jeweils ein zweiwertiger organischer Rest ist, der jeweils über ein Kohlenstoffatom an das Siliziumatom des Organosiloxan-Restes und an das Stickstoffatom der Amino- oder Ammoniumgruppe Q gebunden ist, R ein einwertiger organischer Rest ist,
mit der Maßgabe, dass die Amino- und/oder Ammonium-Polysiloxan-Verbindung a2) kein Strukturelement der Formel (I) aufweist, und
mit der Maßgabe, dass die Gruppe Q nicht an ein Carbonylkohlenstoffatom bindet, und
worin die aus Ammoniumgruppen resultierenden positiven Ladungen durch organische oder anorganische Säureanionen neutralisiert sind, und deren Säureadditionssalze.

2. Polyorganosiloxan-Zusammensetzung nach Anspruch 1, **dadurch gekennzeichnet**, das sie keine stickstofffreie Polysiloxan-Verbindung enthält.

3. Polyorganosiloxan-Zusammensetzung nach Anspruch 1 oder 2, die besteht aus:

   Komponente a1), wie im Anspruch 1 definiert,
   Komponente a2), wie im Anspruch 1 definiert,
   wahlweise ein oder mehrere silikonfreie Tenside b),
   wahlweise einen oder mehrer Hilfsstoffe c), sowie
   wahlweise eine oder mehrere Trägersubstanzen d).

4. Polyorganosiloxan-Zusammensetzung nach einem der Ansprüche 1 bis 3, worin die Komponenten a1) zu a2) im Gewichts-Verhältnis von 30 : 1 bis 1 : 90 vorliegen.

5. Polyorganosiloxan-Zusammensetzung nach einem der Ansprüche 1 bis 4, worin die Komponenten a1) zu a2) im Gewichts-Verhältnis von 1 : 0,1 bis 1 : 10, bevorzugt im Gewichts-Verhältnis 1 : 0,2 bis 1 : 7 vorliegen.

6. Polyorganosiloxan-Zusammensetzung nach einem der Ansprüche 1 bis 5, **dadurch gekennzeichnet, dass** die Amino- und/oder Ammonium-Polysiloxan-Verbindung a1) die Formel (IV)

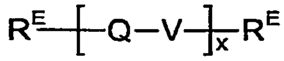

(IV)

aufweist, worin Q und V wie oben definiert sind, $R^E$ jeweils ein einwertiger organischer Rest oder Wasserstoff ist, x ≥ 1 ist, die Reste $R^E$ gleich oder verschieden voneinander sein können, und wenn x > 1 ist, die Gruppen Q, V jeweils gleich oder verschieden voneinander sein können.

7. Polyorganosiloxan-Zusammensetzung nach einem der Ansprüche 1 bis 6, worin Q ausgewählt wird aus der Gruppe, die besteht aus: $-NR^1-$, $-N^+R^1_2-$,
einem gesättigten oder ungesättigten, gegebenenfalls mit weiteren Substituenten substituierten diaminofunktionellen Heterocyclus der Formeln:

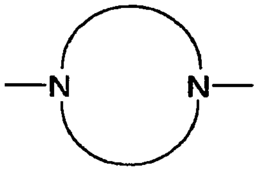

,

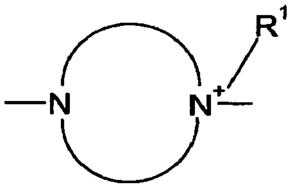

und

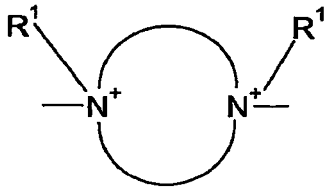

,

sowie
einem aromatischen, gegebenenfalls substituierten diaminofunktionellen Heterocyclus der Formel:

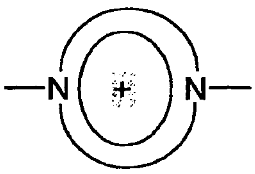

einem dreiwertigen Rest der Formel:

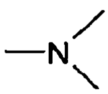

,

einem dreiwertigen Rest der Formel:

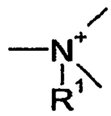 ,

oder
einem vierwertigen Rest der Formel,

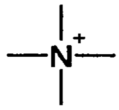

worin $R^1$ jeweils Wasserstoff oder einen einwertigen organischen Rest darstellt, wobei Q nicht an ein Carbonylkohlenstoffatom bindet.

**8.** Polyorganosiloxan-Zusammensetzung nach einem der Ansprüche 1 bis 7, worin die Einheit V ausgewählt wird aus mindestens einem mehrwertigen, geradkettigen, cyclischen oder verzweigten, gesättigten, ungesättigten oder aromatischen Kohlenwasserstoffrest mit bis zu 1000 Kohlenstoffatomen (wobei die Kohlenstoffatome des gegebenenfalls vorhandenen Polyorganosiloxanrestes nicht mitgezählt werden), der gegebenenfalls eine oder mehrere Gruppen, ausgewählt aus- O-, -C(O)-, -C(S)-,
$-NR^2-$, worin $R^2$ Wasserstoff, einen einwertigen, geradkettigen, cyclischen oder verzweigten, gesättigten, ungesättigten oder aromatischen Kohlenwasserstoffrest mit bis zu 300 Kohlenstoffatomen darstellt, der eine oder mehrere Gruppen ausgewählt aus -O-, -NH-, -C(O)- und -C(S)- enthalten kann, und der gegebenenfalls durch eine oder mehrere Substituenten, ausgewählt aus der Gruppe, die besteht aus einer Hydroxylgruppe, einer gegebenenfalls substituierten, bevorzugt ein oder mehrere Stickstoffatome enthaltenden heterocyclischen Gruppe, Polyetherresten, Polyetheresterresten, Polyorganosiloxanylresten
und
$-Si(OR)_{3-a}(R)_a$, worin a eine ganze Zahl von 0 bis 2 ist und R wie oben definiert ist, wobei wenn mehrere Gruppen $-NR^2-$ vorliegen, diese gleich oder verschieden sein können, und mit der Maßgabe, dass die Gruppe -NH- an ein Carbonyl- und/oder Thiocarbonylkohlenstoffatom bindet,

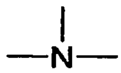

und Polyorganosiloxanresten
enthalten kann, und der gegebenenfalls durch eine oder mehrere Hydroxylgruppen substituiert sein kann,
mit der Maßgabe, dass die Gruppen

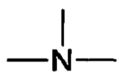

und $-NR^2-$ an mindestens ein Carbonyl- und/oder Thiocarbonylkohlenstoffatom binden, und mit der Maßgabe, das mindestens ein Rest V mindestens einen Polyorganosiloxanrest enthält.

**9.** Polyorganosiloxan-Zusammensetzung nach einem der Ansprüche 1 bis 8, worin die Amino- und/oder Ammonium-Polysiloxan-Verbindung a1) mindestens drei Einheiten, ausgewählt aus den Einheiten Q und V aufweist, worin Q mindestens eine zwei-, drei- und/oder vierwertige Amino- und/oder Ammoniumgruppe ist, die nicht über ein Carbonylkohlenstoffatom an V gebunden ist, und V mindestens ein organischer Rest ist, der über Kohlenstoff mit den Q-Einheiten verbunden ist, mit der Maßgabe, dass mindestens eine der Einheiten V ein Polydiorganosiloxanrest enthält.

**10.** Polyorganosiloxan-Zusammensetzung nach einem der Ansprüche 1 bis 9, worin die Amino- und/oder Ammonium-Polysiloxan-Verbindung a1) mindestens zwei Einheiten Q aufweist.

**11.** Polyorganosiloxan-Zusammensetzung nach einem der Ansprüche 1 bis 10, worin die Amino- und/oder Ammonium-Polysiloxan-Verbindung a1) mindestens zwei Einheiten Q und mehr als eine Einheit $V^{Si}$ aufweist.

**12.** Polyorganosiloxan-Zusammensetzung nach einem der Ansprüche 1 bis 11, worin die Amino- und/oder Ammonium-Polysiloxan-Verbindung a1) mindestens zwei Einheiten Q und mehr als zwei Einheiten $V^{Si}$ aufweist.

**13.** Polyorganosiloxan-Zusammensetzung nach einem der Ansprüche 1 bis 12, worin der organische Rest V in der Amino- und/oder Ammonium-Polysiloxan-Verbindung a1) mindestens ein Bestandteil ist, der aus der Gruppe ausgewählt wird, die aus $V^1$, $V^2$ und $V^3$ besteht, worin
$V^2$ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen (wobei die Kohlenstoffatome des unten definierten Polysiloxanrestes $Z^2$ nicht mitgezählt werden), die gegebenenfalls eine oder mehrere Gruppen, ausgewählt aus- O-, -CONH-,
-CONR$^2$-, worin $R^2$ Wasserstoff, einen einwertigen, geradkettigen, cyclischen oder verzweigten, gesättigten, ungesättigten oder aromatischen Kohlenwasserstoffrest mit bis zu 100 Kohlenstoffatomen darstellt, der eine oder mehrere Gruppen ausgewählt aus -O-, -NH-, -C(O)- und -C(S)- enthalten kann, und der gegebenenfalls durch eine oder mehrere Substituenten, ausgewählt aus der Gruppe, die besteht aus einer Hydroxyl-gruppe, einer gegebenenfalls substituierten, bevorzugt ein oder mehrere Stickstoffatome enthaltenden heterocyclischen Gruppe, Amino, Alkylamino, Dialkylamino, Ammonium, Polyetherresten und Polyetheresterresten substituiert sein kann, wobei wenn mehrere Gruppen -CONR$^2$ vorliegen, diese gleich oder verschieden sein können,
-C(O)- und -C(S)- enthalten kann,
der Rest $V^2$ gegebenenfalls durch eine oder mehrere Hydroxylgruppen substituiert sein kann, und
der Rest $V^2$ mindestens eine Gruppe -$Z^2$- der Formel

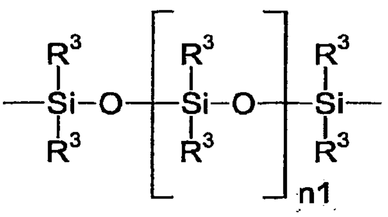

(V)

enthält, worin $R^3$ gleich oder verschieden sein kann und aus der Gruppe ausgewählt wird, die aus $C_1$ bis $C_{22}$ Alkyl, Fluor($C_3$-$C_{10}$)alkyl, $C_6$-$C_{10}$ Aryl und n1 = 20 bis 1000 bedeutet,
$V^1$ ausgewählt wird aus zweiwertigen, geradkettigen, cyclischen oder verzweigten, gesättigten, ungesättigten oder aromatischen Kohlenwasserstoffresten mit bis zu 1000 Kohlenstoffatomen, die gegebenenfalls eine oder mehrere Gruppen, ausgewählt aus -O-, -CONH-,
-CONR$^2$-, worin $R^2$ wie oben definiert ist, wobei die Gruppen $R^2$ in den Gruppen $V^1$ und $V^2$ gleich oder verschieden sein können,
-C(O)-, -C(S)- und -$Z^1$- enthalten kann, worin -$Z^1$- eine Gruppe der Formel

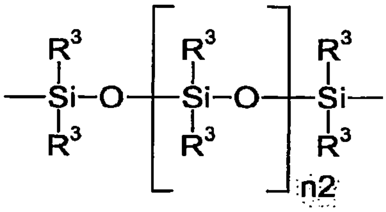

(VI)

ist, worin
$R^3$ wie oben definiert ist, wobei die Gruppen $R^3$ in den Gruppen $V^1$ und $V^2$ gleich oder verschieden sein können, und n2 = 0 bis 19 bedeutet,
und der Rest $V^1$ gegebenenfalls durch eine oder mehrere Hydroxylgruppen substituiert sein kann, und
$V^3$ einen drei- oder höherwertigen, geradkettigen, cyclischen oder verzweigten, gesättigten, ungesättigten oder aromatischen Kohlenwasserstoffrest mit bis zu 1000 Kohlenstoffatomen darstellt, der gegebenenfalls eine oder mehrere Gruppen, ausgewählt aus
-O-, -CONH-, $-CONR^2-$, worin $R^2$ wie oben definiert ist, -C(O)-, -C(S)-, $-Z^1-$, das wie oben definiert ist, $-Z^2-$ das wie oben definiert ist, und $Z^3$, worin $Z^3$ eine drei- oder höherwertige Organopolysiloxaneinheit ist,
enthalten kann, und der gegebenenfalls durch eine oder mehrere Hydroxylgruppen substituiert sein kann,
wobei in der genannten Polysiloxan-Verbindung jeweils eine oder mehrere Gruppen $V^1$, eine oder mehrere Gruppen $V^2$ und/oder eine oder mehrere Gruppen $V^3$ vorliegen können,
mit der Maßgabe, dass die genannte Polysiloxan-Verbindung mindestens eine Gruppe $V^1$, $V^2$ oder $V^3$ enthält, die mindestens eine Gruppe $-Z^1-$, $-Z^2-$ oder $Z^3$ enthält.

**14.** Polyorganosiloxan-Zusammensetzung nach einem der Ansprüche 1 bis 13, **dadurch gekennzeichnet, dass** sie bei 40 °C flüssig sind.

**15.** Polyorganosiloxan-Zusammensetzung nach einem der Ansprüche 1 bis 14, bestehend aus
0,05 bis 90 Gew.% der Komponenten a1) und a2),
0 bis 30 Gew. % eines oder mehrerer silikonfreier Tenside b),
Hilfsstoffe c) ausgewählt aus:
0 bis 0,5 Gew. % eines oder mehrerer Biozide,
0 bis 10 Gew. % eines oder mehrerer Rheologiemodifizierer,
0 bis 5 Gew. % eines oder mehrerer weiterer Hilfsstoffe und
bis 99,95 Gew. % eines oder mehrerer Träger d).

**16.** Polyorganosiloxan-Zusammensetzung nach einem der Ansprüche 3 bis 15, **dadurch gekennzeichnet, dass** das silikonfreie Tensid als Komponente b), mindestens ein Bestandteil ist, der aus nicht-polymerisierten, organischen, quaternären Ammonium-Verbindungen ausgewählt wird.

**17.** Polyorganosiloxan-Zusammensetzung nach einem der Ansprüche 3 bis 16, **dadurch gekennzeichnet**, die Trägersubstanz d) mindestens ein Bestandteil ist, der aus der Gruppe ausgewählt wird, die aus Wasser und wassermischbaren organischen Lösungsmitteln besteht.

**18.** Polyorganosiloxan-Zusammensetzung nach einem der Ansprüche 3 bis 17, **dadurch gekennzeichnet, dass** das silikonfreie Tensid als Komponente b) aus nichtionischen Emulgatoren ausgewählt wird.

**19.** Polyorganosiloxan-Zusammensetzung, nach einem der Ansprüche 1 bis 18, die Wasser enthält.

**20.** Verfahren zur Herstellung der Polyorganosiloxan-Zusammensetzungen nach einem der Ansprüche 1 bis 19, dass das Mischen der Komponenten a1) und a2) sowie gegebenenfalls der weiteren Komponenten umfasst.

**21.** Verwendung der Polyorganosiloxan-Zusammensetzungen nach einem der Ansprüche 1 bis 19 zur Oberflächenbehandlung von Substraten.

**22.** Verwendung nach Anspruch 21 zur Behandlung von Fasersubstraten oder faserartigen Substraten.

**23.** Verwendung nach Anspruch 21 oder 22 zur Ausrüstung oder Behandlung von natürlichen oder synthetischen Fasern, Haaren, Textilien, Papiervliesen, -pulpen, -geweben, -schichten wie trockenen oder feuchten Toilettenpapieren, Gesichtspapieren, Reinigungstücher, Wischpapieren und Taschentüchern.

**24.** Verwendung der Polyorganosiloxan-Zusammensetzungen nach einem der Ansprüche 1 bis 19 als Weichmacher oder Antistatikum für natürliche oder synthetische Fasern oder Papiere, wie Haare, Baumwolle, Synthetikgewebe.

**25.** Verwendung nach einem der Ansprüche 21 bis 24, worin bezogen auf die trockene Faser- bzw. Papiermasse 0,03 Gew.-% bis 30 Gew.-% der nicht-flüchtigen Bestandteile der Polyorganosiloxan-Zusammensetzungen gemäß der Definition der vorstehenden Ansprüche vorliegen.

**26.** Verwendung nach einem der Ansprüche 21 bis 25, worin bezogen auf die trockene Faser- bzw. Papiermasse 0,01 Gew.-% bis 10 Gew.-% der Komponenten a1) und a2) vorliegen.

**27.** Verwendung der Polyorganosiloxan-Zusammensetzungen nach einem der Ansprüche 1 bis 19 als Reinigungsmittel, Netzmittel, Korrosionsschutzmittel, Grundierung, Haftvermittler, Antibeschlagmittel oder Antistatikum für harte Oberflächen.

**28.** Erzeugnisse enthaltend mindestens eine Polyorganosiloxan-Zusammensetzung nach einem der Ansprüche 1 bis 19.

**29.** Erzeugnisse nach Anspruch 28, die Papiererzeugnisse sind.

**30.** Erzeugnisse nach Anspruch 28 oder 29, worin bezogen auf die trockenen Erzeugnisse 0,03 Gew.-% bis 30 Gew.-% der nicht-flüchtigen Bestandteile der Zusammensetzung gemäß einem der Ansprüche 1 bis 19 vorliegen.

**Claims**

**1.** A polyorganosiloxane composition containing at least one amino- and/or ammonium-polysiloxane compound a1) containing at least one amino and/or ammonium group Q and at least one organic radical V, with the proviso that at least one organic radical V is an organic radical $V^{Si1}$ containing a polydiorganosiloxane group, wherein the binding of the group Q to the group $V^{Si1}$ is effected by the structural element (I)

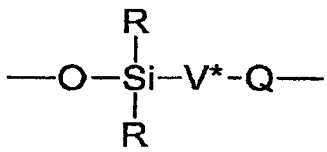

(I)

wherein V* is a divalent organic radical which in each case is bonded via a carbon atom to the silicon atom of the polydiorganosiloxane radical and to the nitrogen atom of the amino or ammonium group Q, and R is a monovalent organic radical,
and at least one amino- and/or ammonium-polysiloxane compound a2) containing at least one amino or ammonium group Q and at least one organic radical V, with the proviso that at least one organic radical V is an organic radical $V^{Si2}$ containing a polydiorganosiloxane group, wherein the binding of the group Q to the group $V^{Si2}$ is effected by the structural element selected from the formulae (II) and (III)

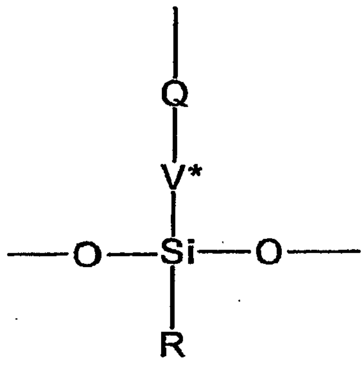

(II)

and

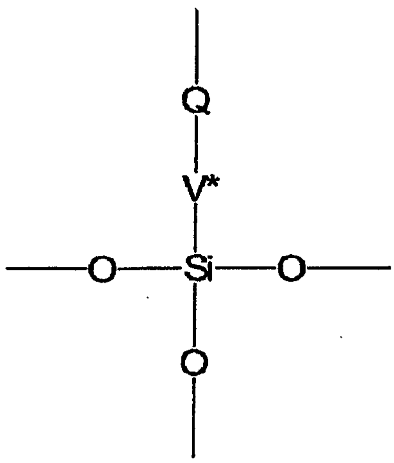

(III)

wherein V* is in each case a divalent organic radical which in each case is bonded via a carbon atom to the silicon atom of the organosiloxane radical and to the nitrogen atom of the amino or ammonium group Q, and R is a monovalent organic radical,
with the proviso that the amino- and/or ammonium-polysiloxane compound a2) has no structural element of the formula (I), and
with the proviso that the group Q does not bond to a carbonyl carbon atom, and
wherein the positive charges resulting from ammonium groups are neutralized by organic or inorganic acid anions, and the acid addition salts thereof.

2. The polyorganosiloxane composition as claimed in claim 1, **characterized in that** it contains no nitrogen-free polysiloxane compound.

3. The polyorganosiloxane composition as claimed in claim 1 or 2, which consists of:

component a1), as defined in claim 1,
component a2), as defined in claim 1,
optionally one or more silicone-free surfactants b),
optionally one or more auxiliaries c) and
optionally one or more carrier substances d).

4. The polyorganosiloxane composition as claimed in any of claims 1 to 3, wherein the components a1) to a2) are

present in a weight ratio of from 30:1 to 1:90.

5. The polyorganosiloxane composition as claimed in any of claims 1 to 4, wherein the components a1) to a2) are present in a weight ratio of from 1:0.1 to 1:10, preferably in a weight ratio of from 1:0.2 to 1:7.

6. The polyorganosiloxane composition as claimed in any of claims 1 to 5, **characterized in that** the amino- and/or ammonium-polysiloxane compound a1) has the formula (IV)

$$R^E-\left[Q-V\right]_x-R^E \qquad \text{(IV)}$$

wherein Q and V are as defined above, $R^E$ is in each case a monovalent organic radical or hydrogen, x is ≥ 1, the radicals $R^E$ may be identical or different from one another and, if x is > 1, the groups Q, V may in each case be identical or different from one another.

7. The polyorganosiloxane composition as claimed in any of claims 1 to 6, wherein Q is selected from the group consisting of: $-NR^1-$, $-N^+R^1_2-$,
a saturated or unsaturated, diamino-functional heterocycle optionally substituted by further substituents of the formulae:

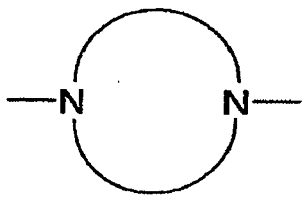

,

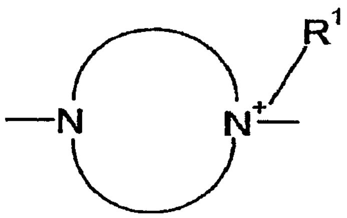

and

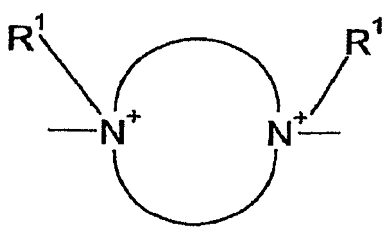

,

and
an aromatic, optionally substituted diamino-functional heterocycle of the formula:

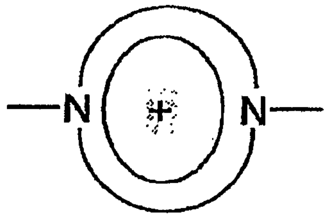

a trivalent radical of the formula:

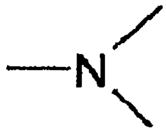
,

a trivalent radical of the formula:

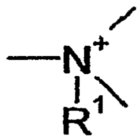
,

or
a tetravalent radical of the formula

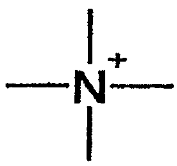

wherein $R^1$ in each case is hydrogen or a monovalent organic radical, Q not binding to a carbonyl carbon atom.

**8.** The polyorganosiloxane composition as claimed in any of claims 1 to 7, wherein the unit V is selected from at least one polyvalent, straight-chain, cyclic or branched, saturated, unsaturated or aromatic hydrocarbon radical having up to 1000 carbon atoms (the carbon atoms of the optionally present polyorganosiloxane radical not being counted) which optionally may contain one or more groups selected from -O-, -C(O) -, -C(S)-,
$-NR^2-$, wherein $R^2$ is hydrogen, a monovalent, straight-chain, cyclic or branched, saturated, unsaturated or aromatic hydrocarbon radical having up to 300 carbon atoms which may contain one or more groups selected from -O-, -NH-, -C(O)- and -C(S)-, and which is optionally substituted by one or more substituents selected from the group consisting of a hydroxyl group, an optionally substituted, heterocyclic group preferably containing one or more nitrogen atoms, polyether radicals, polyetherester radicals, polyorganosiloxanyl radicals
and
$-Si(OR)_{3-a}(R)_a$, wherein a is an integer from 0 to 2 and R is as defined above, where, if a plurality of groups $-NR^2-$ is present, these may be identical or different, and with the proviso that the group -NH- binds to a carbonyl and/or thiocarbonyl carbon atom,

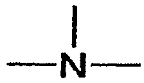

and may contain polyorganosiloxane radicals,
and which optionally may be substituted by one or more hydroxyl groups,
with the proviso that the groups

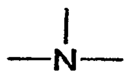

and $-NR^2-$ bind to at least one carbonyl and/or thiocarbonyl carbon atom, and with the proviso that at least one radical V contains at least one polyorganosiloxane radical.

**9.** The polyorganosiloxane composition as claimed in any of claims 1 to 8, wherein the amino- and/or ammonium-polysiloxane compound a1) has at least three units selected from the units Q and V, wherein Q is at least one di-, tri- and/or tetravalent amino and/or ammonium group which is not bonded to V via a carbonyl carbon atom, and V is at least one organic radical which is linked to the Q units via carbon, with the proviso that at least one of the units V contains a polydiorganosiloxane radical.

**10.** The polyorganosiloxane composition as claimed in any of claims 1 to 9, wherein the amino- and/or ammonium-polysiloxane compound a1) has at least two units Q.

**11.** The polyorganosiloxane composition as claimed in any of claims 1 to 10, wherein the amino- and/or ammonium-polysiloxane compound a1) has at least two units Q and more than one unit $V^{Si}$.

**12.** The polyorganosiloxane composition as claimed in any of claims 1 to 11, wherein the amino- and/or ammonium-polysiloxane compound a1) has at least two units Q and more than two units $V^{Si}$.

**13.** The polyorganosiloxane composition as claimed in any of claims 1 to 12, wherein the organic radical V in the amino- and/or ammonium-polysiloxane compound a1) is at least one constituent which is selected from the group consisting of $V^1$, $V^2$ and $V^3$, wherein
$V^2$ is selected from divalent, straight-chain, cyclic or branched, saturated, unsaturated or aromatic hydrocarbon radicals having up to 1000 carbon atoms (the carbon atoms of the polysiloxane radical $Z^2$ defined below not being counted) which optionally may contain one or more groups selected from -O-, -CONH-,
$-CONR^2-$, wherein $R^2$ is hydrogen, a monovalent, straight-chain, cyclic or branched, saturated, unsaturated or aromatic hydrocarbon radical having up to 100 carbon atoms which may contain one or more groups selected from -O-, -NH-, -C(O)- and -C(S)-, and which may be optionally substituted by one or more substituents selected from the group consisting of a hydroxyl group, an optionally substituted heterocyclic group preferably containing one or more nitrogen atoms, amino, alkylamino, dialkylamino, ammonium, polyether radicals and polyetherester radicals, where, if a plurality of groups $-CONR^2$ is present, these may be identical or different, -C(O)- and -C(S)-,
the radical $V^2$ may be optionally substituted by one or more hydroxyl groups, and
the radical $V^2$ contains at least one group $-Z^2-$ of the formula

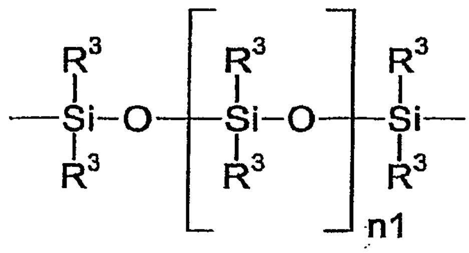

(V)

wherein $R^3$ may be identical or different and is selected from the group which consists of $C_1$ to $C_{22}$ alkyl, fluoro ($C_3$-$C_{10}$) alkyl, $C_6$-$C_{10}$ aryl, and n1 = 20 to 1000,
$V^1$ is selected from divalent, straight-chain, cyclic or branched, saturated, unsaturated or aromatic hydrocarbon radicals having up to 1000 carbon atoms which optionally may contain one or more groups selected from -O-, -CONH-, -$CONR^2$-, wherein $R^2$ is as defined above, it being possible for the groups $R^2$ in the groups $V^1$ and $V^2$ to be identical or different,
-C(O)-, -C(S)- and -$Z^1$-, wherein -$Z^1$- is a group of the formula

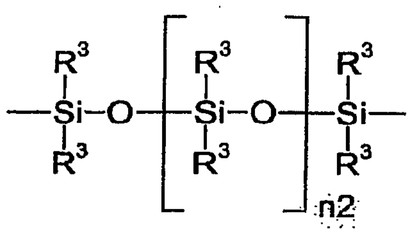

(VI)

wherein
$R^3$ is as defined above, it being possible for the groups $R^3$ in the groups $V^1$ and $V^2$ to be identical or different, and n2 = 0 to 19,
and the radical $V^1$ may be optionally substituted by one or more hydroxyl groups, and
$V^3$ is a trivalent or higher-valent, straight-chain, cyclic or branched, saturated, unsaturated or aromatic hydrocarbon radical having up to 1000 carbon atoms which optionally may contain one or more groups selected from -0-, -CONH-, -$CONR^2$-, wherein $R^2$ is as defined above, -C(O)-, -C(S)-, -$Z^1$-, which is as defined above, -$Z^2$-, which is as defined above, and $Z^3$, wherein $Z^3$ is a trivalent or higher-valent organopolysiloxane unit,
and which may be optionally substituted by one or more hydroxyl groups,
it being possible in each case for one or more groups $V^1$, one or more groups $V^2$ and/or one or more groups $V^3$ to be present in said polysiloxane compound,
with the proviso that said polysiloxane compound contains at least one group $V^1$, $V^2$ or $V^3$ which contains at least one group -$Z^1$-, -$Z^2$- or $Z^3$.

**14.** The polyorganosiloxane composition as claimed in any of claims 1 to 13, **characterized in that** they are liquid at 40°C.

**15.** The polyorganosiloxane composition as claimed in any of claims 1 to 14, consisting of
from 0.05 to 90% by weight of the components a1) and a2),
from 0 to 30% by weight of one or more silicone-free surfactants b),
auxiliaries c) selected from:

from 0 to 0.5% by weight of one or more biocides,
from 0 to 10% by weight of one or more rheology modifiers,
from 0 to 5% by weight of one or more further auxiliaries and

up to 99.95% by weight of one or more carriers d).

**16.** The polyorganosiloxane composition as claimed in any of claims 3 to 15, **characterized in that** the silicone-free

surfactant as component b) is at least one constituent which is selected from unpolymerized, organic, quaternary ammonium compounds.

**17.** The polyorganosiloxane composition as claimed in any of claims 3 to 16, **characterized in that** the carrier substance d) is at least one constituent which is selected from the group consisting of water and water-miscible organic solvents.

**18.** The polyorganosiloxane composition as claimed in any of claims 3 to 17, **characterized in that** the silicone-free surfactant as component b) is selected from nonionic emulsifiers.

**19.** The polyorganosiloxane composition as claimed in any of claims 1 to 18, which contains water.

**20.** A process for the preparation of the polyorganosiloxane compositions as claimed in any of claims 1 to 19, that comprises mixing the components a1) and a2) and optionally the further components.

**21.** The use of the polyorganosiloxane compositions as claimed in any of claims 1 to 19 for the surface treatment of substrates.

**22.** The use as claimed in claim 21 for the treatment of fiber substrates or fibrous substrates.

**23.** The use as claimed in claim 21 or 22 for the finishing or treatment of natural or synthetic fibers, hairs, textiles, nonwoven paper fabrics, paper pulps, woven paper fabrics, paper layers, such as dry or moist lavatory papers, facial papers, cleaning cloths, wiping papers and paper handkerchiefs.

**24.** The use of the polyorganosiloxane compositions as claimed in any of claims 1 to 19 as a softener or antistatic agent for natural or synthetic fibers or papers, such as hairs, cotton or synthetic fabric.

**25.** The use as claimed in any of claims 21 to 24, wherein, based on the dry fiber or paper mass, from 0.03% by weight to 30% by weight of the nonvolatile constituents of the polyorganosiloxane compositions according to the definition of the above claims are present.

**26.** The use as claimed in any of claims 21 to 25, wherein, based on the dry fiber or paper mass, from 0.01% by weight to 10% by weight of the components a1) and a2) are present.

**27.** The use of the polyorganosiloxane compositions as claimed in any of claims 1 to 19 as a cleaning agent, wetting agent, corrosion inhibitor, primer, adhesion promoter, antifogging agent or antistatic agent for hard surfaces.

**28.** A product containing at least one polyorganosiloxane composition as claimed in any of claims 1 to 19.

**29.** The product as claimed in claim 28, which is a paper product.

**30.** The product as claimed in claim 28 or 29, wherein, based on the dry product, from 0.03% by weight to 30% by weight of the nonvolatile constituents of the composition as claimed in any of claims 1 to 19 are present.

## Revendications

**1.** Composition de polyorganosiloxane, contenant au moins un composé amino- et/ou ammonium-polysiloxane a1), contenant au moins un groupe amine et/ou ammonium Q, avec la condition qu'au moins un radical organique V est un radical organique $V^{Si1}$ contenant un groupe polydiorganosiloxane, dans lequel la liaison du groupe Q au groupe $V^{Si1}$ s'effectue par l'élément structural (I)

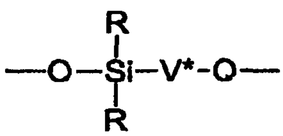

(I)

dans laquelle V* est un radical organique divalent qui est lié respectivement par l'intermédiaire d'un atome de carbone à l'atome de silicium du radical polydiorganosiloxane et à l'atome d'azote du groupe amine ou ammonium Q, R est un radical organique monovalent,
et au moins un composé amino- et/ou ammonium-polysiloxane a2), contenant au moins un groupe amine ou ammonium Q et au moins un radical organique V avec la condition qu'au moins un radical organique V est un radical organique $V^{Si2}$ contenant un groupe polydiorganosiloxane, dans lequel la liaison du groupe Q au groupe $V^{Si2}$ s'effectue par l'élément structurel choisi parmi les formules (II) et (III)

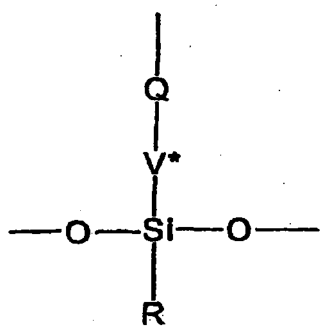

(II)

et

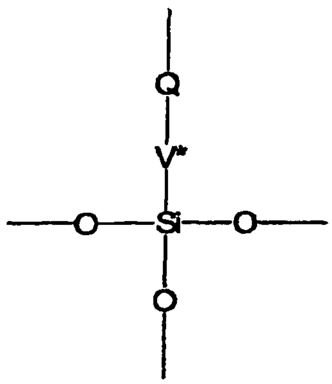

(III)

dans lesquelles V* est chaque fois un radical organique divalent, qui est lié respectivement par un atome de carbone à l'atome de silicium du radical organosiloxane et à l'atome d'azote du groupe amine ou ammonium Q, R est un radical organique monovalent,
avec la condition que le composé amino- et/ou ammonium-polysiloxane a2) ne comporte pas d'élément structurel de la formule (I), et
avec la condition que le groupe Q ne s'attache pas à un atome de carbone carbonyle, et
dans lesquelles les charges positives résultant de groupes ammonium sont neutralisées par des anions d'acides organiques ou inorganiques et leurs sels d'addition d'acide.

**2.** Composition de polyorganosiloxane selon la revendication 1, **caractérisée en ce qu'**elle ne contient pas de composé de polysiloxane sans azote.

**3.** Composition de polyorganosiloxane selon la revendication 1 ou 2, qui consiste en :

le composant a1) tel qu'il est défini dans la revendication 1,
le composant a2) tel qu'il est défini dans la revendication 1,

au choix un ou plusieurs tensioactifs b) exempts de silicones,
au choix une ou plusieurs substances auxiliaires c), ainsi que
au choix une ou plusieurs substances supports d).

**4.** Composition de polyorganosiloxane selon l'une des revendications 1 à 3, dans laquelle les composants a1) par rapport à a2) sont présents dans un rapport pondéral de 30 : 1 à 1 : 90.

**5.** Composition de polyorganosiloxane selon l'une des revendications 1 à 4, dans laquelle les composants a1) par rapport à a2) sont présents dans un rapport pondéral de 1 : 0,1 à 1 : 10, de préférence dans un rapport pondéral de 1 : 0,2 à 1 : 7.

**6.** Composition de polyorganosiloxane selon l'une des revendications 1 à 5, **caractérisée en ce que** le composé amino- et/ou ammonium-polysiloxane a1) présente la formule (IV)

$$R^E\text{-}[\text{-}Q\text{-}V\text{-}]_x\text{-}R^E \qquad (IV)$$

dans laquelle Q et V sont définis comme ci-dessus, $R^E$ est respectivement un radical organique monovalent ou un hydrogène, x est ≥ 1, les radicaux $R^E$ peuvent être identiques ou différents l'un de l'autre et, quand on a x > 1, les groupes Q, V peuvent être respectivement identiques ou différents l'un de l'autre.

**7.** Composition de polyorganosiloxane selon l'une des revendications 1 à 6, dans laquelle on choisit Q parmi le groupe qui consiste en : $-NR^1-$
$-N^+R^1{}_2-$
un hétérocycle diaminofonctionnel saturé ou insaturé, le cas échéant substitué par d'autres substituants, des formules :

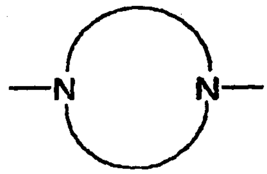

,

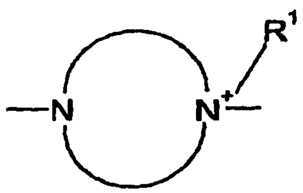

et

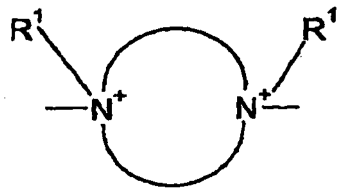

, ainsi que
un hétérocycle aromatique diaminofonctionnel, le cas échéant substitué, de la formule :

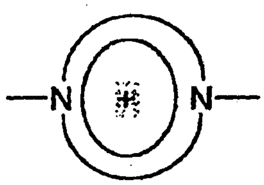

un radical trivalent de la formule :

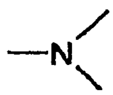

,

un radical trivalent de la formule :

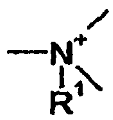

,

ou
un radical tétravalent de la formule :

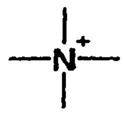

dans lesquelles $R^1$ représente chaque fois un hydrogène ou un radical organique monovalent, sachant que Q ne s'attache pas à un atome de carbone carbonyle.

**8.** Composition de polyorganosiloxane selon l'une des revendications 1 à 7, dans laquelle l'unité V est choisie parmi au moins un radical hydrocarbure polyvalent linéaire, cyclique ou ramifié, saturé, insaturé ou aromatique, avec jusqu'à 1000 atomes de carbone (sachant que les atomes de carbone du radical polyorganosiloxane éventuellement présents ne sont pas comptés dans ce nombre), qui peut contenir le cas échéant un ou plusieurs groupes, choisis parmi -O-, -C(O)-, -C(S)-,
$-NR^2-$, dans lequel $R^2$ représente un hydrogène, un radical hydrocarbure monovalent linéaire, cyclique ou ramifié, saturé, insaturé ou aromatique avec jusqu'à 300 atomes de carbone, qui peut contenir un ou plusieurs groupes, choisis parmi -O-, -NH-, -C(O)- et -C(S)-, et qui peut être substitué le cas échéant par un ou plusieurs substituants, choisis parmi le groupe qui consiste en un groupe hydroxyle, un groupe hétérocyclique, le cas échéant substitué, contenant de préférence un ou plusieurs atomes d'azote, des radicaux polyéthers, des radicaux polyétheresters, des radicaux polyorganosiloxanyles
et
$-Si(OR)_{3-a}(R)_a$, dans lequel a est un nombre entier de 0 à 2 et R est défini comme ci-dessus, sachant que, quand il y a plusieurs groupes $-NR^2-$, ces derniers peuvent être identiques ou différents, et avec la condition que le groupe -NH- soit lié à un atome de carbone carbonyle et/ou thiocarbonyle,

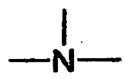

et des radicaux polyorganosiloxanes,
et qui peut être substitué le cas échéant par un ou plusieurs groupes hydroxyles, avec la condition que les groupes

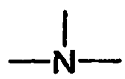

et $-NR^2-$ soient liés à au moins un atome de carbone carbonyle ou thiocarbonyle, et avec la condition qu'au moins un radical V contienne au moins un radical polyorganosiloxane.

**9.** Composition de polyorganosiloxane selon l'une des revendications 1 à 8, dans laquelle le composé amino- et/ou ammonium-polysiloxane a1) comporte au moins trois unités, choisies parmi les unités Q et V, parmi lesquelles Q est au moins un groupe amine et/ou ammonium di-, tri- et/ou tétravalent, qui n'est pas lié à V par l'intermédiaire d'un atome de carbone carbonyle, et V est au moins un radical organique qui est lié aux unités Q par l'intermédiaire de carbone, avec la condition qu'au moins une des unités V contienne un radical polydiorganosiloxane.

**10.** Composition de polyorganosiloxane selon l'une des revendications 1 à 9, dans laquelle le composé amino- et/ou ammonium-polysiloxane a1) comporte au moins deux unités Q.

**11.** Composition de polyorganosiloxane selon l'une des revendications 1 à 10, dans laquelle le composé amino- et/ou ammonium-polysiloxane a1) comporte au moins deux unités Q et plus d'une unité $V^{Si}$.

**12.** Composition de polyorganosiloxane selon l'une des revendications 1 à 11, dans laquelle le composé amino- et/ou ammonium-polysiloxane a1) comporte au moins deux unités Q et plus de deux unités $V^{Si}$.

**13.** Composition de polyorganosiloxane selon l'une des revendications 1 à 12, dans laquelle le radical organique V dans le composé amino- et/ou ammonium-polysiloxane a1) est au moins un composant qui est choisi parmi le groupe qui consiste en $V^1$, $V^2$ et $V^3$, dans lequel
$V^2$ est choisi parmi des radicaux hydrocarbures divalents linéaires, cycliques ou ramifiés, saturés, insaturés ou aromatiques avec jusqu'à 1000 atomes de carbone (sachant que les atomes de carbone du radical polysiloxane $Z^2$ défini ci-dessous ne sont pas comptés dans ce nombre), qui peuvent contenir le cas échéant un ou plusieurs groupes, choisis parmi -O-, -CONH-,
$-CONR^2-$, dans lequel $R^2$ représente un hydrogène, un radical hydrocarbure monovalent linéaire, cyclique ou ramifié, saturé, insaturé ou aromatique avec jusqu'à 100 atomes de carbone, qui peut contenir un ou plusieurs groupes, choisis parmi -O-, -NH-, -C(O)- et -C(S)-, et qui peut être substitué le cas échéant par un ou plusieurs substituants, choisis parmi le groupe qui consiste en un groupe hydroxyle, un groupe hétérocyclique, le cas échéant substitué, contenant de préférence un ou plusieurs atomes d'azote, un groupe amine, un groupe alkylamine, un groupe dialkylamine, un ammonium, des radicaux polyéthers et des radicaux polyétheresters, sachant que quand il y a plusieurs groupes $-CONR^2-$, ces derniers peuvent être identiques ou différents, -C(O)- et -C(S)-,
le radical $V^2$ peut être substitué le cas échéant par un ou plusieurs groupes hydroxyles et
le radical $V^2$ contient au moins un groupe $-Z^2-$ de la formule

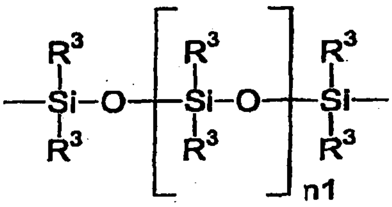

(V),

dans laquelle les $R^3$ peuvent être identiques ou différents et sont choisis parmi le groupe qui consiste en des alkyles en $C_1$ à $C_{22}$, des fluoro(alkyles en $C_3$ à $C_{10}$), des aryles en $C_6$ à $C_{10}$, et n1 signifie 20 à 1000,
$V^1$ est choisi parmi des radicaux hydrocarbures divalents linéaires, cycliques ou ramifiés, saturés, insaturés ou aromatiques avec jusqu'à 1000 atomes de carbone, qui peuvent contenir le cas échéant un ou plusieurs groupes, choisis parmi -O-, -CONH-,
$-CONR^2-$, dans lequel $R^2$ est défini comme ci-dessus, sachant que les groupes $R^2$ dans les groupes $V^1$ et $V^2$ peuvent être identiques ou différents,
-C(O)-, -C(S)- et $-Z^1-$, où $-Z^1-$ est un groupe de la formule

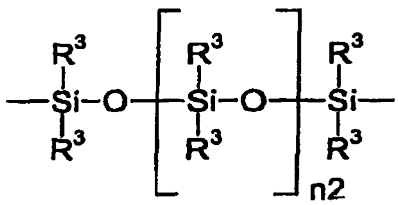

(VI),

dans laquelle
$R^3$ est défini comme ci-dessus, sachant que les groupes $R^3$ dans les groupes $V^1$ et $V^2$ peuvent être identiques ou différents, et n2 signifie 0 à 19,
et le radical $V^1$ peut être substitué le cas échéant par un ou plusieurs groupes hydroxyles, et
$V^3$ représente un radical hydrocarbure trivalent ou de valence supérieure, linéaire, cyclique ou ramifié, saturé, insaturé ou aromatique, avec jusqu'à 1000 atomes de carbone, qui peut contenir le cas échéant un ou plusieurs groupes, choisis parmi
-O-, -CONH-, $-CONR^2-$, où $R^2$ est défini comme ci-dessus, -C(O)-, -C(S)-, $-Z^1-$, qui est défini comme ci-dessus, $-Z^2-$, qui est défini comme ci-dessus, et $Z^3$, où $Z^3$ est une unité d'organopolysiloxane trivalente ou de valence supérieure,
et qui peut être substitué le cas échéant par un ou plusieurs groupes hydroxyles,
sachant que, dans le composé de polysiloxane cité, il peut y avoir respectivement un ou plusieurs groupes $V^1$, un ou plusieurs groupes $V^2$ et/ou ou plusieurs groupes $V^3$,
avec la condition que le composé de polysiloxane cité contient au moins un groupe $V^1$, $V^2$ ou $V^3$, lequel contient au moins un groupe $-Z^1-$, $-Z^2-$ ou $-Z^3-$.

**14.** Composition de polyorganosiloxane selon l'une des revendications 1 à 13, **caractérisée en ce qu'**elles sont liquides à 40 °C.

**15.** Composition de polyorganosiloxane selon l'une des revendications 1 à 14, composée de
0,05 à 90 % en poids des composants a1) et a2),
0 à 30 % en poids d'un ou de plusieurs tensioactifs b) exempts de silicones,
des substances auxiliaires c), choisies parmi :

- 0 à 0,5 % en poids d'un ou de plusieurs biocides,
- 0 à 10 % en poids d'un ou de plusieurs agents modificateurs rhéologiques,
- 0 à 5 % en poids d'une ou de plusieurs autres substances auxiliaires et

jusqu'à 99,5 % en poids d'un ou de plusieurs supports d).

**16.** Composition de polyorganosiloxane selon l'une des revendications 3 à 15, **caractérisée en ce que** le tensioactif exempt de silicones comme composant b) est au moins un composant qui est choisi parmi des composés organiques non polymérisés d'ammonium quaternaire.

**17.** Composition de polyorganosiloxane selon l'une des revendications 3 à 16, **caractérisée en ce que** la substance support d) est au moins un composant qui est choisi parmi le groupe qui consiste en l'eau et en les solvants organiques miscibles à l'eau.

**18.** Composition de polyorganosiloxane selon l'une des revendications 3 à 17, **caractérisée en ce que** le tensioactif exempt de silicones, comme composant b), est choisi parmi des émulsionnants non ioniques.

**19.** Composition de polyorganosiloxane selon l'une des revendications 1 à 18, qui contient de l'eau.

**20.** Procédé de préparation des compositions de polyorganosiloxanes selon l'une des revendications 1 à 19 qui comprend le mélange des composants a1) et a2), ainsi que des autres composants le cas échéant.

**21.** Utilisation des compositions de polyorganosiloxanes selon l'une des revendications 1 à 19 pour le traitement de surface de substrats.

**22.** Utilisation selon la revendication 21 pour le traitement de substrats de fibres ou de substrats analogues à des fibres.

**23.** Utilisation selon la revendication 21 ou 22 pour l'apprêt ou le traitement de fibres naturelles ou synthétiques, de poils, de textiles, de non-tissés, de pulpes, de tissus, de couches de papier comme des papiers hygiéniques secs ou humides, des papiers pour le visage, des serviettes de nettoyage, des papiers d'essuyage et des mouchoirs

**24.** Utilisation des compositions de polyorganosiloxanes selon l'une des revendications 1 à 19 comme plastifiants ou antistatiques pour des fibres naturelles ou synthétiques ou des papiers, comme les poils, le coton, les tissus synthétiques.

**25.** Utilisation selon l'une des revendications 21 à 24, dans laquelle, rapportés à la masse sèche de fibres, respectivement de papier, il y a 0,03 % en poids à 30 % en poids des composants non volatils des compositions de polyorganosiloxanes selon la définition des revendications précédentes.

**26.** Utilisation selon l'une des revendications 21 à 25, dans laquelle, rapportés à la masse sèche de fibres, respectivement de papier, il y a 0,01 % en poids à 10 % en poids des composants a1) et a2).

**27.** Utilisation des compositions de polyorganosiloxanes selon l'une des revendications 1 à 19 comme produits détergents, tensioactifs, anticorrosion, comme couches de fond, agents de pontage, agents antibuée ou agents antistatiques pour des surfaces dures.

**28.** Produits contenant au moins une composition de polyorganosiloxanes selon l'une des revendications 1 à 19.

**29.** Produits selon la revendication 28, qui sont des produits en papier.

**30.** Produits selon la revendication 28 ou 29, dans lesquels, rapportés aux produits secs, il y a 0,03 % en poids à 30 % en poids des composants non volatils de la composition selon l'une des revendications 1 à 19.